(19) Europäisches Patentamt
European Patent Office
Office européen des brevets

(11) **EP 1 164 781 A1**

(12) **EUROPEAN PATENT APPLICATION**
published in accordance with Art. 158(3) EPC

(43) Date of publication:
**19.12.2001 Bulletin 2001/51**

(51) Int Cl.⁷: **H04N 1/393**, H04N 1/41, G06T 3/40

(21) Application number: **00909658.7**

(22) Date of filing: **15.03.2000**

(86) International application number:
**PCT/JP00/01586**

(87) International publication number:
**WO 00/56060 (21.09.2000 Gazette 2000/38)**

(84) Designated Contracting States:
**DE GB**

(30) Priority: **15.03.1999 JP 6815199**
**13.04.1999 JP 10470399**
**22.06.1999 JP 17499099**

(71) Applicant: **Matsushita Electric Industrial Co., Ltd.**
**Kadoma-shi, Osaka 571-0050 (JP)**

(72) Inventors:
• **WATANABE, Tatsumi**
**Seika-cho, Souraku-gun, Kyoto 619-0232 (JP)**
• **KUWAHARA, Yasuhiro**
**Moriguchi-shi, Osaka 570-0003 (JP)**
• **KOJIMA, Akio**
**Neyagawa-shi, Osaka 572-0039 (JP)**

(74) Representative:
**Dempster, Benjamin John Naftel et al**
**Withers & Rogers, Goldings House, 2 Hays Lane**
**London SE1 2HW (GB)**

(54) **IMAGE PROCESSING DEVICE, IMAGE PROCESSING METHOD, AND RECORDED MEDIUM**

(57) An image processing device that reduces the memory size of image data inputted by scanner, digital camera or the like or sent in via communication means like the Internet and which outputs a clear enlarged image. First, for reduction of the memory size of image data, low component extracting means extracts the low frequency components of image data, and the relation information between high components and the low frequency components is obtained and encoded. To output the enlarged image clearly, Enlarged Frequency estimating means estimates the frequency components required for enlargement of an image by edge extraction and nonlinear interpolation method. Furthermore, image enlarging means estimates the enlarged image by Wavelet transform.

FIG. 1

**EP 1 164 781 A1**

## Description

The present invention relates to an image processing device and image processing method for reducing the memory size of image data inputted by the scanner, digital camera etc. or image data sent through communication means such as the Internet and outputting those data clearly

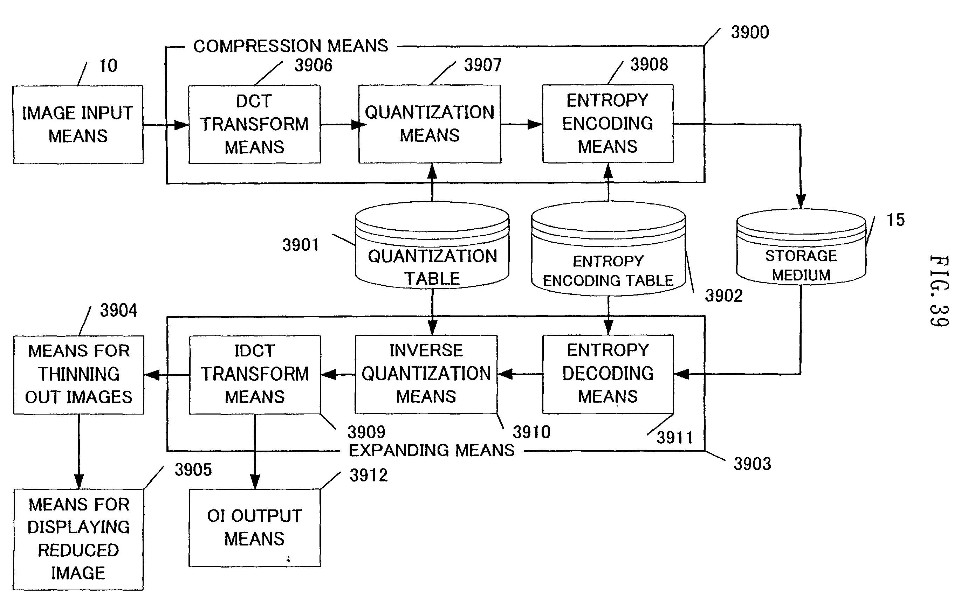

With technical innovation in recent years, electronic photographing apparatuses have come to be put to practical use that memorize images on memory media such as magnetic media or semiconductor memory instead of silver film. Especially, the digital camera that reads out the density and color using the charge coupled devices (CCD) element and memorizes them on a semiconductor memory or the like has found its way into homes because of the handiness and low price. The resolution of the CCD element is being upgraded from 1,000,000 picture elements to 2,000,000 picture elements. Depending on the number of effective picture elements, the CCD element has a resolution capacity of approximately 1,280 picture elements x 980 picture elements, and the image data size is very large and it is necessary to compress the image data. For the still image compression, the JPEG (Joint Photographic Coding Experts Group) standard is generally adopted. The prior art image processing device for data compression by this JPEG method is shown in a block diagram in FIG. 39.

An original image is read by an image input means 10 formed of CCD elements etc. On the original image, lossy compression (non-reversible compression) by the JPEG is carried out by compression means 3900.

That is, discrete cosine transform of the original image is performed by discrete cosine transform (DCT) means 3906 whereby the original image is transformed into signals in the frequency space, and the obtained transform coefficient is quantized by quantization means 3907 using a quantization table 3901. The results of this quantization are transformed into a code string by entropy encoding means 3908 on the basis of an entropy encoding table 3902, and this code string is stored on a storage medium 15. This processing is continued until after the compression of all the original images is over. In this connection, a lossless compression (reversible compression) method in which an image can be restored without distortion is also proposed for the JPEG standard. When the lossress compression is used, the compression ratio, which is defined as the ratio of original image size to the compressed image size, is very low. Therfore, lossy compression is generally used. But when lossy compression is used, the original image are not exactly reconstructed because of the quantization error as in FIG. 39 and the rounding error by DCT. Of the two reversible factors, the quantization error has bad influence on the quality of the reconstructed image especially.

Meanwhile, image processing devices such as the digital camera are generally provided with a display unit such as liquid crystal display to review a photographed image right there, to retrieve the image for data editing etc. Then, the resolution of CCD is high as compared with the resolution of the display unit for review, and when an compressed image data stored on the storage medium 15 is displayed on those display units, this compressed image data is expanded and the thinning out of picture elements is conducted to transform the resolution.

First, expanding means 3903 in FIG. 39 expands a compressed image data stored on the storage medium 15. In this process, the coefficient of entropy-encoded image signal is brought back to the quantized transform coefficients by entropy decoding means 3911 and DCT coefficient by inverse quantization means 3910. Then, on this DCT coefficient, inverse discrete cosine transforming (IDCT) is performed by IDCT means 3909 to expand the data to the value of the original image data space. This expanded image data is outputted on the printer, CRT etc. by Original Image (OI) output means 3912 in accordance with an instruction signal inputted by the user through the mouse or the like (not shown).

On the other hand, means 3904 for thinning out images thins out picture elements from the all image data expanded by expanding means 3903 according to the resolution at means 3905 for displaying reduced image for review display, and this thinned out image data is displayed for review by means 3905 for displaying reduced image.

Now, to think of reading an original data of JIS paper size A4, for example, using an digital camera having CCD with 2,000,000 picture elements, it is clear that the digital camera has a resolution of only some 100 (dots/inch) if the resolution is estimated from the number of picture elements of the CCD element, though that is not always applicable because of the focus distance and the like. This resolution is far more coarse than that in an image obtained on the silver film, and the expression is still insufficient with regard to the edge information and clearness of details in a natural image.

For this reason, when an image inputted by the digital camera is outputted on high-resolution printers like the laser printer and ink jet printer or is displayed on a high-resolution display connected to the computer for data editing, the low-resolution image has to be transformed into a high-resolution data. In recent years, in this connection, the sending of image data by communication means such as the Internet has been getting popular, but since the communication speed and the data size that can be sent at a time are limited, image data are lowered in resolution before being sent in many cases. Because of that, the image data sent tends to become an image with blurred details when displayed on the receiver's side. And there is a mounting call among the users that low-resolution images sent by the Internet etc. should be upgraded in resolution. It is noted that high resolution transform and enlargement of image are synonymous, and there will be explained the conventional methods of enlarging an image with precision.

The conventional methods of enlarging an image are roughly classified into the following two techniques:

(1) Merely interpolating between the picture elements.
(2) Enlarging an image after transforming the image data in the real space into an image data in the frequency space using the orthogonal transform techniques such as FFT (fast Fourier transform) or DCT as described in unexamined Japanese patent applications 2-76472 and 5-167920.

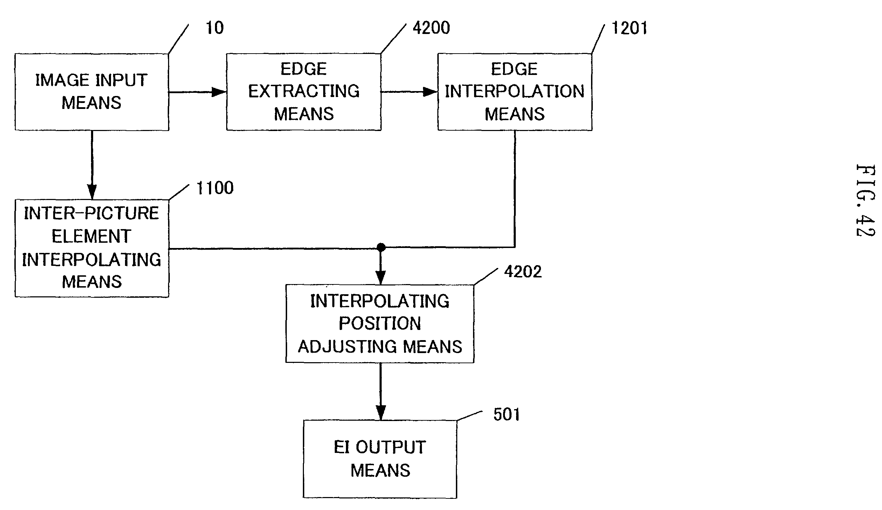

First, a conventional system example to realize the technique of interpolating between the picture elements in (1) is shown in a block diagram in FIG. 42. On an original image obtained by image input means 10, the picture elements are linear interpolated between the picture elements in accordance with the following Formula 1. In formula 1, Da is picture element data at point A, Db is picture element data at point B, Dc is picture element data at point C, and Dd is picture element data at point D. De is picture element data at point E to be worked out.

Formula 1

$$De = (1 - \mu) \; x \; (1 - \nu) \; x \; Da + \mu \; x \; (1 - \nu) \; x \; Db$$

$$+ (1 - \mu) \; x \; \nu \; x \; Dc + \mu \; x \; \nu \; x \; Dd$$

Since an interpolated image data tends to be an averaged one and to blur in edge etc., the interpolated picture element position and interpolated data using edge information extracted from the original image is often adjusted. In FIG. 42, edge information is extracted by edge extracting means 4200, and is enlarged to a desired enlargement ratio by edge interpolation means 4201 to obtain an enlarged edge. And the interpolated image of the original image by picture element interpolating means 1100 are convoluted by this enlarged edge information so that a desired enlarged image is generated and outputted by Enlarged Images (EI) output means 501. In addition, there are interpolation methods such as the nearest neighbor method in which the value of the nearest sample is taken as interpolation value.

But the interpolation methods mentioned above have some problems. In the linear interpolation method, the frequency characteristics in the pass band width is suppressed and the image data is smoothed as if the data is passed through a low pass filter (LPF), so that the image tends to blur with insufficient sharpness and expression of details. The problem with the nearest neighbor method is that much lack of high frequency components occurs and that tends to cause distortion of the enlarged image, for example, jaggy in edge area and blurred mosaic distortion.

The technique in (2) using the spatial frequency is proposed as a solution to that problem. What those techniques aim at is to restore the high frequency component lost in data sampling and restore information on details and edges of the image accurately, thereby improving the visual quality of the enlarged image.

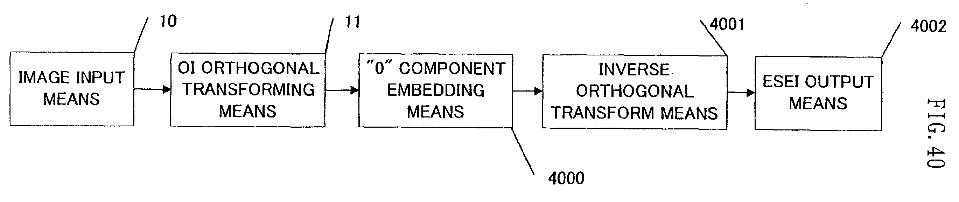

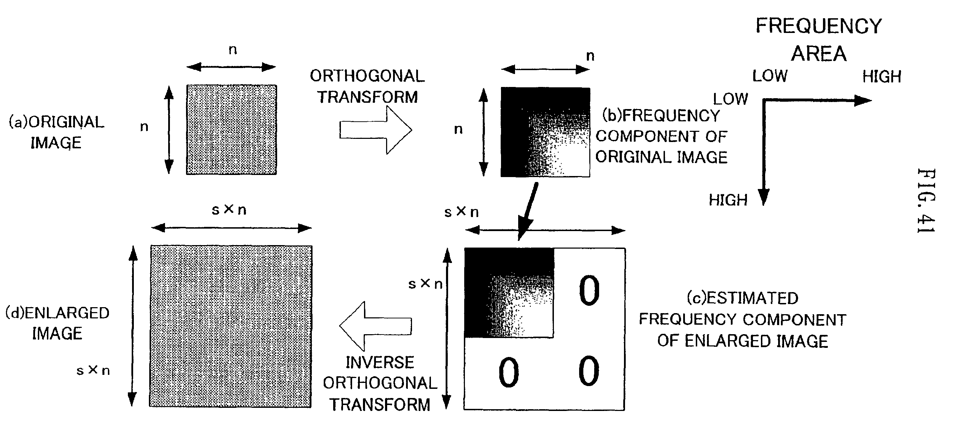

FIG. 40 is a block diagram of a conventional system example to realize the technique in (2) that uses spatial frequency, while FIG. 41 schematically shows the processing procedure. First, an original image (n x n picture elements) in the real space as shown in FIG. 41 (a) is orthogonally transformed into an image (n x n picture elements) in the frequency space as shown in FIG. 41 (b). The image data in this frequency space is expressed in an n x n matrix, and the matrix obtained by this frequency transform shows lower frequency component as the position moves nearer the upper left of the figure and shows higher frequency component as the position moves in the right direction and in the downward direction along the arrows.

Then in "0" component embedding means 4000, a s-fold area - an area of sn x sn shown in FIG. 41 (*c*) - of the transformed image in the frequency space is prepared. In the part of low frequency components in the sn x sn area, the frequency area of n x n shown in FIG. 41 (b) that is obtained by the orthogonal transform is copied, while the remaining part of high frequency component is interpolated with "0". Finally, in inverse orthogonal transform means 4001, this frequency area of sn x sn is inverse-orthogonally transformed whereby a s-fold image data in the real space as shown in FIG. 41 (d) is obtained and an estimated enlarged image is outputted by Estimated Enlarged Image (EsEI) output means 4002 in FIG. 40.

In addition to that method in which the high frequency component is interpolated with "0", a technique is proposed in which the high frequency components are restored in a process of repeating transform and inverse transform of image data using orthogonal transform (method involving Gerchberg-Papoulis repeat) as disclosed in unexamined Japanese patent application 6-54172. Furthermore, a method as disclosed in unexamined Japanese patent application 8-294001 is proposed in which the orthogonal transform components in the original image are embedded in the low frequency area of the enlarged image, while the high frequency area is embedded with frequency information obtained on the basis of a prediction rule prepared in advance.

In the conventional image processing devices such as the digital camera, however, the image data once compressed and stored has to be expanded again, and in addition, the compression is performed by an lossy compression involving quantization in JPEG, and for this reason, the original image data not be reconstructed from the compressed image, and it often happens that some noise and color difference are caused.

Another problem is that color difference and Moire are caused by the thinning out at the time of resolution transform necessary for generation of a reduced image (hereinafter thumbnail image) to be displayed for review and therefore the smoothing by median filter or mean value filter is indispensable. But another problem is pointed out. That is, if the median filter or the mean value filter is used, the sharpness of the thumbnail image will be lost and the smoothing takes much time.

Furthermore, the following problems are encountered with the conventional image enlargement required when a low-resolution image by the digital camera is printed or displayed.

First, in the case of method (1) in which merely interpolation is performed between the picture elements, it often happens that when an natural image is photographed by such a low-resolution device, the edge is not extracted with precision from the original image in the system shown in FIG. 42. As a result, the position where picture elements are interpolated and the interpolated data can not be adjusted well. To avoid this, an enlarged image is subjected to a repeat of processing by edge-enhancement filter. But the problem with the conventional edge-enhancement filter processing is that unless a right filter is selected, the processing has to be repeated many times, or the edge is not enhanced at all.

In method (2) in which the image is enlarged by embedding "0" in the high frequency area, on the other hand, a better enlarged image can be obtain than in the technique involving interpolating between the picture elements like the linear interpolation method and the nearest neighbor method. But since the high frequency components erased in data-sampling is not restored well, no sufficiently sharp image can be obtained.

In the method in which the high frequency components are restored in the process of repeating right transform and inverse transform of an image by orthogonal transform, right transform and inverse transform are repeated, and that increases arithmetic processing. That is, the problem is the processing speed. The arithmetic processing amount is not so troublesome if the enlargement ratio s is not so large, but if the enlargement ratio s is large, the arithmetic processing amount of inverse transform as opposed to the arithmetic processing amount of right transform increases approximately in proportion to s x n. Especially in the two-dimensional processing actually performed, the arithmetic processing amount increases roughly in proportion to the cube of s x n. Especially in enlargement of a color image, the enlargement for a plurality of color components will be necessary, further increasing the time needed for the processing. Furthermore, in case the image to be enlarged is low in resolution, the high frequency components will not be restored to the accurately.

The method disclosed in unexamined Japanese patent application 8-294001 takes those problems into consideration and considers the processing time and restoration of the high frequency components. This method involves embedding frequency information obtained on the basis of a prediction rule prepared in advance in the high frequency area of the original image. Therefore, it is necessary to work out a rule between the high frequency components and the other areas on the basis of a large number of picture samples in advance. It takes much labor to prepare a proper rule base, and if that can not be made into a proper rule, there is fear that it can not obtain sufficient effects.

In addition, the image size is generally arbitrary, and the larger the size for orthogonal transform, the longer the processing is. Therefore, it is usual that the whole of an image of a specific size is not put to orthogonal transform at a time, but orthogonal transform is performed by blocks of a size of 4 picture elements to 16 picture elements. The problem is that it can happen that discontinuity between the blocks (block distortion) occurs in the border portion in an enlarged image.

In view of those problems as set forth above, the present invention has been made, and it is an object of the present invention to provide an. image processing device and image processing method which permit reduction of memory size of image data and enlargement of an image to a sharp and high-quality image.

To achieve the object, the following means are adopted in the present invention.

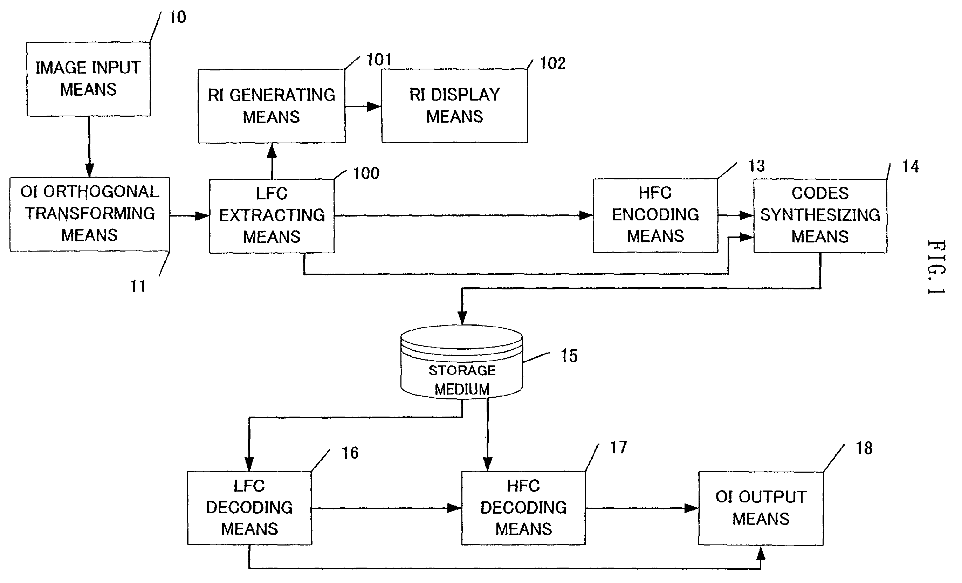

First, to reduce the memory size of an image data, as shown in FIG. 1, an original image obtained from image input means 10 is orthogonally transformed by Original Images (OI) orthogonal transforming mean 11 so as to generate the frequency components of the original image, and the low frequency components are extracted from the frequency components of the original image by Low Frequency Components (LFC) extracting means 100. Then, High Frequency Components (HFC) encoding means 13 works out the relation information between the low frequency components and the remaining high frequency components in the frequency components of the original image and encodes the information, and at the same time Codes Synthesizing means 14 synthesizes the low frequency components and the relation information into simplified image data.

From the simplified image data thus generated, Low Frequency Components (LFC) decoding means 16 extracts low frequency components, and at the same time, High Frequency Components (HFC) decoding means 17 takes out the relation information and decodes the high frequency components on the basis of the low frequency components.

Original Images (OI) output means 18 combines the low frequency components and high frequency components and subjects the combination to inverse orthogonal transform to restore the original image.

That permits the handling of simplified image data smaller in size than the original image and can produce a restored image close to the original image from a view of visual quality.

The simplified image data can be processed by inputting in means such as the personal computer which can restore an image, and also can be first stored in storage medium 15. Also, in the simplified image data, the data mount of the low frequency components can be further compressed by Low Frequency Components (LFC) compression means 300. In this case, it is desirable that a lossless compression method should be used.

It is possible for Reduced Images (RI) generating means 101 to extract the frequency area corresponding to a specified size (preview size, for example) from the low frequency components and to generate a reduced image by performing inverse orthogonal transformation on that components.

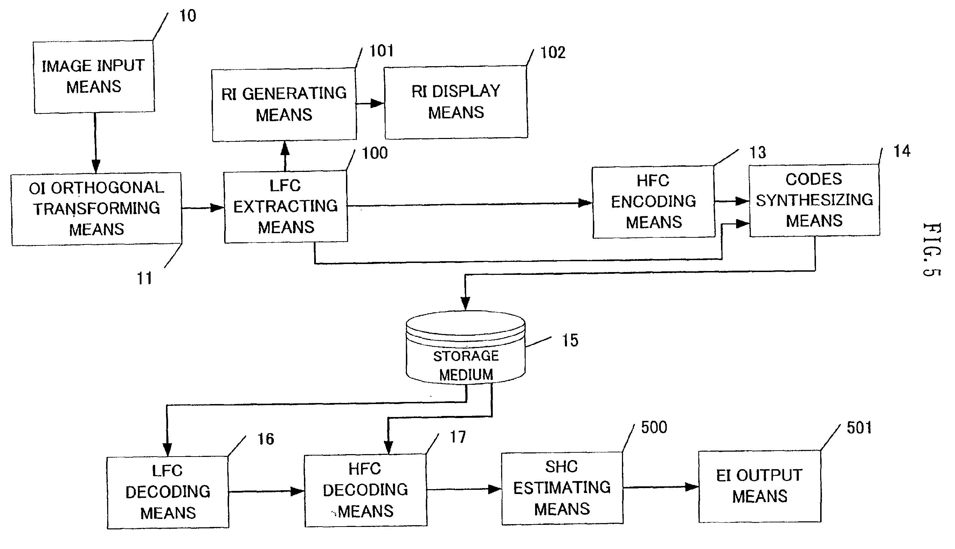

In the present invention, furthermore, when a specific image is enlarged to a desired size, Shortage Components (ShC) estimating means 500 estimates the shortage high frequency components on the basis of the frequency components of the image as shown in FIG. 5. And EI output means 501 combines the frequency components of the specific image and the high frequency components obtained by ShC estimating means 500 and subjects the combination to inverse orthogonal transform, thereby outputting an image enlarged to a desired size.

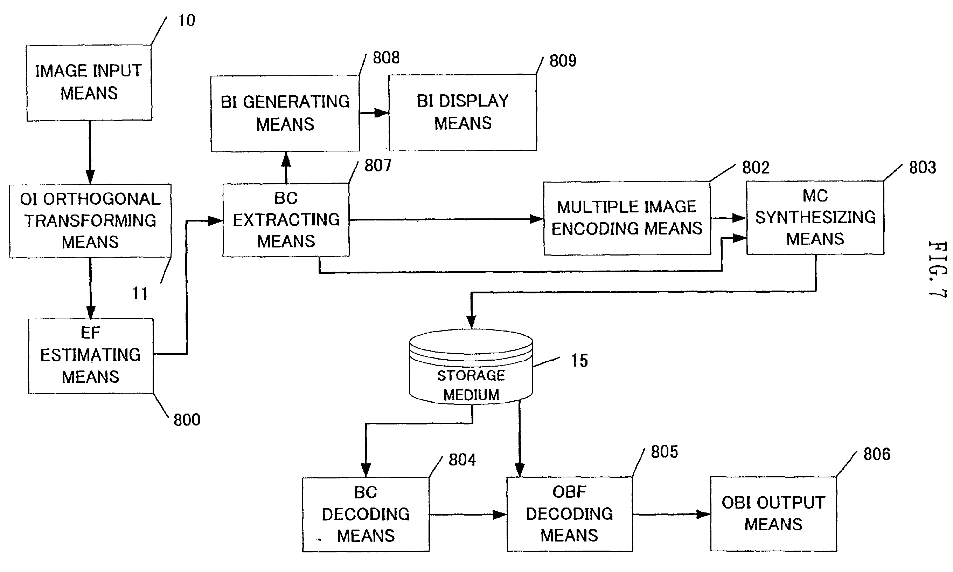

According to the present invention, furthermore, in an image processing device for processing an original image inputted from image input means 10 as shown in FIG 7, OI orthogonal transforming means 11 subjects the image data to orthogonal transform to generate the frequency component of the original image and from this frequency component of the original image, Enlarged Frequency (EF) estimating means 800 estimates the frequency component at the time when the original image is enlarged corresponding to some desired enlargement ratio. On the basis of the frequency component of the original image thus obtained and the frequency component of the estimated enlarged image, EF estimating means 800 extracts the frequency component - as basic component - necessary for restoring the specified basic image to a predetermined size, and multiple image encoding means 802 works out each relation information between the basic component and each frequency component corresponding to some estimated enlarged images and encodes the information. The basic component thus obtained and each relation information corresponding to some enlargement ratios are synthesized by Multiple Codes (MC) synthesizing means 803 to generate multiple simplified image data..

That makes it possible to generate multiple simplified image data corresponding to a plurality of sizes on the side where an image data is encoded.

From the multiple simplified image data thus generated, the basic component and the relation information are extracted, and the image data can be restored on the basis of the basic component and the relation information.

In the multiple simplified image data, too, the data size can be further reduced by the data size compression of the basic component.

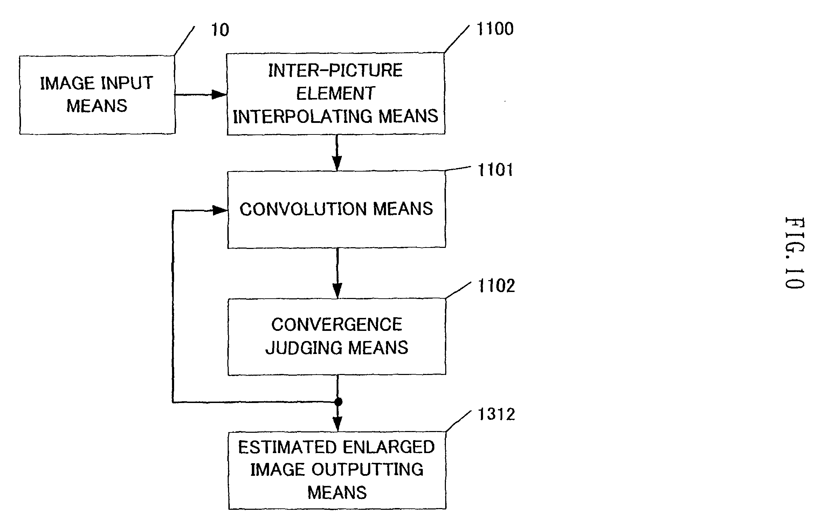

Secondly, to realize clear and high quality enlarged image data, inter-picture element interpolating means 1100 performs interpolation between picture elements - according to a desired enlargement ratio - of image data inputted from image input means 10 as shown in FIG 10. The interpolated enlarged image thus obtained is not sharp in the edge portion, but with convolution means 1101 performing a convolutional calculation to enhance the edge portion on the interpolated enlarged image, an enlarged image with sharp edges is generated without time-consuming frequency transform.

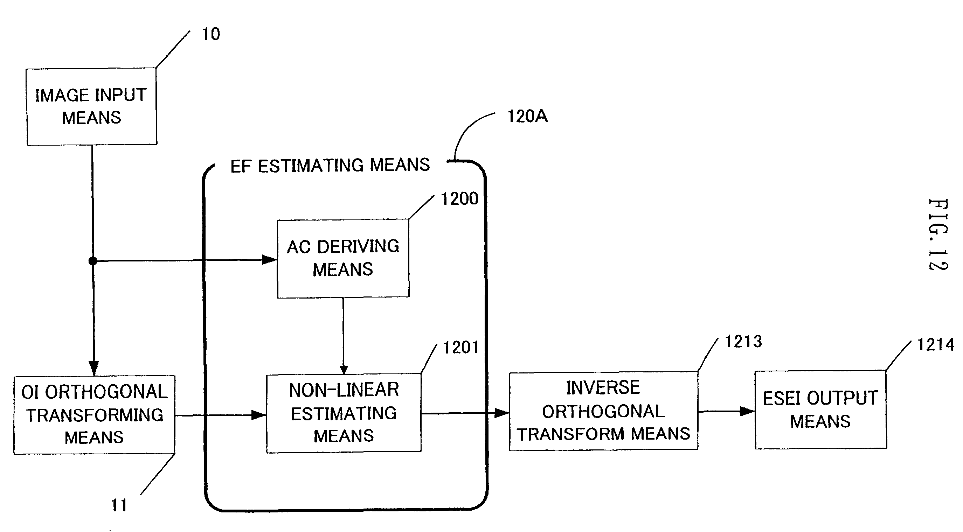

Thirdly, to realize a clear and high-quality enlargement of an image, Enlarged Frequency (EF) estimating means 120A estimates the frequency components of an enlarged image on the basis of the frequency components of the original image obtained by OI orthogonal transforming means 11 as shown in FIG. 12. And on the frequency components generated by EF estimating means 120A, inverse orthogonal transform means 1213 performs inverse orthogonal transform corresponding to the enlargement size and obtains an enlarged image data.

Estimation of the frequency components by EF estimating means 120A is performed using a linear approximation or radial basis function network. The following method of estimating the high frequency components in an enlarged image is also adopted. That is, from the original image, an edge image is taken out which it is thought contains plenty of high frequency components, and from an enlarged edge image obtained by the linear transform, the high frequency components of an enlarged image are estimated using orthogonal transform.

Furthermore, the following method of estimating the frequency components of an enlarged edge image with high precision is used. That is, on the basis of the frequency components of the edge image taken out, the frequency components of the enlarged image is estimated with precision using the linear approximation or radial basis function network.

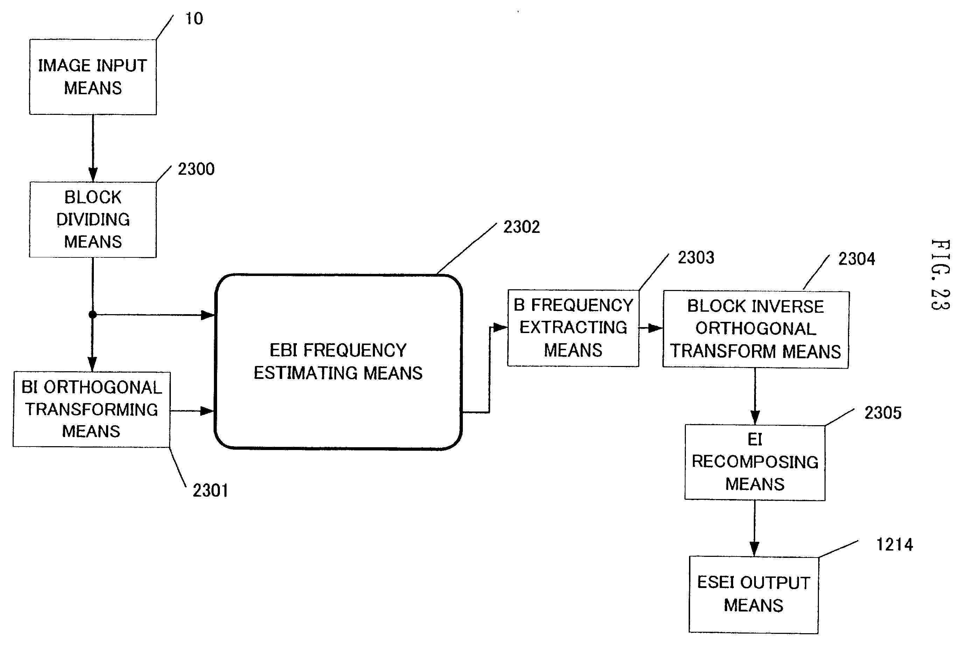

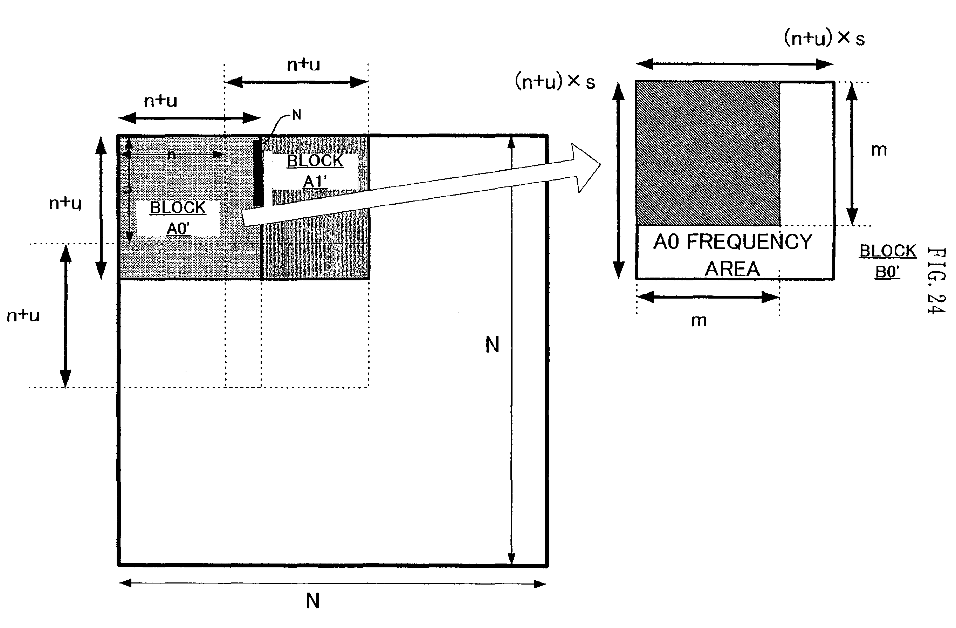

Next, as shown in FIG. 23, block dividing means 2300 divides an inputted image data into a plurality of blocks taking into consideration the processing time required for the orthogonal transform. And Enlarged Block Images (BI) frequency estimating means 2302 estimates the frequency components of the each enlarged image block for all of blocks divided from original image. Then, as shown in FIG. 24, the neighboring blocks are partly overlapped, and on the overlapped part in the enlarged block images, the enlarged block generated later is adopted, thus reducing the block artifacts.

Furthermore, the original image is processed by the transform function, thus reducing the discontinuity of an image on the block border-the discontinuity caused by division of an image into blocks.

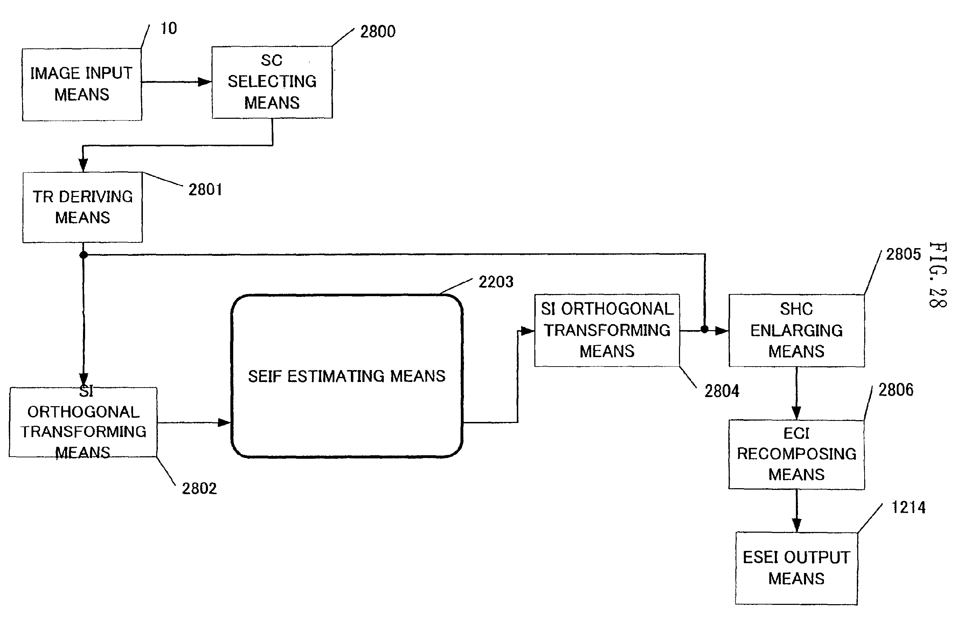

In case the original image is a color image, Standard Component (SC) selecting means 2800 selects a color component to be a standard from among the color components making up an inputted color image and generates an enlarged image corresponding to the standard color components as shown in FIG. 28.

And for the remaining color components, Shortage Component (ShC) enlarging means 2805 makes an estimation using the transform ratio derived by Transform Ratio (TR) deriving means 2801 from a color original image to the enlarged image of the standard color components, thereby speeding up the processing in generating an enlarged image data of a color image data.

Fourthly, to realize a sharp and high-quality enlargement of an image, also, multiple resolution analysis in Wavelet transform is utilized.

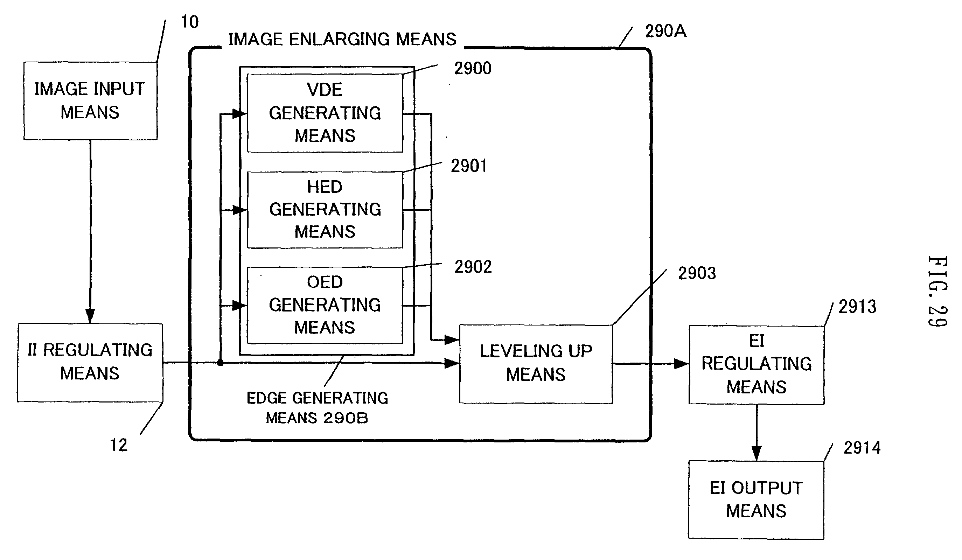

For this, when an original image with n picture elements x m picture elements is enlarged to make an enlarged image with Ln picture elements x Lm picture elements, Input Images (II) regulating means 12 interpolates or thins out (hereinafter both expressed as "regulate") to Ln/2 picture elements x Lm/2 picture elements as shown in FIG. 29. And to the image regulated by II regulating means 12, image enlarging means 290A applies a method based on Wavelet transform and generates an enlarged image.

In the enlargement, to be concrete, the images - an image regulated according to the number of picture elements of an enlarged image to be obtained, the edge image in the vertical direction, the edge image in the horizontal direction and the edge image in the oblique direction - are regarded as four sub-band images making up a Wavelet transform image. And by performing inverse Wavelet transform on the sub-band images, an enlarged image of a desired picture element size is to be obtained.

Also, in the enlargement, the relation is found between three edge images obtained from a 1/4 size reduced image in the low frequency area of transform image data, that is, Wavelet transformed original image data and the remaining three sub-band images within the transform image data. Here, the edge image in the vertical direction, the edge image in the horizontal direction, the edge image in the oblique direction of the image regulated according to the number of picture elements of an enlarged image to be obtained are each corrected using the above relation information.

And the regulated image and the three corrected edge images are regarded as four sub-band images making up the transform image data. By performing inverse Wavelet transform on the sub-band images, an enlarged image of a desired picture element size is obtained.

In the enlargement, furthermore, the relation is to be found between one typical edge image data obtained from the 1/4 size reduced image data present in the low frequency area of the transform image data and the remaining three sub-band image data within the transform image data. Here, one typical edge image obtained from the image regulated according to the number of picture elements of an enlarged image data to be obtained is corrected using the relation information.

And the regulated image data and the three image data obtained by correcting are regarded as four sub-band images making up the transform image data, and inverse Wavelet transform is performed to obtain an enlarged image of a desired picture element size.

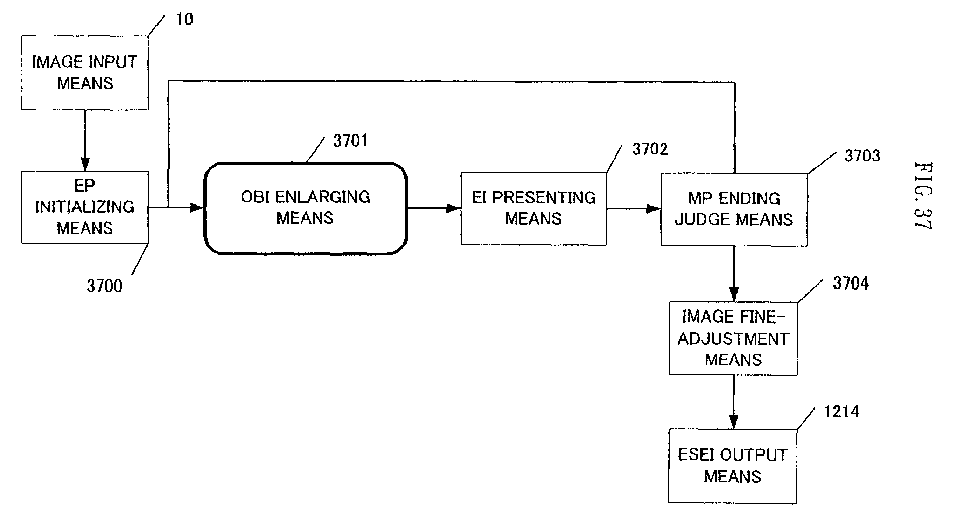

Also, as shown in FIG. 37, Enlarging Process (EP) initializing means 3700 sets an original image as object image for enlargement, and Object Images (ObI) enlarging means 3701 applies a method based on Wavelet transform to the object image for enlargement to generate an enlarged image having four times as many picture elements. And Multiple Processing (MP) ending judge means 3703 sets the enlarged image obtained by ObI enlarging means 3701 as object image for enlargement and returns the process to ObI enlarging means 3701. Enlarged Images (EI) presenting means 3702 presents visually the enlarged image obtained from ObI enlarging means 3701. Furthermore, image fine-adjustment means 3704 enlarges or reduces the enlarged image presented by EI presenting means 3702.

To be concrete, in case the image size to be enlarged is not known now, the above enlargement system using the Wavelet transform is adopted. With the enlarged image obtained by inverse Wavelet transform as next object image, inverse Wavelet transform is performed. That is, enlargement to an image having four times as many picture elements is repeated. And when the enlargement reaches a visually desired enlargement ratio, the process is suspended. That way, enlargement of the inputted original image is performed.

In case the original image is a color image, in the enlargement method using the Wavelet transform, too, a color component as standard is selected from among the color components making up the color image, and for its standard color components, an enlarged image is generated.

And the remaining color components are found by performing linear transform on the enlarged image of the standard color component using a ratio of each remaining color to standard component, thus speeding up the processing in generating an enlarged image of a color image.

Having summarized the invention, a detailed description of the invention follows with reference being made to the accompanying drawings which form part of the specification, of which:

FIG. 1 is a block diagram showing the arrangements of first, second and third embodiments of the present invention.
FIG. 2 is a schematic diagram showing the processing steps of the first embodiment of the present invention.
FIG. 3 is a block diagram of the fourth embodiment of the present invention including an image processing device.
FIG. 4 is a schematic diagram showing the procedure for spatial prediction and compression used in the four embodiment of the present invention.
FIG. 5 is a block diagram of the fifth embodiment of the present invention including an image processing device.
FIG. 6 is a schematic diagram showing the procedure of means for estimating shortage components used in the fifth embodiment of the present invention.
FIG. 7 is a block diagram showing the arrangements of sixth, seventh and eighth embodiments of the present invention.
FIG. 8 is a schematic diagram showing the processing steps of means for extracting basic components and multiple image encoding means used in the sixth embodiment of the present invention.
FIG. 9 is a block diagram of the ninth embodiment of the present invention including an image processing device.
FIG. 10 is a block diagram showing the arrangement of a tenth embodiment of the present invention.
FIG. 11 is a schematic diagram showing the procedure of the image processing device of the tenth embodiment of the present invention.
FIG. 12 is a block diagram showing the arrangement of an eleventh embodiment of the present invention.
FIG. 13 is a diagram schematically showing the processing steps of an image processing device of the eleventh embodiment of the present invention.
FIG. 14 is a schematic diagram of the radial basis function network.
FIG. 15 is a diagram schematically showing the relation between an original image and an enlarged image in the image processing device of the eleventh embodiment of the present invention.
FIG. 16 is a block diagram showing the arrangements of an image processing device of the twelfth embodiment of the present invention.
FIG. 17 is a diagram schematically showing the processing steps of the image processing device of the twelfth embodiment of the present invention.
FIG. 18 is a diagram showing Laplacian filter examples.
FIG. 19 is a block diagram showing the arrangements of the image processing device of the thirteenth embodiment of the present invention.
FIG. 20 is a diagram schematically showing the processing steps of the image processing device of the thirteenth embodiment of the present invention.
FIG. 21 is a diagram schematically showing the processing in case linear approximation is used by means for generating edge frequency of the thirteenth embodiment of the present invention.
FIG. 22 is a diagram schematically showing the distortion between the enlarged blocks.
FIG. 23 is a block diagram showing the arrangement of the image processing device of a fourteenth embodiment of the present invention.
FIG. 24 is a diagram schematically showing the processing steps of the image processing device of the fourteenth embodiment of the present invention.
FIG. 25 is a block diagram showing the arrangement of the image processing device of a fifteenth embodiment of the present invention.
FIG. 26 is a diagram schematically showing the processing steps of the image processing device of the fifteenth embodiment of the present invention.
FIG. 27 is a diagram schematically showing the processing steps by means for transforming data within the block of the image processing device of the fifteenth embodiment of the present invention.
FIG. 28 is a block diagram showing the arrangements of the image processing device of a sixteenth embodiment of the present invention.
FIG. 29 is a block diagram showing the arrangement of the image processing device of a seventeenth embodiment of the present invention.
FIG. 30 is a diagram showing the filter processing steps in Wavelet transform coefficient.
FIG. 31 is a diagram schematically explaining the sub-band components in a Wavelet transform coefficients.
FIG. 32 is a diagram schematically showing the estimation of shortage sub-band component in a transform image.
FIG. 33 shows filter examples applied for detection of edges in the vertical direction, horizontal direction and oblique direction.
FIG. 34 is a block diagram showing the arrangements of enlarging images means making up the image processing device of an eighteenth embodiment of the present invention.

FIG. 35 is a diagram schematically showing the estimation and correction of shortage sub-band components in a transform image.

FIG. 36 is a block diagram showing the arrangement of means for enlarging images making up an image processing device of a nineteenth embodiment of the present invention.

FIG. 37 is a block diagram showing the arrangement of the image processing device of an twentieth embodiment of the present invention.

FIG. 38 is a block diagram showing the arrangement of the image processing device of a twenty-first embodiment of the present invention.

FIG. 39 is a block diagram showing the arrangement of a conventional digital camera.

FIG. 40 is a block diagram showing the arrangement of a conventional image enlarging device in which an image is transformed in the frequency area and enlarged.

FIG. 41 is an explanatory diagram showing an example in which a conventional image is transformed in the frequency area and enlarged.

FIG. 42 is a block diagram showing the arrangement of a conventional image enlarging device in which an image is enlarged interpolation between picture elements.

FIG. 43 is a schematic diagram showing the conventional interpolation between picture elements.

Now, the embodiments of the present invention will be described with reference to the drawings.

It is to be understood that hereinafter the unit of coordinate values is all identical with the unit of the distance between picture elements. Also, hereinafter, the original image that will be described by way of example is an original image taken in by scanner, digital camera or the like. But it is not restrictive. The original image may be a specific image or the like held on a magnetic disk etc. or an image or the like sent in through communication means like the Internet.

Embodiment 1

First, there will be described the image processing device of Embodiment 1 of the present invention.

In FIG. 1, an original image of a size N picture elements x N picture elements obtained by image input means 10 like CCD elements is transformed into component data (frequency component data) in frequency space. For that, orthogonal transform is used, and among the transform method are Hadamard transform and fast Fourier transform (FFT), discrete cosine transform (DCT), slant transform, and Haar transform. Here in this description, DCT is used. But the present invention is not limited to that transform technique but other orthogonal transform methods may be applicable.

It is also noted that DCT used here is two-dimensional DCT especially for dealing with images, and the transform formula is given by Formula 2.

$$F(u,v) = 2c(u)c(v) \Big/ \sqrt{K\_x\,K\_y}$$

$$\times \sum_{x=0}^{K\_x} \sum_{y=0}^{K\_y} [D(x,y)\cos((2x+1)u\pi \big/ 2K\_x\,)\cos((2y+1)v\pi \big/ 2K\_y\,)]$$

$$\{0 \le u \le K\_x - 1,\quad 0 \le v \le K\_y - 1\}$$

$$c(0) = 1 \big/ \sqrt{2}$$

$$c(K) = 1 \quad (K \ne 0)$$

where F (u, v) represents a DCT component at the component position (u, v), and D (x, y) represents image data at picture element position (x, y). Furthermore, K _x indicates the number of picture elements in the x direction and K _y indicates the number of picture elements in the y direction. But here in this embodiment, a square image of N x N is take up, that is, K _x = K _y = N.

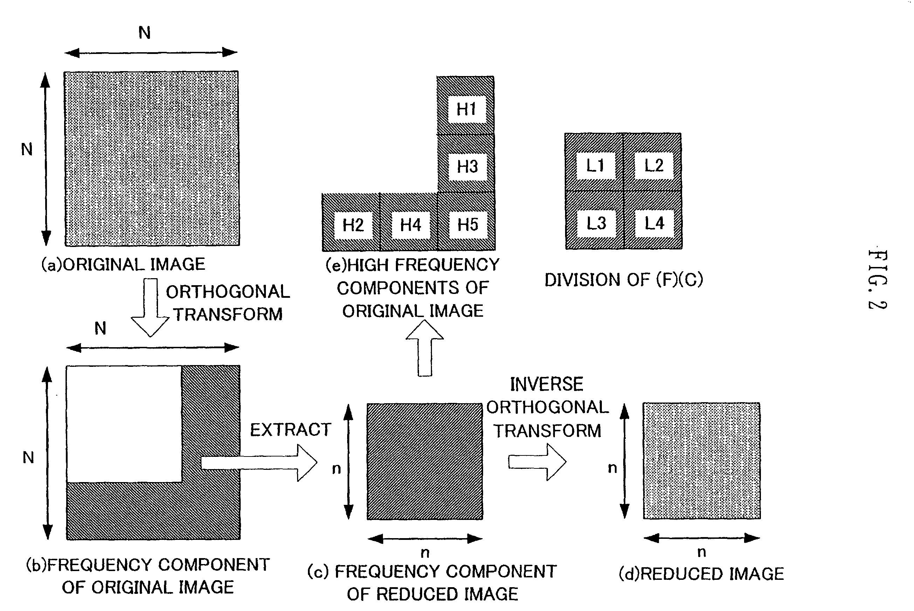

LFC extracting means 100 extracts low frequency components of the frequency component data of the original image as shown in FIG. 2 (b).

HFC encoding means 13 encodes the high frequency area (e) that are left when the low frequency components (c) are taken out from the frequency components of the original image in FIG. 2 (b). Here in this embodiment, the area of the high frequency components is divided into small blocks H1 to H5 as shown in FIG. 2 (e), for example. Likewise, the area of low frequency component (c) is divided into blocks L1 to L4 as shown in FIG. 2 (f). And frequency components within the respective blocks H1 to H5 of the high frequency component (e) and the respective blocks L1 to L4 of low frequency components (f) are made related to each other. For example, it may be in the form of linear expression multiplied by certain constant coefficients as in Formula 3, or the frequency components within the respective blocks H1 to H5 may be approximated by multi-dimensional function $\psi$ (L1, L2, L3, L4) with the frequency components of the respective blocks L1 to L4 as variable.

Formula 3

$$H1 = \alpha \cdot L2$$

$$H2 = L4$$

$$H3 = \beta \cdot L3$$

$$H4 = L3$$

$$H5 = \gamma \cdot L2$$

Within the respective blocks, furthermore, it is not necessary to have the same coefficient. Instead, for respective blocks H1 to H5, coefficient matrix M _C1 to M _C5 are provided, and using them and low frequency component matrix M _L1 to M _L4 made up of lfrequency components within blocks L1 to L4, it is also possible to express high frequency component matrixes M_H1 to M _H5 made up of frequency data within blocks H1 to H5. In any of the methods, the high frequency data size can be reduced by formulating, the remaining high frequency components in FIG. 2 (e) expressing the clearness of the image and edge information using the low frequency components data in FIG. 2 (c).

Codes Synthesizing means 14 synthesizes the code string - of the relation information between the low frequency components and high frequency components obtained from a rule description obtained at HFC encoding means 13 or data such as coefficients of the approximation expression used by HFC encoding means 13 - and low frequency components data of the original image obtained from LFC extracting means 100. And the Codes Synthesizing means 14 stores the data on the storage medium 15 as simplified image data. Then, to read and restore data, a table is provided within the storage medium 15, and information-the number of stored image data, the sizes of the respective image data, the ratio of low frequency component data in the respective data stored, the ratio of codes indicating high frequency components - is stored, thus making extraction of the respective data efficient.

Embodiment 2

Next, there will be described the image processing device of Embodiment 2 of the present invention.

In FIG. 1, the processing steps by image input means 10 and OI orthogonal transforming means 11 for orthogonal transform of original images are the same as those in Embodiment 1 and will not be described. LFC extracting means 100 extracts low frequency components according to the number of picture elements of Reduced Images (RI) display means 102 that displays thumbnail images. RI generating means 101 performs inverse orthogonal transform on the low frequency components, and thumbnail images are displayed on RI display means 102.

Embodiment 3

Next, there will be described the image processing device of Embodiment 3.

In FIG. 1, the user gives an instruction signal by inputting means such as a keyboard, mouse etc. (not shown) so as to take out desired data from simplified image data stored on the storage medium 15 by the image processing device in Embodiment 1 of the present invention and output the data on a high resolution laser printer or ink jet printer or to edit the data on CRT. According to this instruction signal, LFC decoding means 16 first takes out low frequency components as the main data from the storage medium 15. And HFC decoding means 17 decodes the low frequency components obtained by LFC decoding means 16 and the high frequency components according to relation information between the low frequency components and high frequency components within the storage medium 15. Then, OI output means 18 combines the low frequency component data and high frequency component data and performs inverse orthogonal transform of the corresponding image size so as to output data to be handled by other image processing devices, that is, to be displayed on CRT, or to be outputted on the printer or the like.

Because image data stored on the storage medium 15 are not quantized when the data is encoded, the original image thus obtained by this method is sharper than that by the prior art.

Embodiment 4

Next, there will be described the image processing device of Embodiment 4 of the present invention.

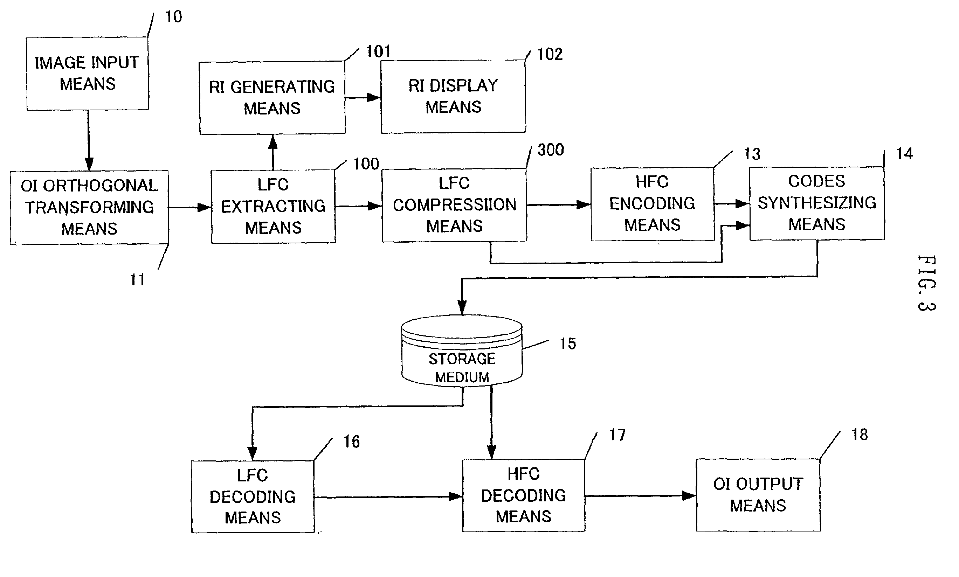

In FIG. 3, the processing steps by OI orthogonal transforming means 11, means 100, HFC encoding means 13, Codes Synthesizing means 14 and the storage medium 15 is the same as in the image processing device of Embodiment 1, and will not be explained. Considering that the volume of the low frequency component data of the original image obtained by LFC extracting means 100 is large in size and in consideration of the restriction by the volume size of the recorded medium etc., the low frequency component data is compressed by LFC compression means 300.

The processing method by LFC compression means 300 is based on differential encoding (Differential PCM; DPCM) and entropy encoding called the spatial method in JPEG instead of compression technique using usual DCT and quantization, entropy encoding (the compression technique also called the baseline technique). It is desirable to use the lossless compression method that will not cause distortion by compression and expansion.

In this technique, prediction values are worked out by a predictor using the neighboring density values, and from the density value to be encoded is subtracted its prediction value. For this predictor, seven kinds of relational expressions are made available as shown in Formula 4.

Formula 4

$$dDx = D1$$

$$dDx = D2$$

$$dDx = D3$$

$$dDx = D3 + (D2 - D1)$$

$$dDx = D3 + (D2 - D1)/2$$

$$dDx = D2 + (D3 - D1)/2$$

$$dDx = (D2 + D3)/2$$

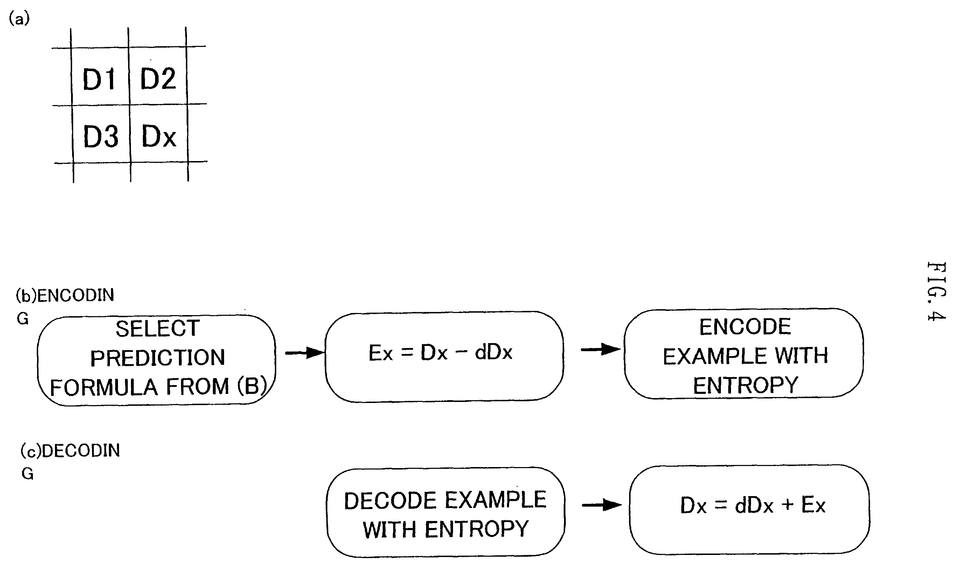

With the density value to be encoded as Dx, the neighboring three density values are to be called D1, D2, D3 as shown in FIG. 4. The prediction value dDx to be calculated from those three density values is defined by Formula 4. Which expression is used is written in header information of the compressed image data. In encoding, one prediction expression is selected as shown in FIG. 4 (b), and subtracted Ex is worked out. This subtracted Ex is entropy encoded. Encoding prediction errors makes it possible to compress the low frequency components reversibly.

On the basis of the low frequency component data compressed by LFC compression means 300, HFC encoding means 13 formulates the remaining high frequency components in a way as shown in Formula 3 as in Embodiment 1.

Codes Synthesizing means 14 synthesizes the compressed frequency component data and the code string of the relation information between the low frequency components and high frequency components obtained from the rule description obtained by HFC encoding means 13 or data such as the coefficient etc. of the approximation expression used by HFC encoding means 13, and stores the data on the storage medium 15 as simplified image data.

According to this embodiment, it is possible to compress the low frequency components to 1/2 to 1/4 which it is thought accounts for the largest portion in size in the data size of the device in the Embodiment 1. Also, by using a lossless compression method for compression, it is possible to store data without impairing the frequency components possessed by the original image.

It is noted that since the low frequency component data is a basic image to restore high frequency components which express the sharpness in the details of the image, a lossless compression method is applied to the low frequency components of the original image to realize the outputting of a clearest image with a sharp edge. But the usual JPEG baseline method can also be used here. It is a lossy compression, and when it is applied the clearness of the image will be lost. But the data size can be compressed to 1/10 to 1/20, and it is a method that is used as in case the image volume to be held on memory media and to be read is compacted as far as possible so that much image data can be stored.

Also, the relation information between the low frequency components and high frequency components obtained from HFC encoding means 13 in the image processing device of Embodiment 1 and the relation information between the basic components and the high frequency components of the respective enlarged images obtained from multiple image encoding means 802 in the image processing devices in Embodiments 6 and 9 can be compressed by lossless compression methods such as the spatial method.

Embodiment 5

Next, there will be explained the image processing device of Embodiment 5.

In FIG. 5, the processing steps by storage medium 15, LFC decoding means 16 and HFC decoding means 17 is the same as in Embodiment 3 and will not be explained.

ShC estimating means 500 is provided with a function of estimating the high frequency component data that will be short in enlarging the data to a desired size in case the original image read is displayed on high-resolution CRT etc. EI output means 501 combines the shortage of high frequency components estimated by ShC estimating means 500 and the frequency components of the original image decoded from the encoded image data stored on the storage medium 15 by LFC decoding means 16 and HFC decoding means 17, and performs inverse orthogonal transform corresponding to the enlargement size, thereby generating an enlarged image of the original image read.

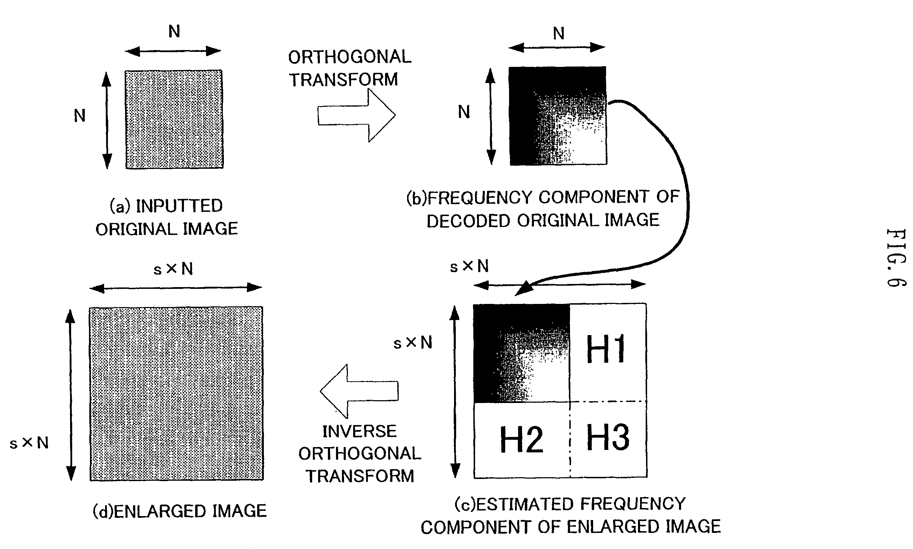

ShC estimating means 500 and EI output means 501 process data as shown in FIG. 6. First, the frequency component data as shown in FIG. 6 (b) obtained by performing orthogonal transform of an original image of a size N picture elements and N picture elements as shown in FIG. 6 (a) are embedded in the low frequency area of the frequency components of an enlarged image having a coefficient size corresponding to a desired enlargement size (sN picture elements x sN picture elements)(FIG. 6 (c)). And the shortage components H1 to H3 that occur then are estimated from the frequency components of the original image shown in FIG. 6 (b). There are a number of methods of estimation including:

(1) Method in which nonlinear approximation capacity of the radial basis function network (RBFN) is applied.
(2) Method in which from the frequency components of the edge image of the original image, the frequency components of its enlarged edge image are estimated with precision using linear approximation or radial basis function network, whereby the high frequency components of the enlarged image which were lacking from the original image are estimated.
(3) Method in which as disclosed in unexamined Japanese patent application 8-294001, the orthogonal transform components of the original image are embedded in the low frequency area and the frequency information obtained on the basis of a prediction rule prepared in advance are embedded in the high frequency area.
(4) Method in which the high frequency components are restored in a process of repeating transform and inverse transform of image datas using orthogonal transform as proposed in unexamined Japanese patent application 6-54172 (method based on Gerchberg-Papoulis repeating).

(Methods (1) and (2) will be described later.)

In addition, a number of techniques of enlarging images using the frequency area are available. But the ShC estimating means 500 requires a technique of estimating with precision of the high frequency components necessary to generate a clear image in details with sharp edge. If this requirement is satisfied, any technique is applicable.

And EI output means 501 performs inverse orthogonal transform corresponding to the coefficient size of sN x sN as shown in FIG. 6 (d), whereby the frequency components of the enlarged image estimated by ShC estimating means 500 are brought back to real space data, and outputted as data to be handled by other image processing devices as to be displayed on CRT or the like, or to be referred to an outputting unit such as the printer.

Through such arrangements, the high frequency component data required in outputting an enlarged image using frequency components of the original image are estimated and compensated, thus avoiding a blurred edge and unclear details which are observed in enlargement by the prior art picture element interpolation.

Embodiment 6

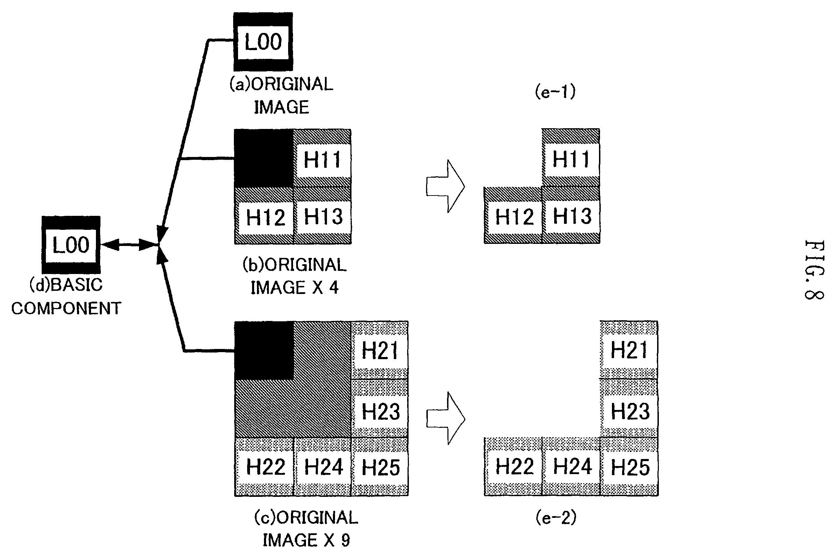

Next, there will be explained the image processing device of Embodiment 6 with reference to FIG. 7 and FIG. 8.
In FIG. 7, the processing by image input means 10 and OI orthogonal transforming means 11 is identical with that in Embodiment 1 of the present invention and will not be explained. First, using the frequency components of the original image obtained by OI orthogonal transforming means 11, EF estimating means 800 estimates the frequency component data in enlarging the image to a plurality of image sizes. The estimating method can be the same technique as ShC estimating means 500 of FIG. 5, one of the constituent elements of the image processing device in Embodiment 5 of the present invention.

Then, the basic components are extracted by Basic Components (BC) extracting means 807. This process is schematically shown in FIG. 8. FIG. 8 (a) shows the frequency components of the original image, FIG. 8 (b) shows the frequency components of an image produced by enlarging the original image twice vertically and twice horizontally, and FIG. 8 (c) shows the frequency components of an image produced by enlarging the original image three times vertically and three times horizontally. More image sizes may be provided, and the enlargement ratio of the image size does not have to be an integer. In FIG. 8 (a), (b) and (c), the frequency components in the low frequency area represent the whole-wise feature of an image and have a qualitative tendency, which is common to the respective enlargement ratios. Therefore, frequency component L00 in a low frequency area that exhibits a similar tendency is to be taken as a basic component as shown in FIG. 8 (d). For simplification of processing, the frequency components of the original image shown in FIG. 8 (a) may be regarded as basic component.

Multiple encoding means 802 in FIG. 7 relates the basic component L00 and the respective blocks H11 to H13 shown in FIG. 8 (b) and formulates them (FIG. 8 (e-1)) in the same way as HFC encoding means 13 does in the image processing devices of Embodiments 1 and 4 of the present invention. The respective blocks H21 to H25 shown in FIG. 8 (c) also can be related directly to the basic component L00 in the same way. Here in the present embodiment, however, by relating the respective blocks H11 to H13 in FIG. 8 (b) and the respective blocks H21 to H25 in FIG. (c) as shown in FIG. 8 (e-2), the basic component (frequency component in a low frequency area) L00 and the respective blocks H21 to H25 in FIG. 8 (c) are indirectly related and formulated. That is because less qualitative difference is observed between the near blocks in the frequency area, the accuracy by the relating procedure.

MC synthesizing means 803 synthesizes the extracted basic component and the relation information between the basic component obtained by multiple image encoding means 802 and the respective frequency components of the enlarged images and stores data on the storage medium 15 as multiple simplified image data in the same way as Codes Synthesizing means 14 does in Embodiments 1 and 4. Then, it is necessary to write the number of enlarged images prepared multiple-wise, the starting flag signals of data of the respective sizes etc. on the headers or the like of the multiple simplified image data.

As set forth above, if enlarged frequency components corresponding to a plurality of image sizes, matched to the resolution the outputting device, are prepared in advance, it is possible to save the time for estimating the high frequency components that get short in outputting an image of a desired size on the basis of data read from the memory medium, thus improving the user interface.

Embodiment 7

Next, there will be explained the image processing device of Embodiment 7.

In FIG. 7, the processing steps by image input means 10, OI orthogonal transforming means 11, EF estimating means 800 and BC extracting means 807 are the same as those in the image processing device of Embodiment 6 of the present invention and will not be explained.

Basic Image (BI) generating means 808 perform inverse orthogonal transform on the basic component extracted by BC extracting means 807. In case the size (coefficient size) in the frequency space of the frequency components extracted by BC extracting means 807 is larger than the size of the image for review on the display, a frequency component matched to the resolution will be further extracted from the low frequency area of the basic component and a basic image for display is generated. If, on the other hand, the coefficient size of the frequency components extracted by BC extracting means 807 is smaller than the size of the image for review on the display, "0" component shown in FIG. 41 will be embedded in the area where the coefficients of the basic component are short, and a thumbnail image is generated. But it is possible to include the following processing in BI generating means 808. That is, in such a case, the shortage components is estimated according to the image size as EF estimating means 800 and the image is enlarged to the image size for review.

Embodiment 8

Next, there will be explained the image processing device of Embodiment 8.

In FIG. 7, the user can select an image, an object for outputting and editing, from among the image data stored on the storage medium 15 by the image processing device of Embodiment 6 of the present invention and also can specify the image size. In this case, the following methods can be used. That is, selection information according to the image sizes stored on the storage medium 15 is presented, or the user inputs an enlargement ratio with the original image size as basis, or the size is automatically selected in accordance with the resolution of equipment to which the image is outputted.

First, there will be described the processing in case selection information according to the image sizes stored on the storage medium 15 is presented. The user selects and specifies a desired image and desired image size by inputting means such as the mouse (not shown). From the storage medium 15, Basic Components (BC) decoding means 804 takes out the basic component of the image from the multiple frequency components corresponding to the instruction. Then, Object Frequency (ObF) decoding means 805 takes out the expression code string of the high frequency component data corresponding to the selected image size, and decodes the high frequency components other than the basic component of the object enlarged image size from the code string and the basic component. Object Images (ObI) output means 806 combines the high frequency components and the basic component, performs inverse orthogonal transform and outputs the desired enlarged image.

Next, there will be explained the processing in case the enlargement ratio with the original image size as basis is inputted or the image size is automatically selected in accordance with the resolution of equipment for outputting. In case image sizes are not kept multitudinously on the storage medium 15, the image data of the size nearest the enlarged size is selected, and processed by BC decoding means 804, ObF decoding means 805, and then ObI output means 806. Then, it is to be understood, in inverse orthogonal transform in ObI output means 806, inverse orthogonal transform corresponding to the image size nearest the size after enlargement is performed.

At this stage, however, it is also possible to select an image size smaller than the desired image size and the shortage is made up by ShC estimating means 500 in Embodiment 5.

As set forth above, if the low frequency component that can be regarded as common to the frequency components of a plurality of enlarged sizes is extracted as basic component and the remaining high frequency components of the respective enlarged sizes are encoded on the basis of this basic component, frequency components of image on a plurality of enlarged sizes can be provided. Therefore, when an enlarged image of the needed image size is reproduced according to the user's instruction, the enlarged image can be reproduced at a high speed without estimating the shortage of high frequency components in the desired enlarged size each time an instruction is given.

Embodiment 9

Next, there will be explained the image processing device of Embodiment 9.

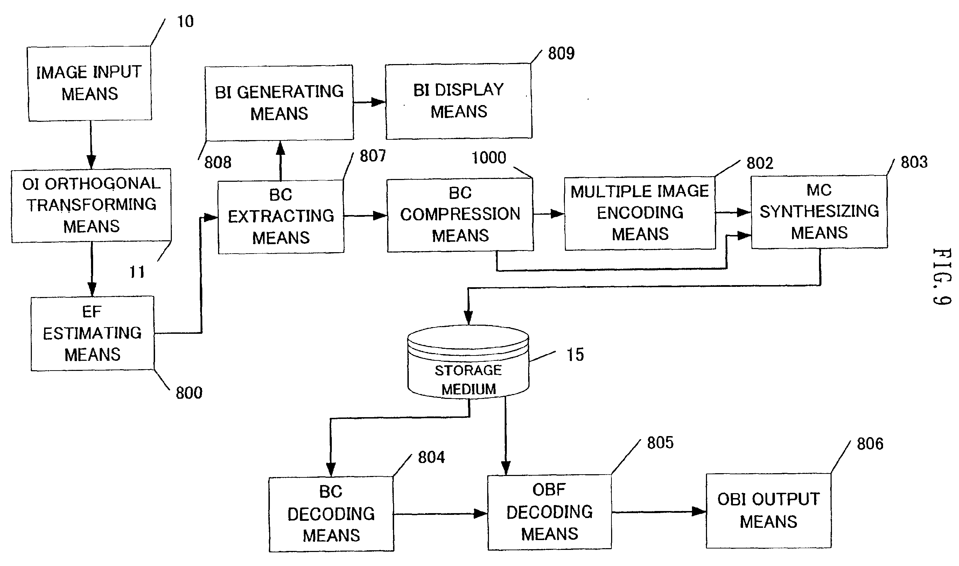

In FIG. 9, the processing steps by image input means 10, OI orthogonal transforming means 11, EF estimating means 800, and BC extracting means 807 is the same as those in the image processing device of Embodiment 6 of the present invention, and will not be explained.

Basic Components (BC) compression means 1000 compresses the basic component extracted by BC extracting means 807. This compression step is identical with that by LFC compression means 300 in the image processing device of Embodiment 4 of the present invention and will not be explained.

Also, the processing by multiple image encoding means 802, MC synthesizing means 803 and the storage medium 15 following that by BC compression means 1000 is the same as that in the image processing device of Embodiment 6 of the present invention and will not be explained.

Through such arrangements, it is possible to reduce image data size - the problem that arises when a plurality of image sizes are held.

Embodiment 10

Next, there will be explained the image processing device of Embodiment 10.

FIG. 10 is a block diagram showing the arrangement of the device.

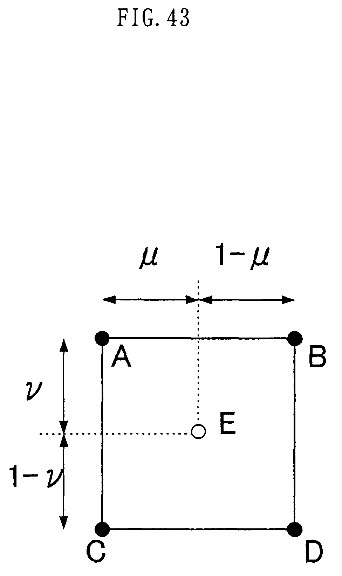

First, interpolating is effected by an interpolating technique shown in FIG. 43 between the picture elements on an original image read by image input means 10, and inter-picture element interpolating means 1100 generates an enlarged image. Then, convolution means 1101 repeats convolution of the enlarged image for enhancing the picture elements.

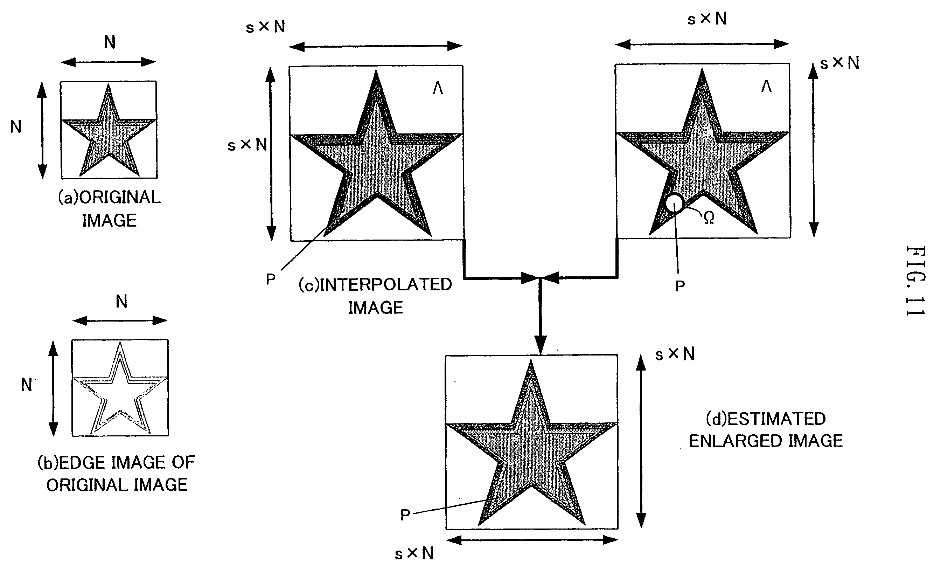

FIG. 11 shows the convolution process. In case the edge is an unclear image as shown in FIG. 11 (b), image data on the edge can not be extracted, and it is difficult to enlarge the image in the processing step as shown in FIG. 42. But according to the present invention, the averaged density value can be enhanced without difficulty. It is noted that the processing by convolution means 1101 produces the same effect on the enlarged image as when the processing by the edge enhancing filter is repeated several times. The conventional processing by edge enhancing filter has problems that the processing has to be repeated many times, or the edge is not enhanced at all unless a suitable filter is selected, but the convolution method has no such problem because in convolution means 1101, convolution is effected by the density value itself. If it is assumed that when convolution is performed at point P in FIG. 11 (c) for the K-th time with that density value as Dp [K], the density value Dp [K + 1] at point P by convolution for the (K + 1)-th time is defined as in Fof an objecormula 5. This is to find the average value of convolution values near that picture element. Here, $\Omega$ represents the range of an object picture element for convolution, U _ Gaso represents the total number of picture elements within its $\Omega$, and q represents any picture element within $\Omega$.

Formula 5

$$Dp[k+1] = (\sum_{q \in \Omega} (Dp[k] \times Dq[k])) / U\_Gaso$$

If it is assumed that the set of picture elements contained in the enlarged interpolated image is the whole of the star $\Lambda$, all the picture elements within this $\Lambda$ will be processed.

Next, convergence judging means 1102 judges the convergence of this convolution processing. It judges whether on the basis of the mean value within $\Lambda$ of the square errors between the density value Dp[k - 1] obtained at the (K - 1)th convolution and the density value Dp[K] at the K-th convolution as in Formula 6 is satisfied with convergence judgment value. It judges that the convergence of the density value is over and finishes the convolution if the mean value is smaller than a preset convergence judgement value Thred, and estimated enlarged image outputting means 1312 outputs the image as estimated enlarged image.

Formula 6

$$Thred \geq (\sum_{p \in \Lambda} (Dp[k] - Dp[k-1])^2) / T\_Gaso$$

In Formula 6, T _Gaso represents the total number of picture elements within $\Lambda$.

As set forth above, the image processing device of present embodiment is to enhance an enlarged image through convolutional arithmetic processing of interpolated image data and can realize an enlarged image in a handy manner without conducting time-consuming frequency transform. Also, it is possible to obtain an enlarged image with edge information without difficulty in processing even an original image with unclear-cut edge which presents a problem when edge information of the original image is used to keep an interpolated image from blurring.

Embodiment 11

FIG. 12 shows the arrangement of the image processing device of Embodiment 11.

Using original image data of n picture elements x n picture elements inputted in this device by image input means 10, Approximate Coefficient (AC) deriving means 1200 within EF estimating means 120A derives - in a method which will be described later - approximation coefficient vector (weight coefficient vector) Vw = (w _0,w _1,..., w _N-1) (N = n $\times$ n) which is used in the nonlinear interpolation method applied in estimating the frequency component data of the enlarged image.

Using weight coefficient vector Vw obtained by AC deriving means 1200 and the frequency component data of the original image obtained by OI orthogonal transforming means 11, non-linear estimating means 1201 in EF estimating means 120A estimates the frequency component data of an enlarged image - as will be described later - using the radial basis function network.

Now, there will be explained the operation of this image processing device.

Image input means 10 reads out data of an original image of a size of n picture elements x n picture elements for enlargement. The original image obtained by image input means 10 is processed in the same way as in Embodiment 1 until the original image is transformed into component data (frequency component data) in frequency area by OI orthogonal transforming means 11, and the processing until that will not be described.

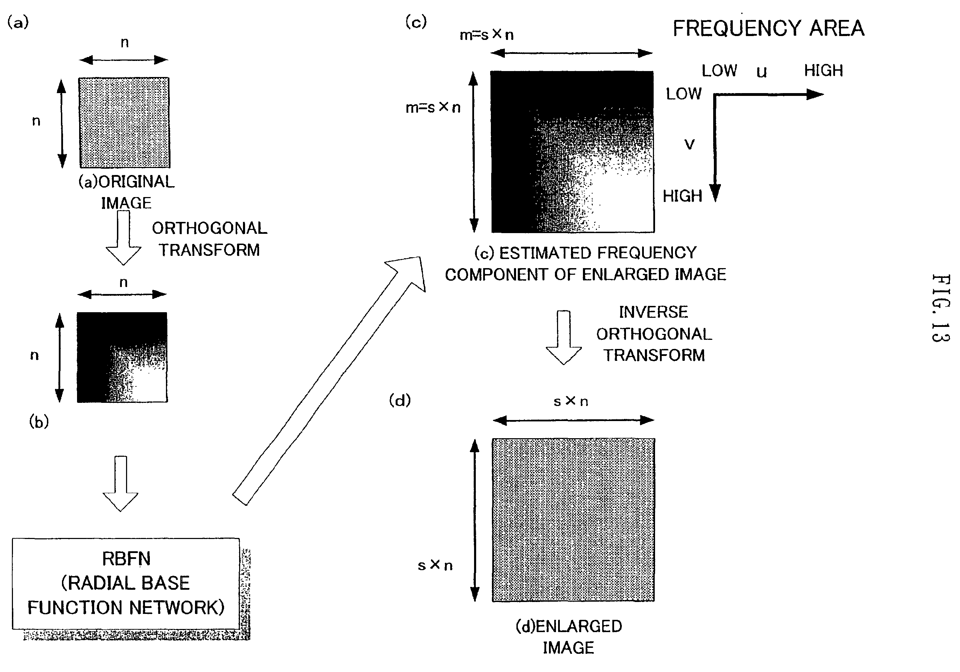

On the basis of density value D(x, y)(x, y =0, ..., n·1)(FIG. 13 (a)) of the original image from image input means 10 and frequency component data F(u, v)(u, v=0,..., n-1) (FIG. 13 (b)) from OI orthogonal transforming means 11, EF estimating means 120A estimates frequency component data F'(u, v)(u,v=0,..., m-1) (FIG. 13 (c)) of an enlarged image at the time when the original image of n x n is enlarged to an m x m image (n < m = s x n). This estimation is made using the radial basis function network (hereinafter RBFN) which will be described later.

Not a linear but an non-linear relation is generally applicable between the two-dimensional DCT component value and its component position (u, v). For this reason, a technique that can approximate this non-linear relation with precision is required to produce a clear enlarged image without the edge getting blurred. Among such techniques are one using hierarchical neural network learned on the basis of learning data prepared in advance and a technique of fuzzy logic reasoning using a rule base extracted from learning data prepared in advance. For these techniques, however, it is indispensable to prepare much image data for learning in advance so that estimation can be made with high precision.

On the other hand, there are techniques that can self-organize approximation function using the features of inputted data without learning data unlike the above-mentioned techniques. One example of these is a technique that makes short-term prediction of time series pattern that fluctuates chaotically, and the radial basis function network that is used here is considered to be a kind of that technique. Here, the surface drawn by frequency components is approximated by non-linear function using RBFN from the frequency components of a given image and its corresponding position.

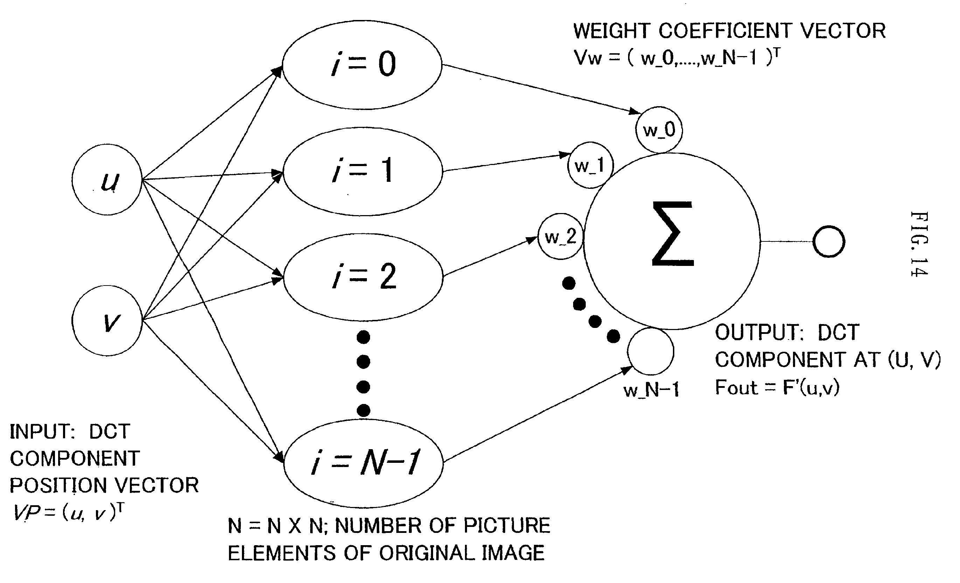

FIG. 14 is a example model arrangement of RBFN used here. To this, the component position vector VP = (u, v) to be found is given as input, and unified into one at the outputting layer through transform by radial basis function (RBF) $\phi$ at the intermediate layer, and output frequency component Fout = F' (u, v) is outputted. This is shown in Formula 7 where VP_i = (u_i, v_i) represents the center of the i-th RBF function and N represents the number of RBF functions.

Formula 7

$$F'(u,v) = \sum_{i=0}^{N-1} w\_i \cdot \phi(\|VP - VP\_i\|)$$

$$\{0 \leq u \leq m-1, 0 \leq v \leq m-1\}$$

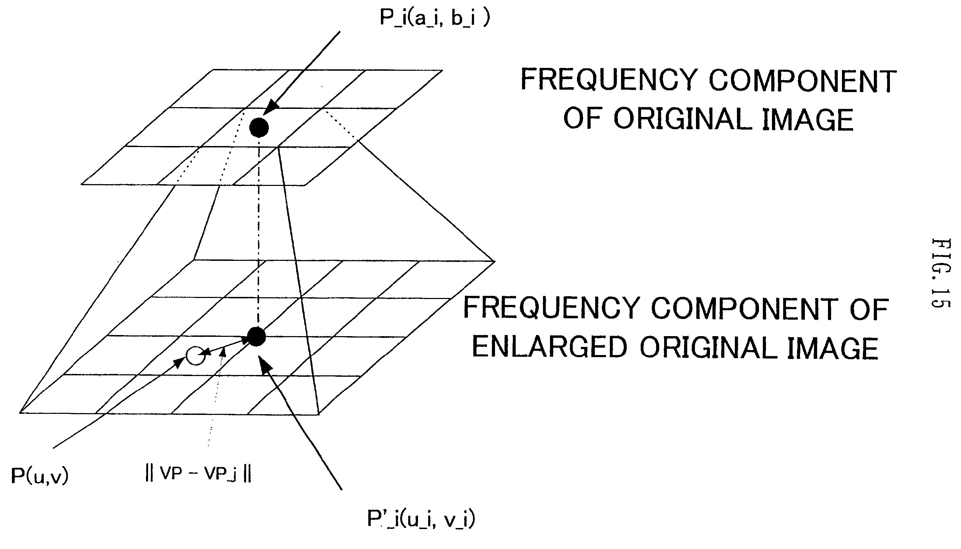

If, for example, an original image is enlarged with 1f requency components P as center as shown in FIG. 15, VP_i corresponds to the position vector of the frequency component of the original image, and the number N of the RBF functions corresponds to the number n x n of picture elements of the original image. That is, as many RBF functions as the number of picture elements of the original image are provided, and frequency component data after enlargement placed around component position vector VP_i at P, the center of the RBF function, is estimated as overlapping of these RBF function outputs. It is noted that RBF $\phi$ is a function that changes depending on distance $\| VP \cdot VP\_i \|$ between component position vector VP and the center VP_i of the i-th RBF function, and one example is given in Formula 8.

Formula 8

$$\phi(\|VP - VP\_i\|) = \|VP - VP\_i\|^{2(k+1)}\log(\|VP - VP\_i\|) \qquad (a)$$

$$\phi(\|VP - VP\_i\|) = \exp(-\|VP - VP\_i\|^2/b) \qquad (b)$$

where (a) is a logistic function and k is a parameter to control the slant of the function. Also, (b) is a Gaussian function, and like k, b is also a parameter expressing the form. In addition, many others are conceivable, but since (b) is generally used, (b) is used here, too, with b = 1.0.

Weight coefficient vector Vw = (w _0, w _1,..., w _N-1)$^T$ (T: transposition) is decided on as follows.

To optimize the non-linear approximation in Formula 8, weight coefficient vector Vw should be so decided on that with VP = VP_i, the estimated value of the frequency component is in agreement with the frequency component value obtained from the original image as far as possible. Here, P'_i in the frequency area after enlargement corresponds to P_i in the frequency area of the original image as shown in FIG. 15. It means that with frequency component position at P _i as (a_i, b_i), Vw that minimizes square error function E (Vw) between frequency component F(a _i, b_i) at P _i and estimated frequency component F'(u_i, v _i) in P'_i should be taken as optimum weight coefficient vector.

First, estimated components F' (u, v) at (u, v) are arranged from the low frequency area, and the k-th estimated component corresponding to frequency component position (a_i, b_i) of the original image will be given as FF(k). Then, matrix MP made up of frequency component vector Vy of an estimated enlarged image and RBF function is defined as Formula 9.

Formula 9

$$Vy = (FF(0), FF(1), ......, FF(N-1))^T$$

$$MP = [MP\_ij]$$

$$= \begin{cases} \phi(\|VP\_0 - VP\_0\|), & \phi(\|VP\_0 - VP\_1\|),...,\phi(\|VP\_0 - VP\_N - 1\|) \\ \phi(\|VP\_1 - VP\_0\|), \phi(\|VP\_1 - VP\_1\|),...., & \phi(\|VP\_1 - VP\_N - 1\|) \\ ...................... \\ ...................... \\ \phi(\|VP\_N - 1 - VP\_0\|), & \phi(\|VP\_N - 1 - VP\_1\|),...., & \phi(\|VP\_N - 1 - VP\_N - 1\|) \end{cases}$$

From this, frequency component vector Vy can be rewritten as Formula 10.

Formula 10

$$Vy = MP \cdot Vw$$

And the evaluation function (which represents square error function) E (Vw) is given as in Formula 11. In Formula 11, vector Vf indicates that frequency components F (a, b) of an original image are arranged from the low frequency area one after another, the number of arranged components being N = n × n pieces. It is a vector that will be settled if an original image is given in advance.

Formula 11

$$E(Vw) = \sum_{i=0}^{n-1} \sum_{i=0}^{n-1} (F(a\_i, b\_1) - F'(u\_i, v\_i))^2$$

$$= (Vf - MP \cdot Vw)^T \cdot (Vf - MP \cdot Vw)$$

$$Vf = (F(0,0), F(0,1),....., F(N-1, N-1))^T$$

Then, if rewritten with attention paid to ∂E(Vw) / ∂Vw = 0, Vw will be given as in Formula 12.

Formula 12

$$Vw = (MP^T \cdot MP)^{-1}MP \cdot Vf$$

Using this, AC deriving means 1200 calculates approximation weight coefficient Vw. Using weight coefficient Vw, non-linear estimating means 1201 estimates DCT component F'(u, v) at (u, v) from Formula 7.

In this connection, in case (b) is used in Formula 8, the following method of setting a value of b is conceivable. When an original image is estimated - using many of image data prepared in advance - from a reduced image prepared in the sub-sampling, the relation is derived statistically between parameter b for the SN ratio of the estimated image and the original image to be a maximum and the distribution of data within the respective original images (standard deviation, average, dispersion etc.), whereby a value of b is decided on.

On the basis of the estimation results of the frequency components possessed by the enlarged image obtained by RI generating means 101, inverse orthogonal transform means 1213 performs inverse discrete cosine transform (IDCT), thus restoring the enlarged mage as the value in real space. Estimated Enlarged Images (EsFI) output means 1214 - obtained by inverse orthogonal transform means 1213 - to be handled by other image processing devices, that is, to be displayed on CRT, to be outputted on the printer or the like.

As set forth above, according to the present embodiment, the features of the frequency components of an original image can be approximated with precision, and it is possible to estimate the high frequency components erased in the sampling of the original image in a handy manner with high precision without preparing a rule etc. in advance.

Embodiment 12

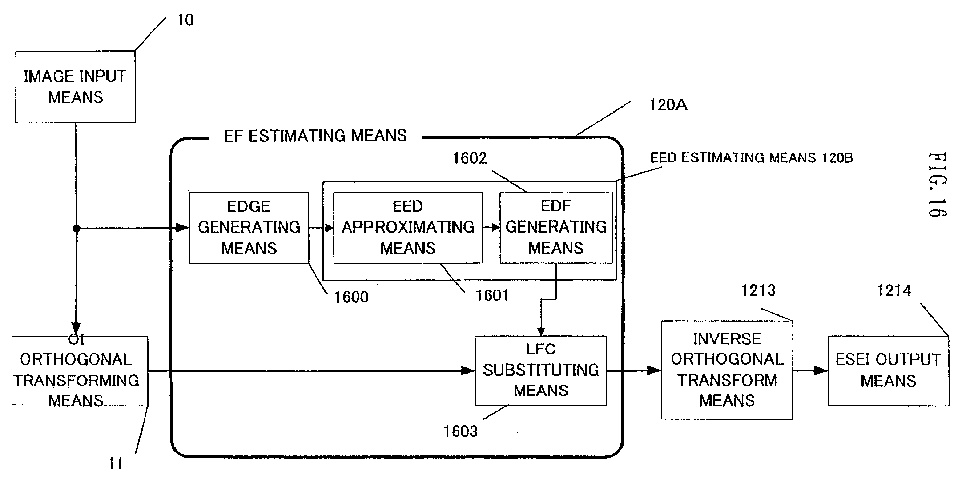

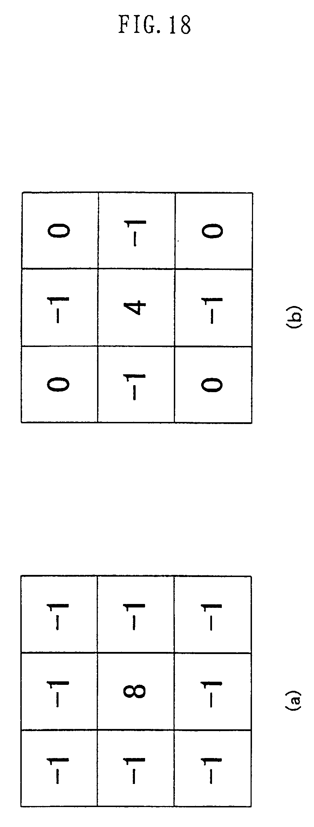

FIG. 16 shows the arrangement of the image processing device of Embodiment 12, and there will be described the operation of this image processing device. As in Embodiment 11, an original image obtained by image input means 10 is transformed into frequency component F(u, v) by OI orthogonal transforming means 11. At the same time, edge generating means 1600 extracts edges by a Laplacian filter shown in FIG. 18.

Either of Laplacian filters shown in FIG. 18 (a) or (b) may be used for the purpose. Some other filter may also be used. The precision of edge extraction can be improved by selecting a filter depending on the features of the original image to be handled.

For example, the Laplacian filter shown in FIG. 18 (a) multiplies the density value at object picture element by eight times and subtracts the density values of the eight surrounding picture elements. That is, the difference between the density value of the picture element in the center and the density value of the surrounding picture elements is added to the density value of the picture element in the center, whereby the picture elements that changes greatly in the density difference from the surrounding as in the edge are enhanced.

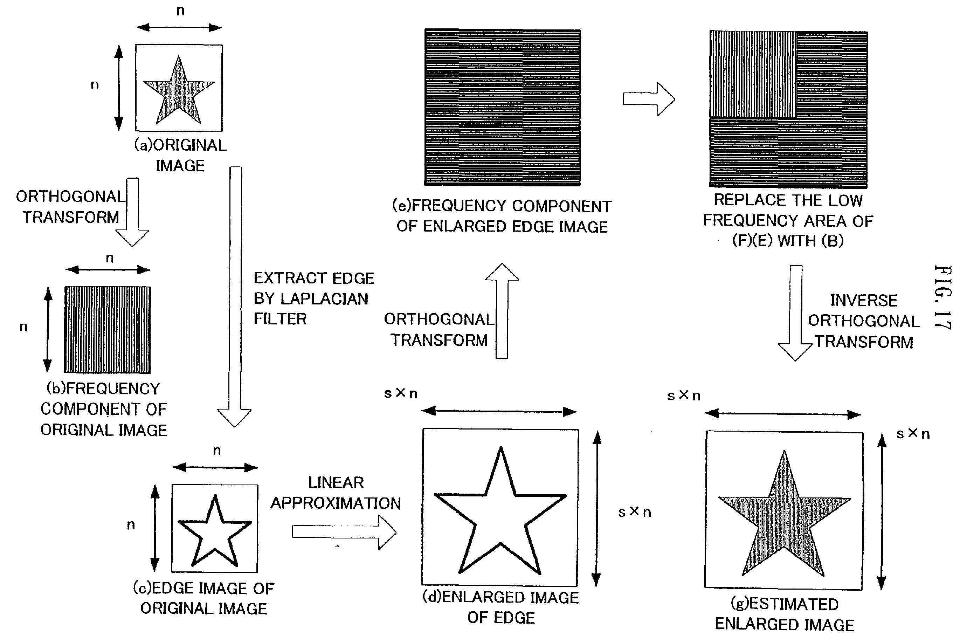

Enlarged Edge (EE) approximating means 1601 in Enlarged Edge (EEd) estimating means 120B linearly enlarges an edge image (FIG. 17 (c)) -obtained by edge generating means 1600 as shown in FIG. 17 - to a desired enlargement ratio s, and interpolation picture elements have to be embedded between the existing picture elements as the image is enlarged. Here in present embodiment, that is realized by embedding the mean value of the edge image data derived from the existing picture elements in the center between the existing picture elements. For example, in case an existing edge image is enlarged to one with picture element positions P(x _0, y _0) and Q(x _0+dx, y _0) and it is necessary to interpolate between them in the x direction according to the number of enlarged picture elements, the interpolation will be as given by Formula 13 (a). Here, it is assumed that data at picture element position P is represented by D(x _0, y _0), data at picture element position Q is represented by D(x _0+dx, y _0+dy), the position H to be embedded with interpolation data is represented by H(x _h, y _h), and interpolation data to be embedded is represented by DH(x _h, y _h). In case interpolation has to be done between picture element position P(x _0, y _0) and R(x _0, y _0+dy) in the y direction, data is as given by Formula 13 (b). In this connection, the interpolation data position in (b) is represented by I(x _i, y _i) and the interpolation data is represented by DI(x _i, y _i).

Formula 13

(a)

$$DH(x\_h,y\_h) = (D(x\_0,y\_0)+D(x\_0 + dx,y\_0))/2$$

$$x\_h = (x\_0+x\_0+dx)/2$$

$$y\_h=y\_0$$

(b)

$$DI(x\_i,y\_i) = (D(x\_0,y\_0))+D(x\_0,y\_0+dy))/2$$

$$x\_i = x\_0$$

$$y\_i = (x\_0+y\_0+dy)/2$$

Furthermore, it is considered that if interpolation is carried out in the y direction, too, using two interpolation picture elements neighboring each other in the y direction (obtained by interpolation in the x direction), the interpolation precision will further improve.

Edge Frequency (EF) enerating means 1602 in EEd estimating means 120B performs orthogonal transform on an estimated image of an enlarged edge (FIG. 17 (d)) obtained by EEd approximating means 1601 to find frequency components (FIG. 17 (e)). That is done mainly because of the clearness of the image and the features of details of the image and also because plenty of high frequency components representing the edge are contained in such an edge image. In other words, it is based on the idea that because an extracted edge image is lacking in information on the other portion, high frequency components appear, but lower frequency components will come out at a low level only. And the frequency components possessed by the enlarged image are estimated by substituting the low frequency area of the frequency components of the enlarged edge image (FIG. 17 (e)) obtained by EdF generating means 1602 with the frequency component data (FIG. 17 (b)) - obtained by OI orthogonal transforming means 11 - which have the whole features of the original image (FIG. 17 (a)). And the enlarged image (FIG. 17 (g)) brought back to the real space data through inverse orthogonal transform means 1213 is outputted so as to be handled by other image processing devices, that is, to be displayed on CRT, to be outputted on the printer or the like.

That way, the enlarged image can be estimated without difficulty without using an RBFN method as in Embodiment 11. Furthermore, the edge information is handed over in the original condition, and thus the edge can be enhanced without losing the high frequency components of the original image and the blurring of the image can be kept down.

Embodiment 13

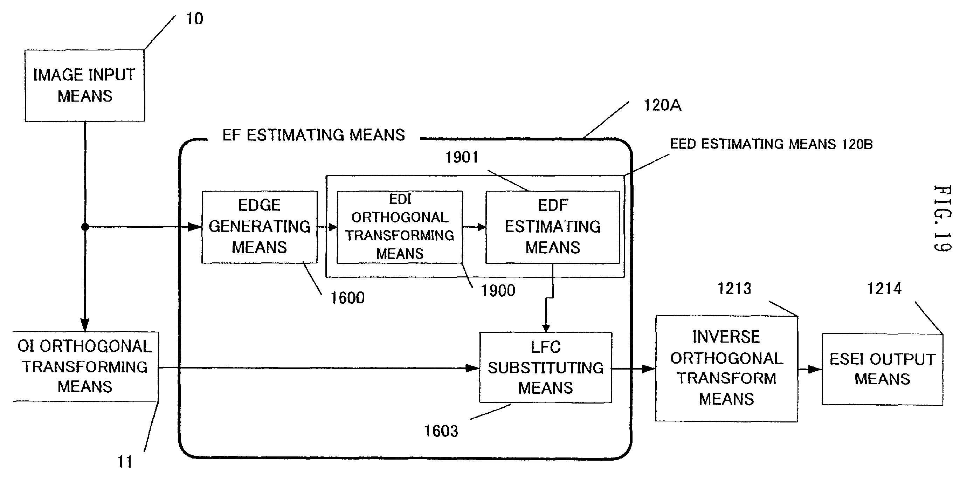

FIG. 19 shows the arrangement of the image processing device of Embodiment 19, and there will be described the operation of the image processing device.

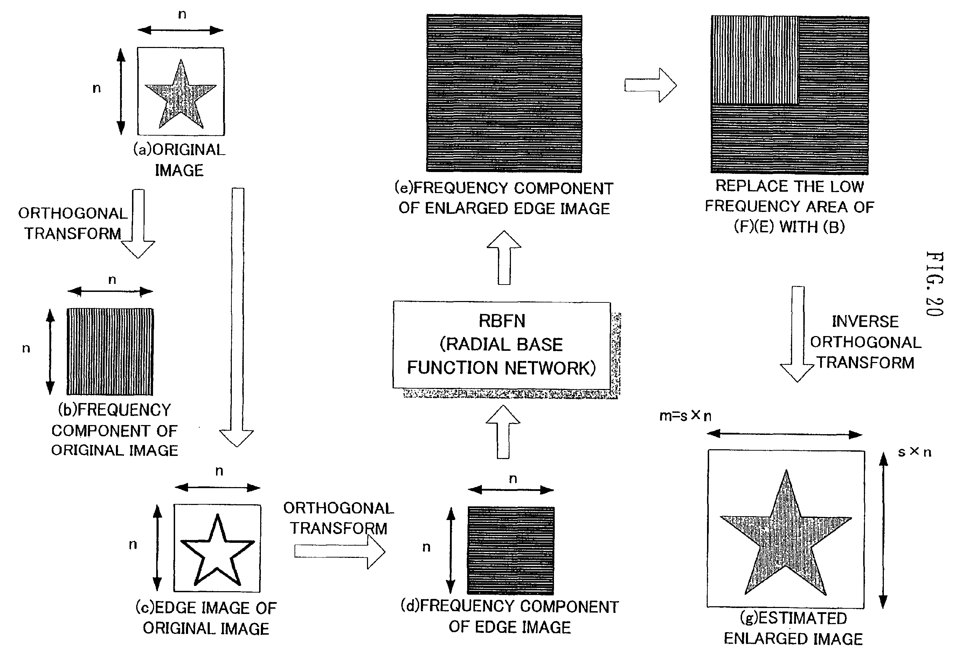

DCT transform is applied to an original image (FIG. 20 (a)) obtained by image input means 10 so as to derive frequency component data (FIG. 20 (b)), and at the same time an edge image (FIG. 20 (c)) of the original image is generated by edge generating means 1600 using a Laplacian filter as shown in FIG. 18. Edge Images (EI) orthogonal transforming means 1900 in EEd means 120B performs DCT on the edge image to acquire the frequency component data of the edge image (FIG. 20 (d)).

From the frequency component data of this edge image, Edge Frequency (EdF) estimating means 1901 in EEd means 120B estimates the frequency component data - to be obtained from the edge portion of an enlarged image (FIG. 20 (e)) - using radial basis function network (RBFN) adopted in Embodiment 11 which is excellent in nonlinear approximation. And the low frequency area of the frequency component data thus estimated is substituted with the frequency components obtained from the original image (FIG. 20 (f)), thereby acquiring the frequency component data of the enlarged image.

That way, as Embodiment 12, the enlarged edge information containing plenty of high frequency component data of the enlarged image is estimated from the features of the high frequency components of an image contained mainly in edge information, and by using that, the high frequency components can be compensated well which give clearness to an enlarged image. Furthermore, in Embodiment 12, the frequency component data of an enlarged edge image is estimated from a simple linear-interpolated image of the edge image of an original image. Interpolation of present embodiment is equivalent to non-linear approximation and it is considered, therefore, that the estimation precision in present embodiment will be higher than the method of simply performing linear interpolation between two samples.

This non-linear estimation method is different from that in Embodiment 11 only in that the frequency component data of the edge image obtained from the original image, and not the frequency component data of the original image, is inputted in RBFN of non-linear estimating means 1201 used in Embodiment 11, and will not be explained.

As this non-linear estimation method, it is possible to adopt a neural network technique using learning data, a technique following a fuzzy rule, a chaos deterministic prediction technique etc. as described in Embodiment 11. It should be noted that for those techniques, it is necessary to prepare large-scale learning data in advance.

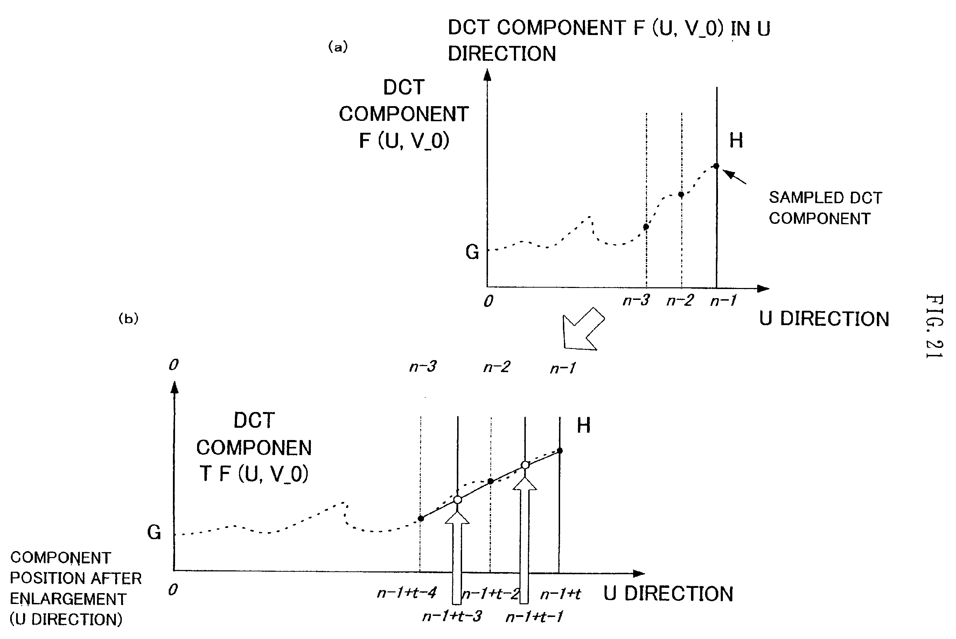

Furthermore, EdF estimating means 1901 finds the intermediate value between the DCT components (points n - 3, n - 2, n - 1 in FIG. 21 (a)) of an image sampled from the high frequency side according to the enlargement ratio s as shown in FIG. 21. And the frequency components of the enlarged edge can be estimated by allocating the DCT component positions starting from the head side of the high frequency components (points n - 1 + t - 3, n - 1 + t - 1 in FIG. 21 (b)). That way, the high frequency components can be compensated that give clearness to an enlarged image.

It appears that technically, there is not much difference between the interpolation method shown in FIG. 21 and that in Embodiment 12. In Embodiment 12, however, there is a possibility that the features of the edge etc. will change depending on between which picture elements of the edge image the interpolation picture element should be preferentially embedded when an enlarged edge image is prepared, and a proper interpolation order has to be worked out. But in case interpolation is done with the frequency components as shown in FIG. 21, the interpolation values of the DCT components should be embedded head side with the high frequency components since the point is to compensate the high frequency components. Then, the frequency components of the enlarged image should be estimated.

Embodiment 14

FIG. 23 shows the arrangement of the image processing device of Embodiment 14.

Many of original images inputted by image input means 10 have hundreds of picture elements x hundreds of picture elements. If orthogonal transform as in Embodiments 11, 12 and 13 is applied to that original image at a time, it will take a vast amount of time. To avoid that, the data is usually divided into blocks, each a size of 4 picture elements x 4 picture elements to 16 picture elements x 16 picture elements, and the respective blocks are enlarged to a picture element size according to a desired image enlargement ratio s, and they are put together again. In the case of this method, however, the following problem are pointed out.

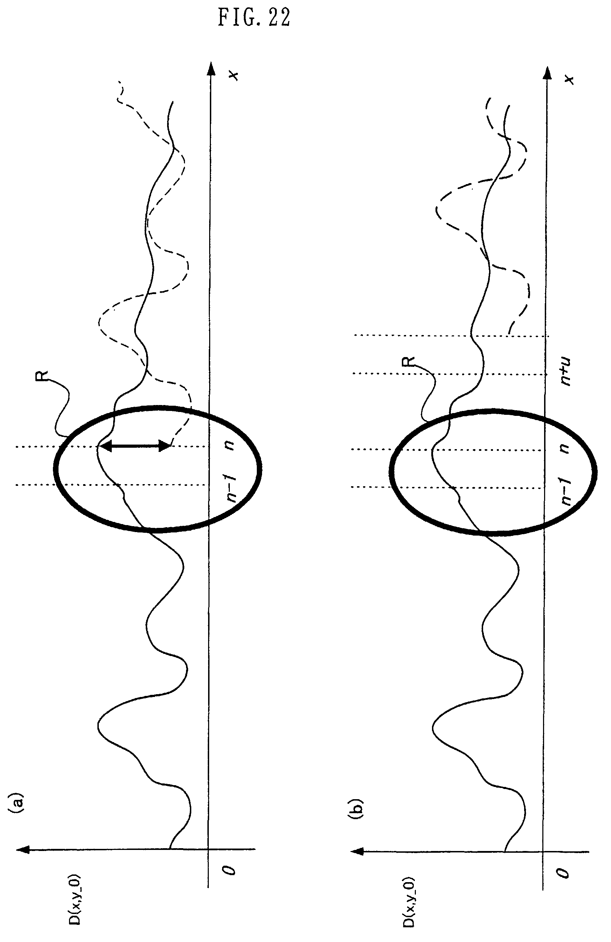

FIG. 22 (a) schematically shows that problem. For the purpose of simplicity, there will be explained an example where one-dimensional DCT is applied to the density value $D(x, y\_0)$ of the x-direction picture elements with $y = y\_0$ in block Ai (shown in solid line).

There are 0 to n-1 pieces of digital image data (density values) in the x direction. To perform one-dimensional DCT on them is synonymous with approximating with a linear combination of cosine function $\cos (i \times \pi/n)$ ($i = 0,....,$ n·1) having n cycles, assuming that a function expressing n pieces of image data is a cyclic function having n cycles in the x direction. Accordingly, $D(x, y\_0)$ can be expressed as in Formula 14.

Formula 14

$$D(x, y\_0) = \sum_{i=0}^{n-1} \alpha\_i \cdot \cos(i \cdot x \cdot \pi / n)$$

$\alpha\_i$ represents the i-th DCT component. In such a case, as shown in solid line in FIG. 22 (a), it is presupposed that in section [n, 2n - 1], the same data as in section [0, n - 1] is repeated, and therefore, image data $D(n, y\_0)$ with $x = n$ will try to determine $\alpha\_i$ so as to be identical with data $D(0, y\_0)$ with $x = 0$. Therefore, the larger the difference between data $D(n - 1, y\_0)$ with $x = n - 1$ and data $D(n, y\_0) = D(0, y\_0)$ with $x = n$, that is, $x = 0$, the wider the gap between the enlarged data D embedded in the x direction and data $D(n, y\_0)$ with $x = n$ of the enlarged data obtained from the from the next block at $x = n$ to $x = 2n - 1$. As a result, $D(x, y\_0)$ will be discontinuous in the x direction near this border.

Since two-dimensional DCT is one obtained by expanding one-dimensional DCT in the y direction, that discontinuity will also occur when the one-dimensional way is expanded to two-dimensional DCT. The present embodiment is a process addressing this problem.

An example will be considered where an original image will be divided into (n x n)-sized blocks Ai (i = 0,..., L - 1) and each block is enlarged to (m x m)-sized blocks Bi (i = 0,..., L - 1) thereby enlarging the original image at an enlargement ratio s = m/n. L corresponds to the number of blocks. Block dividing means 2300 in FIG. 23 divides the original image into blocks of not a size of n x n but blocks Ai' (i = 0,...,L-1) of a size of (n + u) x (n + u) so that the neighboring blocks partly overlap each other as shown on the left in FIG. 24.

That is, as shown in FIG. 22 (b), DCT on block A0 is performed on section [0, n + u] (in this case, it is presupposed that in section [n + u + 1, 2n + 2u], the same data as in section [0, n + u] will be repeated (shown in dotted line in FIG. 22 (b)). Similarly, DCT on block A1 is performed on section [n, 2n + u - 1]. That way, it is possible to keep down the gap in density value occurring in the block border when the conventional method is used (see frame R in FIG. 22).

In other words, noise N is caused in the end portion of block A0, and the data in this portion of block A0 is not adopted but the data in A1 is used.

Then, EBI frequency means 2302 enlarges the frequency component data of block Ai to frequency component data of ((n + u) x s) x ((n + u) x s). This enlargement is the same as that in Embodiments 1, 2 and 3 except that the enlargement is carried out block by block in the present embodiment, and will not be explained. The block size n x n that is used is generally 4 picture elements x 4 picture elements to 16 picture elements x 16 picture elements. If n = 8, u that determines the overlapping portion is set at 3, but this is not restrictive.

Block frequency extracting means 2303 does not use all the frequency component data of block Bi' obtained but takes out data of the required size m x m from the low frequency side, and again processes it to make an enlarged block Ci. And on Ci, block inverse orthogonal transform means 2304 effects orthogonal transform, and Enlarged Images (EI) recomposing means 2305 places the image data generated from block Ci at the corresponding position, thus finally obtaining an enlarged image.

That way, it is possible to avoid discontinuity between the interpolation data of block Ci near the border of the neighboring blocks and the image data at the head of the next block Ci + 1.

Embodiment 15

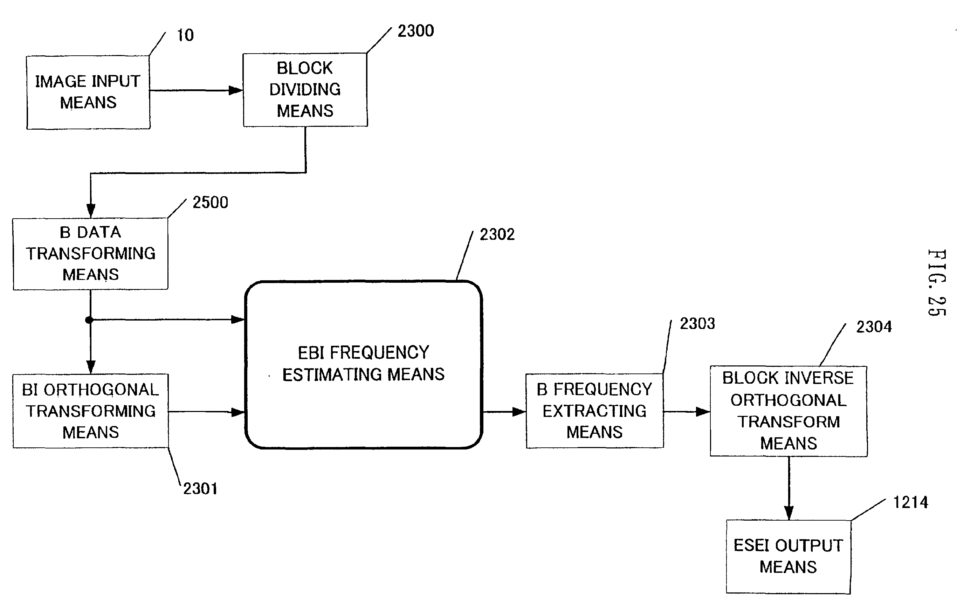

FIG. 25 shows the arrangement of the image processing device of Embodiment 15. In FIG. 25, Block (B) data transforming means 2500 performs a specific function transform - which will be described later - on the image data within blocks Ai (i = 0,..., L - 1) of an image size of n x n into which the original image is divided by block dividing means 2300 so as to keep down distortion occurring in the block image after enlargement. Other than that, the present embodiment is identical with Embodiment 14 in arrangement except that the present embodiment drops B frequency extracting means 2303 adopted in the image processing device in Embodiment 14.

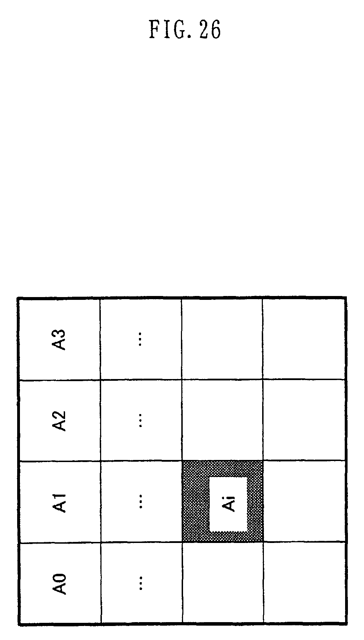

In the image processing device according to Embodiment 14, the original image is divided by block dividing means 2300 into blocks of a little larger size than the size of n x n so that the respective blocks overlap, and frequency component data of a desired size is taken out of an enlarged block obtained and substituted again with the frequency data of the enlarged block whose original size is n x n. In the present embodiment, on the other hand, block dividing means 2300 divides the original image into blocks Ai (i = 0, ..., L - 1) of a size of n x n without having them overlap as shown in FIG. 26. And data within block is transformed as will be described later, and enlarged blocks Bi (i = 0,..., L-1) are estimated from the transformed image data. That is the point where the present embodiment is different.

There will be described the operation of the image processing device thus constructed of Embodiment 15. An original image is divided into blocks, and image data in the respective blocks Ai (i = 0, ..., L - 1) are transformed by B data transforming means 2500 as follows.

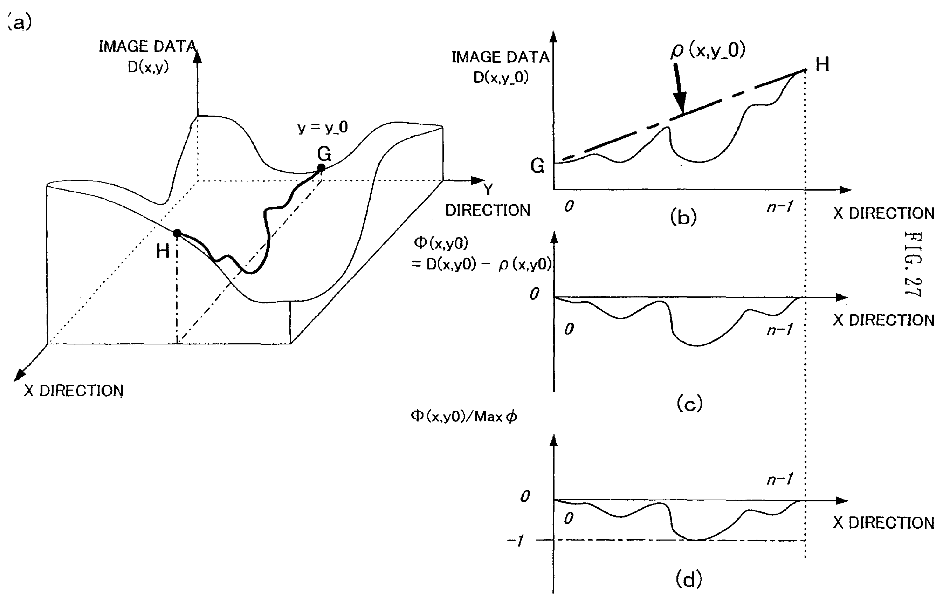

FIG. 27 (a) shows the transition of density value D(x, y) in blocks Ai. And the diagram of Fig.27(b),(c)and(d) show the transition D(x, y_0) in the x direction at y = y_0.

First, function $\rho(x, y\_0)$ that passes through image data D(0, y_0) at x = 0 and image data D(n - 1, y_0) at x = n - 1 will be defined. There are many function examples, but here a one-dimensional formula as in Formula 15 will be defined (FIG. 27 (b)).

Formula 15

$$\rho(x, y\_0) = D(0, y\_0) + (D(n - 1, y\_0) - D(0, y\_0))/n \cdot x$$

This $\rho(x, y\_0)$ will be subtracted from D(x, y_0). That is, $\Phi(x, y\_0) = D(x, y\_0) \cdot \rho(x, y\_0)$ will be calculated (FIG. 27(c)). This calculation is made for each y_0 within the block. In the y direction with x = x _0 fixed, furthermore, a similar subtraction function $\Phi(x\_0, y) = D(x\_0, y) \cdot \rho(x\_0, y)$ is worked out. And image data is normalized with the maximum value Max Φ at (x = 0,..., n - 1, y = 0,..., n - 1) of absolute values of those subtraction function (FIG. 27 (d)).

Because data at this moment, seen in the x direction, is made such that data at the block border x = n - 1 and x = 0, that is, x = n are all 0 and all of density values between n - 1 and 0, the difference between interpolation data to be embedded after x = n - 1 and data at x = n is very small. Thus, the distortion by block connection can be kept down.

Here in this example, a one-dimensional expression as Formula 15 is used. But generally any functions that satisfy the border conditions at points G and H in FIG. 27 are no problems, and therefore if a function that can keep down fluctuation after transform is used for $\rho(x, y\_0)$, distortion can be furthermore suppressed and the enlarged frequency components can be estimated with precision.

As set forth above, by bringing close to the density value at the block border for every block of the original image data, it is possible to reduce the discontinuity of the block border that causes fluctuation in estimating the enlarged image performed by interpolation on orthogonal transform.

Embodiment 16

FIG. 28 shows the arrangement of the image processing device according to Embodiment 16.

In estimating an enlarged image of a color original image, the problem is that enlargement will be a vast amount of processing as compared with the enlargement of one-color multiple gradation data. The present embodiment is an invention to make the processing efficient.

In a color original image inputted by image input means 10, SC selecting means 2800 selects a color component to be made a standard. Generally, the color original image is made up of three colors - red, green and blue. Considering that green data is much reflected on luminance information, it is desirable to select a green component as standard component. TR depriving means 2801 finds simple ratio ratio_r of red component to green component and simple ratio ratio _b of blue component to the green component. There are a variety of methods of finding the simple ratio. To be used here in this example are the mean value of density ratios to green of red within the object area and the mean value of density ratios to green of blue within the object area as in Formula 16.

Formula 16

$$ratio\_r = \sum_{i=0}^{n-1}\sum_{j=0}^{n-1} r\_ij / g\_ij$$

$$ratio\_b = \sum_{i=0}^{n-1}\sum_{j=0}^{n-1} b\_ij / g\_ij$$

In Formula 16, r_ij, g_ij, b_ij represent the densities of the red, green and blue components respectively at picture element position (i, j) of an original image. Instead of estimating all the remaining components of the object area using one ratio coefficient like that, it is also possible to adopt matrix R_r made up of the ratio of the red component to the green component in each picture element and matrix R_b made up of the ratio of the blue component to the green component in each picture element. This way, it is possible to reproduce the features of the color original image better and enlarge the color image with higher precision than when using one ratio coefficient.

On this standard component or the green component, as in Embodiments 11 to 15, enlargement is performed by Standard Images (SI) orthogonal transforming means 2802 transform, Standard Enlarged Image Frequency (SEIF) estimating means 2803 and Standard Inverse (SI) orthogonal transforming means 2804. And ShC enlarging means 2805 multiplies the simple ratio ratio_r, ratio_b by the enlarged green data from SI orthogonal transforming means 2804, thus producing enlarged data of the red and blue components. These three enlarged components are combined into one to produce an enlarged image of the color original image, and EsEI output means 1214 outputs the data to be handled by other image processing devices, that is, to be displayed on CRT, to be outputted on the printer or the like.

By perform orthogonal transform of one component alone, it is possible to save the trouble of enlarging each of a plurality of components making up a color original image and to simplify the processing.

Embodiment 17

In Embodiments 17 to 21, there will be explained about image processing devices to enlarge an image using Wavelet transform.

FIG. 29 shows the arrangement of the image processing device of Embodiment 17. Image input means 10 is the same as those in Embodiment 1, Embodiment 11 and others. The II regulating means 12 interpolates or thins out (hereinafter both expressed as "regulate") the horizontal, vertical picture elements of an original image having n picture elements x n picture elements obtained by image input means 10 to 1/2 of a desired enlarged image size of Ln picture elements x Ln picture elements. Image enlarging means 290A enlarges the image using multiple resolution analysis in Wavelet transform which will be described later. Enlarged Images (EI) regulating means 2913 regulates to a desired image size of Ln picture elements x Ln picture elements an enlarged image which was regulated by II regulating means 12 and having four times as many picture elements as the original image. EsEI output means 1214 outputs an image data after enlargement - estimated by EI regulating means 2913 - to other devices as for display.

Image enlarging means 290A is provided with Vertical Edge (VdE) generating means 2900 which takes out an vertical-direction edge component image from an original image regulated to Ln/2 picture elements x Ln/2 picture elements by II regulating means 12, Horizontal Edge (HEd) generating means 2901 which takes out an horizontal-direction edge component image and Oblique Edge (OE) generating means 2902 that takes out an oblique-direction edge component image. Furthermore, image enlarging means 290A has leveling up means 2903 which generates an enlarged image of Ln picture elements x Ln picture elements by inverse Wavelet transform by regarding the above-mentioned three edge component images and an original image regulated to Ln/2 picture elements x Ln/2 picture elements regulated by II regulating means 12 as four sub-band components making up an transformed image at the time when the enlarged image of Ln picture elements x Ln picture elements was subjected to Wavelet transform.

In the thus formed image processing device of Embodiment 17, multiple resolution analysis by Wavelet transform is utilized for image enlargement. Wavelet transform, which is described in a number of publications including "Wavelet Beginners Guide," Susumu Sakakibara, Tokyo Electric Engineering College Publication Bureau, is developed and applied in many fields such as signal processing and compression of image data.

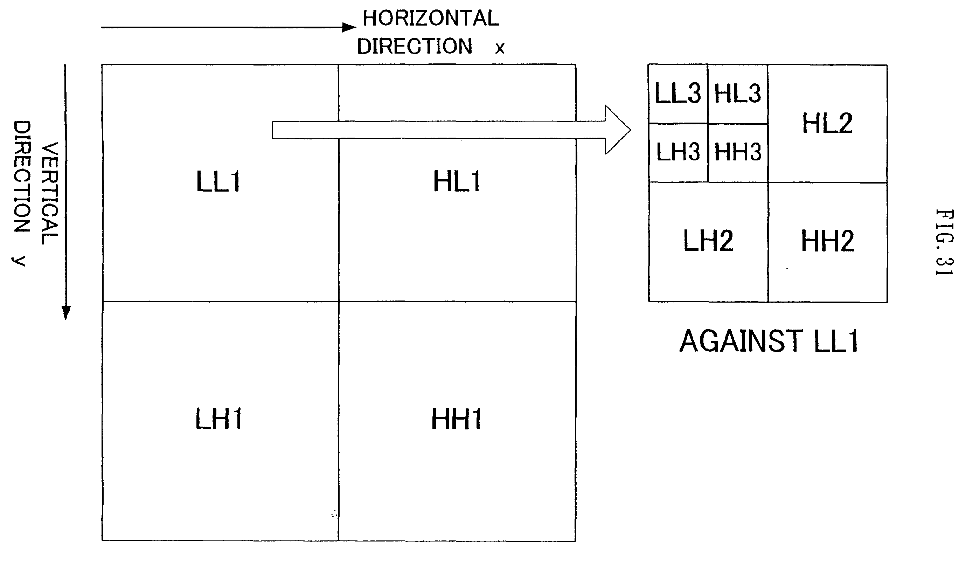

An transformed image of an original image, which is obtained by subjecting the original image to Wavelet transform, is formed of a number of sub-band (partial frequency band) components. FIG. 31 shows a layout example of sub-bands of a Wavelet transformed image in which an original image is divided into 10 sub-bands, LL3, HL3, LH3, HH3, HL2, LH2, HH2, HL1, LH1, HL1.

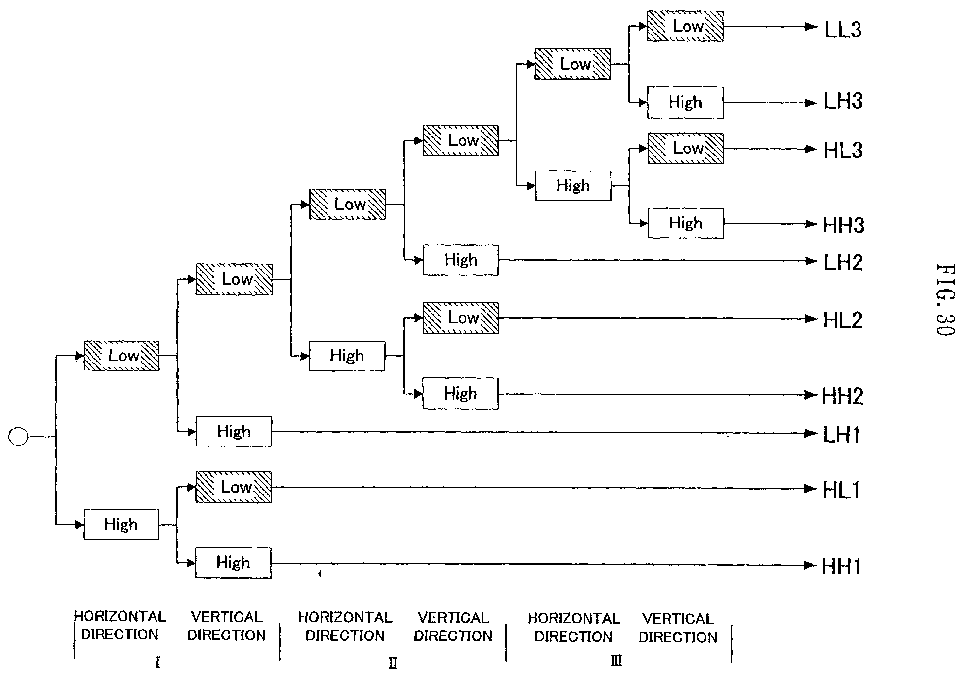

FIG. 30 is a diagram in which Wavelet transform as shown in FIG. 31 is illustrated in the form of filter series. That is, the Wavelet transform is performed in three stages - stages I, II, III. In each stage, "Low" processing and "High" processing are performed in the vertical direction (y direction) and horizontal direction (x direction) separately. In the Low processing, low pass filtering and down-sampling (thinning out) to 1/2 are carried out. In the High processing, high pass filtering and down-sampling to 1/2 are conducted.

First, High processing and Low processing are performed on the original image in the horizontal direction. And on the output of the horizontal direction High processing, High processing and Low processing are performed in the vertical direction. The result of the High processing the vertical direction is the HH1 component, and the result of the Low processing in the vertical direction is HL1. Then, on the output of the horizontal-direction Low processing, Low processing and High processing are performed in the vertical direction. The result of the vertical-direction Low processing is LL1 and the result of the vertical-direction High processing is LH1. Those are the results obtained in the first Wavelet transforming.

Further, Low and High processing in the horizontal direction is applied to the LL1 component. And to the output of the horizontal direction High processing is applied in the vertical direction, and the result is HH2. To the output, Low processing is also applied in the vertical direction, and the result is HL2. Further, to the output obtained by the Low processing in the horizontal direction, Low processing is applied in the vertical direction, and the result is LL2. To the output, High processing is also applied in the vertical direction, and the result is LH2. Those are the results obtained in the second Wavelet transforming.

Likewise, the LL2 is subjected to horizontal-direction Low processing and High processing separately. In the vertical direction, too, Low processing and High processing are performed separately. Thus obtained are the sub-band components HH3, HL3, LH3, LL3. Those are the results obtained in the third Wavelet transforming.

In the first stage of the Wavelet transform as shown, the original image is broken down into four frequency components - LL1, HL1, LH1 and HH1 and down-sampled to 1/2 both in the horizontal and vertical directions. Therefore, the size of the image representing the respective components will be 1/4 of that of the original image. LL1 is a low frequency component extracted from the original image and is a blurred image of the original image. Most of information of the original image is contained in that component. Therefore, LL1 is the object for the second Wavelet transform.

Meanwhile, the HL1 component obtained by the processing in FIG. 30, represents an image with the high frequency component extracted intensively in the horizontal direction of the original image. The LH1 component represents an image with the high frequency component extracted intensively in the vertical direction of the original image. And HH1 represents an image with the high frequency component extracted both in the horizontal and vertical directions. In other words, it can be considered to be an image with the high frequency component extracted in the oblique direction.

Viewed from the density value, it is considered that the HL1 component strongly reflects the area where the density value fluctuates violently in the horizontal direction of the original image (edge information in the vertical direction). On the other hand, LH1 component strongly reflects the area where the density value fluctuates violently in the vertical direction of the original image (edge information in the horizontal direction). The HH1 component strongly reflects the area where the density value fluctuates violently in the horizontal and vertical directions of the original image (edge information in the oblique direction).

Such characteristics produced by Wavelet transform can also be said of the components LL2, HL2, LH2, HH2 obtained in the second stage of Wavelet transform of LL1. The same is applicable to the components of Wavelet transform with LL2 as object image. Like this, it can be taken that the Wavelet transform breaks the LL image with the low frequency component extracted in the sub-band component image of one stage before down into four 1/4 resolution images corresponding to the low frequency component and the frequency components in vertical, horizontal and oblique directions.

And these sub-band component images can be synthesized by filtering to restore an image of one stage before. This will be explained in FIG. 31. Synthesizing four sub-band component images LL3, HL3, LH3, HH3 can restore LL2, and synthesizing LL2, HL2, LH2 and HH2 restores LL1. And the original image can be restored by using LL1, HL1, LH1, HH1.

Because such a Wavelet transform can express a plurality of sub-band component images with different resolutions simultaneously, it is also called the multiple resolution analysis. And the Wavelet transform attracts attention as technique that can compress data efficiently by compressing the respective sub-band components.

In the present embodiment, first, the original image is regarded as the low frequency sub-band component LL1 at one stage before. The next step is to estimate the remaining images - image HL1 with the high frequency component strongly extracted in the horizontal direction, image LH1 with the high frequency component strongly extracted in the vertical direction, and image HH1 with the high frequency component strongly extracted in the horizontal and vertical directions, and to obtain an enlarged image four as large. And this processing is applied to enlarge an original image to a desired size.

On the basis of the above description, the operation of the image processing device of the present embodiment will be explained.

First, image input means 10 reads out an original image of a size n picture elements x n picture elements to be enlarged.

The original image read by image input means 10 is regulated in image size by II regulating means 12. As mentioned in the description of the multiple resolution analysis in Wavelet transform, if an image, an object for transform, is subjected to a Wavelet transform, the sub-band components after transform will always become 1/2 of the original size both in the number of picture elements in the horizontal direction and the number of picture elements in the vertical direction. On the other hand, the picture element size obtained by inverse Wavelet transform will be twice as large as that of the original sub-band component both in the number of picture elements in the horizontal direction and the number of picture elements in the vertical direction. That is, the total number of picture elements will be four times as many.

In view of such a nature, it is desirable that the number of picture elements both in the horizontal and vertical directions of an enlarged image obtained in an inverse transform is a multiple of 2. For this reason, II regulating means 12 first regulates a desired enlarged image size Ln picture elements x Ln picture elements - the enlargement ratio being L-to a multiple of 2, that is, dLn picture elements x dLn picture elements and regulates the original image so that its size is dLn/2 picture elements x dLn/2 picture elements. A number of regulating techniques are available, but here in this embodiment it is to be realized by interpolating between the picture elements using Formula 1 or by thinning out picture elements in areas where the gradation less change.

Here, the following methods are also possible to apply. That is, the original image is transformed into frequency space by orthogonal transform such as DCT transform, and the frequency components corresponding to dLn/2 picture elements x dLn/2 picture elements are taken out. Or the shortage high frequency components are embedded with "0" and regulated by inverse orthogonal transform corresponding to dLn/2 picture elements x dLn/2 picture elements. But considering the processing efficiency and enlargement by Wavelet transform technique after that, it is not thought that a complicated processing is so efficient. For this reason, simple-interpolating between picture elements or thinning out is adopted.

Image enlarging means 290A enlarges an original image-regulated to dLn/2 picture elements x dLn/2 picture elements by II regulating means 12 - twice both in the horizontal and vertical directions to an image size close to a desired Ln picture elements x Ln picture elements. For this, the multiple resolution analysis in the Wavelet transform is utilized. The problems with the prior art method in which orthogonal transform is performed and shortage component is compensated in the frequency area are processing time and occurrence of jaggy noise in block joint because an image is divided into a plurality of blocks. But the Wavelet transform offers an advantage that because a large image can be handled at a time, no such noise will be caused.

Furthermore, in case sub-band component LL1 in FIG. 31 is taken as image regulated to dLn/2 picture elements x dLn/2 picture elements, image enlarging means 290A will have to estimate the images of dLn/2 picture elements x dLn/2 picture elements corresponding to the remaining three sub-bands HL1, LH1, HH1.

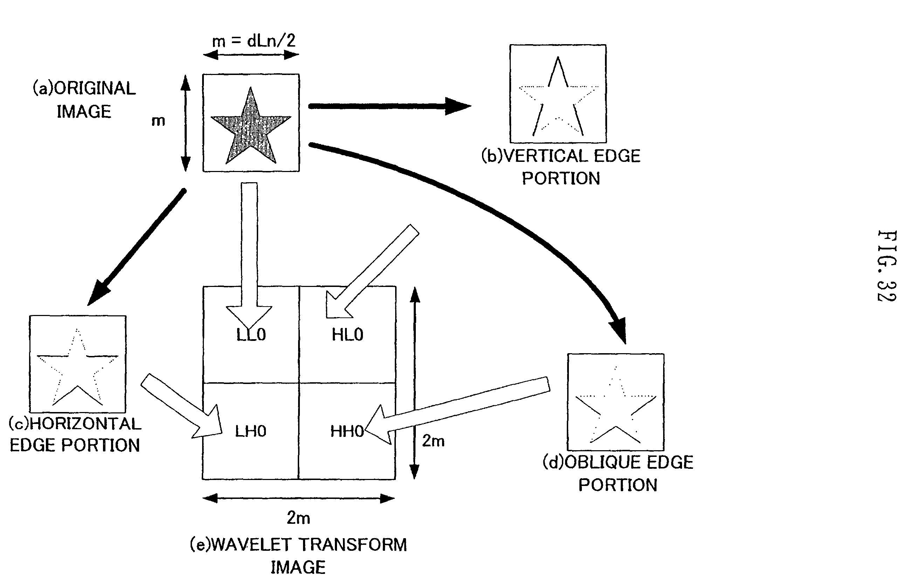

FIG. 32 schematically shows that procedure. Here, a method is adopted in which the three images of sub-band components HL1, LH1, HH1 are taken as edge images of LL1 in three directions. As mentioned above, the component HL1 is to represent an image with the high frequency component strongly extracted in the horizontal direction of an enlarged image (will be named LL0) having four times as many picture elements as the original image regulated to dLn/2 picture elements x dLn/2 picture elements (FIG. 31 (a)), and the sub-band component LH1 is to represent an image with the high frequency component strongly extracted in the vertical direction of sub-band component LL0. And the sub-band component HH1 will be an image with the high frequency extracted both in the horizontal and vertical directions. That is, it is considered, the sub-band component HL1 reflects the area representing a high frequency component in the horizontal direction, that is, edge information in the vertical direction of the image of sub-band component LL0 (FIG. 32 (b)). On the other hand, it is considered, the sub-band component LH1 reflects the area representing a high frequency component in the vertical direction, that is, edge information in the horizontal direction of the image of sub-band component LLO (FIG. 32 (c)). And it is considered, the sub-band component HH1 reflects the area representing a high frequency component both in the vertical and horizontal directions, that is, edge information in the oblique direction of the image of sub-band component LL0 (FIG. 32 (d)).

In the present embodiment, therefore, there is provided edge generating means 290B of an arrangement as shown in FIG. 29 where VdE generating means 2900 extracts the edge component in the vertical direction of an original image regulated to dLn/2 picture elements x dLn/2 picture elements by II regulating means 12 and takes it as shortage HL1 component. And HEd generating means 2901 extracts the edge component in the horizontal direction of the original image regulated to dLn/2 picture elements x dLn/2 picture elements by II regulating means 12 and takes it as shortage LH1 component. Similarly, OEd generating means 2902 extracts the edge component in the oblique direction of the original image regulated to dLn/2 picture elements x dLn/2 picture elements by II regulating means 12 and takes it as of shortage HH1 component.

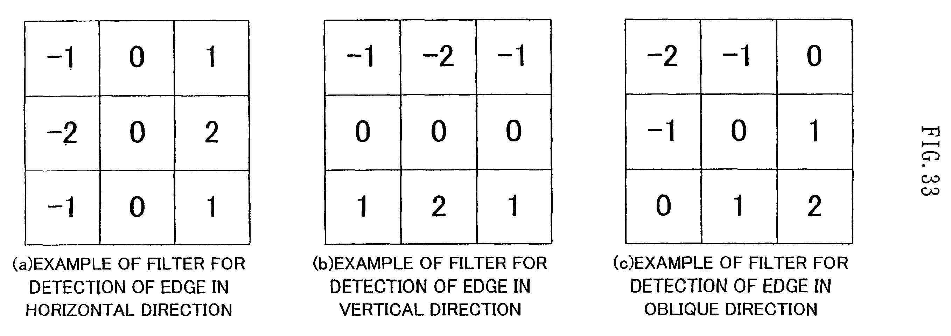

In this process, it is to be assumed that the edge generating means 2900, 2901 and 1902 use edge detection filters to perform detection in three directions as shown in FIG. 33. An example shown in FIG. 33 (a) is to detect the edge in the horizontal direction using a filter in which weighting increases in the horizontal direction. An example shown in FIG. 33 (b) is to detect the edge in the vertical direction using a filter in which weighting increases in the vertical direction. An example shown in FIG. 33 (c) is to detect the edge in the oblique direction using a filter in which weighting increases in the oblique direction. It is not that these filters only are applicable, but other filters may be used.

With the estimated four sub-band components subjected to inverse Wavelet transform as described, leveling up means 2903 acquires a clear enlarged image of a size dLn picture elements x dLn picture elements. In this case, since the Wavelet transform can be illustrated in filter series processing as shown in FIG. 30, the processing here may be filter series processing that does the reverse of that.

If the size of an enlarged image obtained by image enlarging means 290A, that is, the desired image size Ln picture elements x Ln picture elements is not a multiple of 2 (in case Ln/2 is not an integer), a delicate difference occurs. In such a case, EI regulating means 2913 does interpolation between picture elements or thinning out to make up for the delicate difference. To be processed here is at most one picture element, and therefore the processing is done in the area where the image changes are small (areas - other than the edge - where there is small gradation change) and its effect is small.

An enlarged image obtained by EI regulating means 2913 is handed over to other devices by Enlarged Images (EI) output means 2914 and displayed on CRT or used in some other way.

According to the present embodiment, as set forth above, the blurring of an image can be kept down unlike the prior art method of merely interpolating between the picture elements in the original image and the prior art device in which the shortage of frequency components in the frequency area are embedded with "0." The present embodiment also produces a clear enlarged image without causing noise like jaggy etc. which is considered a problem encountered with the orthogonal transform method. According to the present embodiment, furthermore, it is possible to estimate an enlarged image in a handy manner without preparing a rule in advance.

Embodiment 18

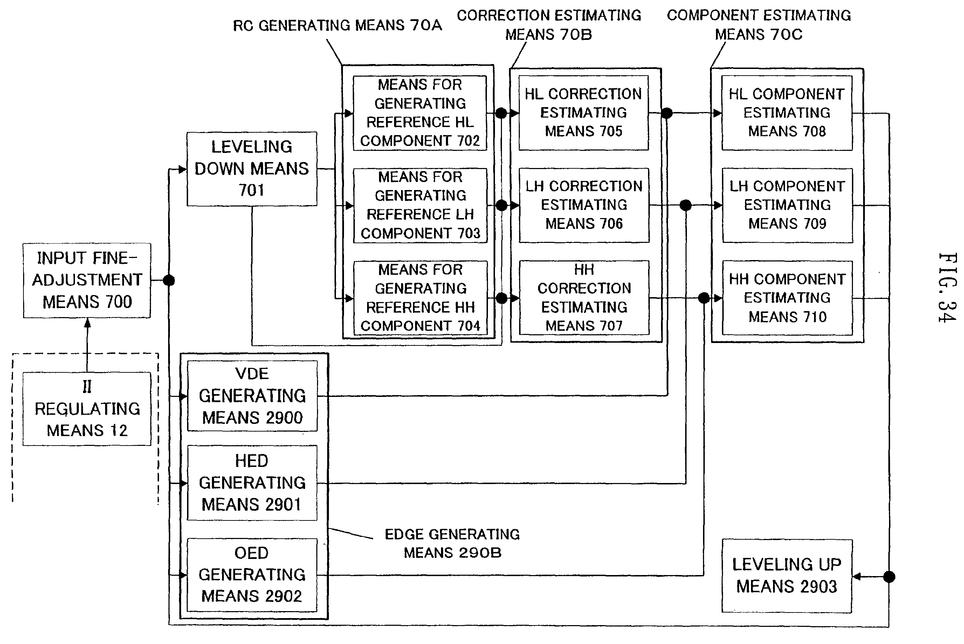

FIG. 34 is a block diagram showing the arrangement of image enlarging means 290A making up the image processing device of an eighteenth embodiment 18 of the present invention. The operation of this device will be explained.

As in Embodiment 17, an original image obtained by image input means 10 is regulated by II regulating means 12 from a desired enlarged image size Ln picture elements x Ln picture elements to dLn/2 picture elements x dLn/2 picture elements, both a multiple of 2, in the horizontal and vertical directions. And the original image is regulated to a 1/4 size, that is, dLn/2 picture elements x dLn/2 picture elements both in the horizontal and vertical directions.

Receiving the results of the processing by II regulating means 12, input fine-adjustment means 700 fine-adjusts dLn/2 picture elements x dLn/2 picture elements by one picture element to a multiple of 2, that is, ddLn picture elements x ddLn picture elements so that the sub-band component one level below is acquired at leveling down means 701 from the original image regulated to dLn/2 picture elements x dLn/2 picture elements. And leveling down means 701 performs Wavelet transform on the original image of ddLn picture elements x ddLn picture elements acquired at input fine-adjustment means 700 and generates four sub-band components LL2, HL2, LH2, HH2 with the image size being 1/4 of that of the original image.

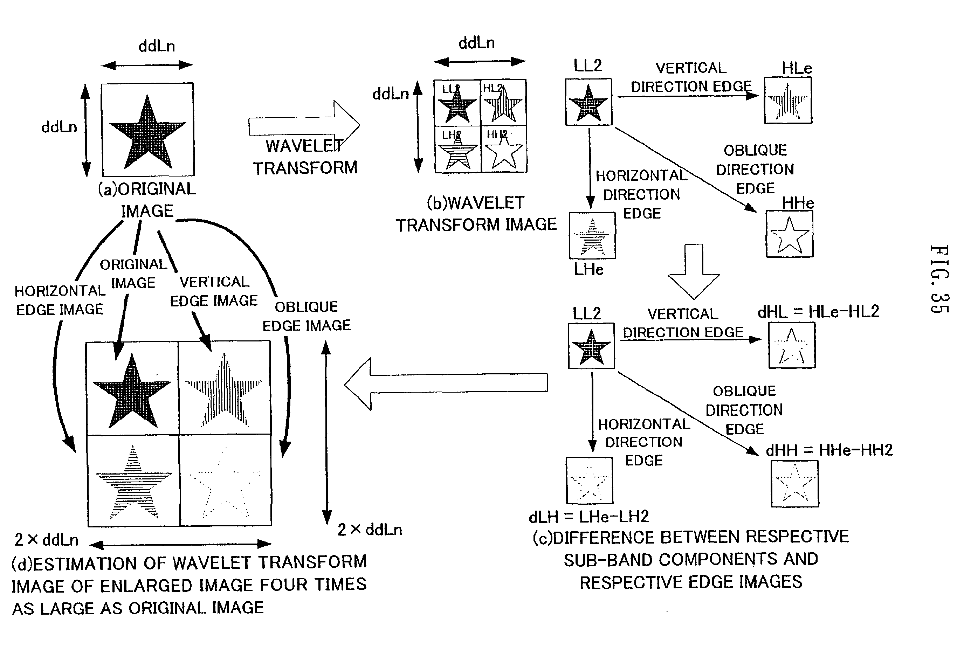

FIG. 35 schematically shows the outline of the processing at image enlarging means 290A.

In Embodiment 17, the edge image in the vertical direction, the edge image in the horizontal direction and the edge image in the oblique direction, which were obtained from a current object image LL1, are taken as the sub-band components HL1, LH1, HH1 that are short in the Wavelet transformed image of the image LL0 obtained by enlarging the current object image by four times. But strictly speaking, this is not applicable to filtering in FIG. 30.

For example, in case sub-band component HL1 is acquired from sub-band component LL0 by filtering, high frequency component data in the horizontal direction and low frequency component data in the vertical direction are extracted as HL1 component by filtering in FIG. 30. Because of that, in the HL1 component, there are extracted a picture element portion where the value fluctuates violently in the horizontal direction (edge etc. extending in the vertical direction) and a picture element portion where the value fluctuation is small in the vertical direction. In Embodiment 17, it is thought that of those portions, the picture element portion where the value change is great in the horizontal direction, that is, the edge portion extends in the vertical direction has a great effect, and edge information in the vertical direction only is taken as HL1 component. In some images handled, there are cases where the effect of the image portion in which the value change is small in the vertical direction can not be ignored. Furthermore, edge information in the vertical direction contains plenty of the picture element portion where the value change is great in the horizontal direction but, strictly speaking, that is not always true. This is also applicable to other sub-band components LH1, HH1.

In consideration of that, in the present embodiment, it is decided to prepare sub-band components LL2, HL2, LH2, HH2 by Wavelet-transforming the current object image and thus lowering the components by one level. And the correction amounts dHL, dLH, dHH for estimating the sub-band components corresponding to the three edge images of the original object image are found from the correlation among the edge images HLe, LHe, HHe in three direction of the low frequency component LL2 in three directions in those sub-band components and the actual three sub-band components HL2, LH2, HH2.

First, there is provided an arrangement formed of Reference Components (RC) generating means 70A, correction estimating means 70B, and component estimating means 70C as shown in FIG. 34. And means 702 for generating reference HL component detects edge information in the vertical direction using a filter as shown in FIG. 33 (b) with attention paid to the LL2 component that is present in the low frequency area and expresses the features of the original image more suitable than the sub-band components LL2, HL2, HH2. That edge information will be named reference HL component HLe. HL correction estimating means 705 checks the correlation between the reference HL component HLe and HL2 obtained by leveling down means 701.

There are a number of methods for finding that correlation. Here, difference image dHL between reference HL component HLe and actual HL component HL2, that is, dHL = HLe - HL2, will be found as shown in FIG. 35 (c). Means 703 for generating reference LH component and means 704 for generating reference HH component, too, select edge information in the horizontal direction of the LL2 component as reference LH component LHe and edge information in the oblique direction of the LL2 component as reference HH component. LH correction estimating means 706 finds the difference image dLH = LHe - LH2 between reference LH component LHe and actual LH component LH2. HH correction estimating means 707 finds the difference dHH = HHe - HH2 between the reference HH component HHe and actual HH component HH2.

And as in Embodiment 17, HL component estimating means 708, LH component estimating means 709 and HH component estimating means 710 firstly enlarge the image of correction components dHL, dLH, and dHH to the components with ddLn picture elements x ddLn picture elements. Next, means 708, 709 and 710 subtract the correction components dHL, dLH, and dHH from above-mentioned edge components of HL1, LH1, HH1 obtained by VEd generating means 2900, HEd generating means 2901 and OEd generating means 2902 respectively, and estimates HL1, LH1, HH1 components at the time when the original image regulated to ddLn picture elements x ddLn picture elements by input fine-adjustment means 700 is taken as sub-band component LL1. HL component estimating means 708, LH component estimating means 709 and HH component estimating means 710 do fine-adjustment by interpolating between the respective picture elements in accordance with Formula 1 so that the picture element size of each corrected image will be ddLn picture elements x ddLn picture elements when the above-mentioned correction components dHL, dLH, dHH are used. But this is not the only way, but other methods are possible to apply including a conventional method of enlarging the image size twice both in the horizontal direction and the vertical direction by embedding the shortage component with 0 in the area where the frequency is transformed.

But it takes long to embed 0 in shortage areas and to perform enlargement by inverse Wavelet transform using the sub band component. In consideration of processing efficiency, simple interpolation is better and could have little effect on the picture quality of the finished enlarged image. For this reason, HL component estimating means 708, LH component estimating means 709 and HH component estimating means 710 are to adopt a linear interpolation method as in Formula 1.

Processing step by leveling up means 2903 and after that is the same as in Embodiment 17.

In the above description, estimation by HL component estimating means 708, LH component estimating means 709 and HH component estimating means 710 is made by adding the difference components between reference components and actual components. In addition to that, the following methods are well suitable.

(1) The correction amounts obtained at HL correction estimating means 705, LH correction estimating means 706 and HH correction estimating means 707 are multiplied by a transform coefficient matrix. The products are added to the component values of VdE generating means 2900, HEd generating means 2901, and OEd generating means 2902 respectively.

(2) The correction amounts obtained by HL correction estimating means 705, LH correction estimating means 706 and HH correction estimating means 707 are transformed by the transform function. The results are added to the results of VdE generating means 2900, HEd generating means 2901 and OEd generating means 2902 respectively.

(3) A neural network model is used which has so learned as to input in the neutral network the results of HL correction estimating means 705, LH correction estimating means 706, HH correction estimating means 707, and VdE generating means 2900, HEd generating means 2901, and OEd generating means 2902 and to output the estimated values of HL, LH, HH.

(4) The HL, LH, HH components are estimated from a large amount of data base or rule base prepared in advance by inputting the results of HL correction estimating means 705, LH correction estimating means 706, HH correction estimating means 707, and VdE generating means 2900, HEd generating means 2901, and OEd generating means 2902.

According to the present embodiment, shortage sub-band components, especially high frequency components in Wavelet transform images, - which can not be taken out merely by edge detection in three directions of a regulated original image in Embodiment 17 - can be estimated with high precision and thus the blurring of an image can be kept down. Furthermore, Wavelet transform does not require block division as in orthogonal transform and there arises no block distortion, which is the problem encountered with the prior art method using orthogonal transform.

Embodiment 19

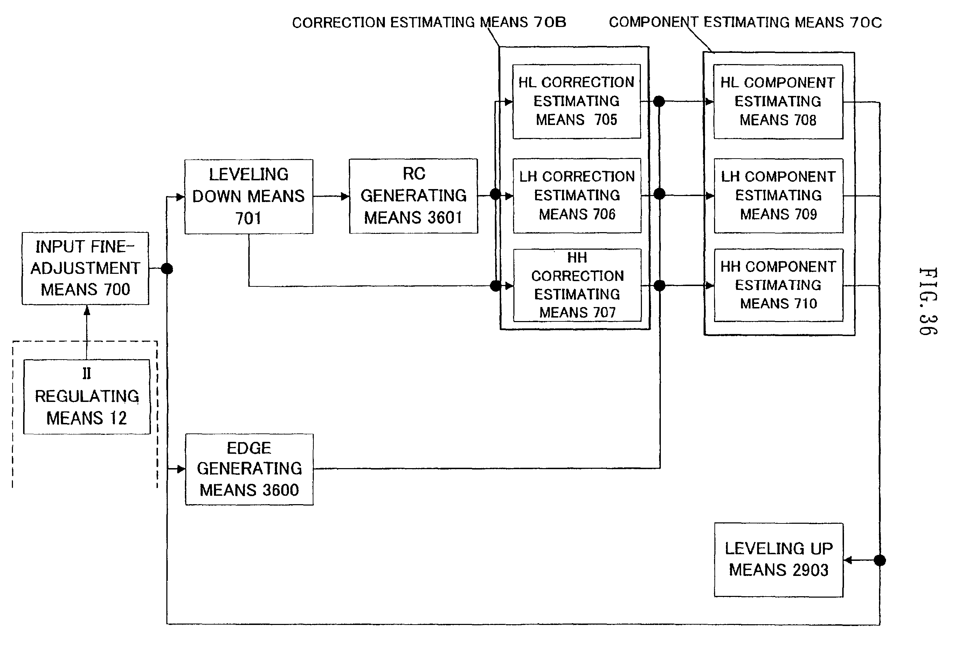

FIG. 36 shows the arrangement of image enlarging means 290A of the image processing device of Embodiment 19, and there will be described the operation of this image processing device.

The processing steps by image input means 10 and II regulating means 12 is the same as that in Embodiment 17, and the processing by input fine-adjustment means 700 is also identical with that in Embodiment 18.

Reference Components (RC) generating means 3601 finds reference components to determine the respective correction amounts which are used in estimation - of HL, LH, HH components - from LL2 in the low frequency area in a sub-band component image obtained by leveling down means 701 - the estimation made by HL component estimating means 708, LH component estimating means 709 and HH estimating means 710. Here, a Laplacian filter as shown in FIG. 18 (a)(b) is used, and the typical edge image of LL2 will be taken as the reference component image. The Laplacian filter is often used for detection of edges where not so much restriction is imposed on the direction, and not edges in a specific direction, as explained in Fig 33.

With this edge as reference component image, the present embodiment finds the correction amount as in Embodiment 18. This way, the repeating of the edge detection procedure as pointed out in Embodiment 18 can be reduced, and thus the processing is made efficient.

As in Embodiment 18, HL correction estimating means 705, LH correction estimating means 706 and HH correction estimating means 707 find the respective difference images dHL2, dLH2, dHH2 between the edge image obtained by RC generating means 3601 and HL2, LH2, HH2 obtained by leveling down means 701 (see FIG. 35 (c)), and each difference image is regulated to an image having ddLn picture elements x ddLn picture elements by linear approximation as in Formula 1.

Meanwhile, edge generating means 3600 detects an edge image using a Laplacian filter from an original image of ddLn picture elements x ddLn picture elements regulated by II regulating means 12. And HL component estimating means 708, LH component estimating means 709 and HH component estimating means 710 add correction images obtained by HL correction estimating means 705, LH correction estimating means 706 and HH correction estimating means 707 to the edge image whereby the respective sub-band components HL1, LH1, HH1 can be estimated with high precision.

That way, it is possible to clearly estimate an enlarged image of (2 x ddLn) picture elements x (2 x ddLn) picture elements. If interpolation and thinning out of a number of picture elements are added to that, an enlarged image having a desired size Ln picture elements x Ln picture elements can be obtained with high precision.

In addition to estimation by HL component estimating means 708, LH component estimating means 709 and HH component estimating means 710 as explained in Embodiment 18, it is possible to use the product of the correction amounts - by HL correction estimating means 705, LH correction estimating means LH correction estimating means 706, HH correction estimating means 707 - multiplied by a certain transform coefficient matrix or the results of transform by the transform function.

Embodiment 20

FIG. 37 shows the arrangement of the image processing device of Embodiment 20.

The outline of the present embodiment is this. The number of picture elements to be enlarged is not known in advance, and an original image is enlarged twice both in the horizontal and vertical directions in accordance with multiple resolution analysis by Wavelet transform, and the enlarged image is shown to the user. And this process will be repeated until the user finds a desired one.

An original image of a size n picture elements x n picture elements inputted by image input means 10 is set as an enlargement object image by EP initializing means 3700. Then, ObI enlarging means 3701 enlarges the original image of a size n picture elements x n picture elements twice both in the horizontal direction and the vertical direction, that is, by four times. In this enlargement step, the enlargement object image can always be enlarged to a size of four times as many picture elements by using image enlargement means in the image processing devices described in Embodiments 17, 18 and 19.

Enlarged image presenting means 1302 shows to the user the current enlarged image obtained by ObI enlarging means 3701 on CRT etc. Providing a function of moving the visual point with a cursor etc. if the resolution of the image is exceeded that of CRT etc., a function of cutting out a specific part from the image would help the user to judge if the displayed enlarged image is just a needed one.

Receiving the instruction from the user, MP ending judge means 3703 refers the process to image fine-adjustment means 3704 if the image is of a desired size, and, if an indication is received that the size of the enlarged image is not a desired one, sets this enlarged image for next enlargement object image and returns the process to ObI enlarging means 3701.

Image fine-adjustment means 3704 asks the user if fine-adjustment is needed. Since multiple resolution analysis by Wavelet transform is used in image enlargement, the enlarged image is always four times as large as the image before the enlargement. The user may think that while the previous image is too small, the enlarged image is too large to display on CRT at a time. Image fine-adjustment means 3704 asks the user if the image size should be adjusted to some extent. If the user wants the image size to be enlarged a little, picture element interpolation is performed. If the user wishes to have the image slightly reduced in size, thinning out of picture elements will be performed. This way, the image size is re-adjusted.

For performing the picture element interpolation, an area - other than the edge - where the density change is small is selected. The same is the case with the thinning out.

Instead of the interpolation and thinning out, there is a technique in which the original image is transformed in a frequency area and shortage components are added or excessive components are taken out from the high frequency. A proper technique is selected with the processing time, CPU capacity etc. taken into consideration.

EsEI output means 1214 outputs an enlarged image obtained by image fine-adjustment means 3704, that is, to display the image on CRT etc., to print it out or refers it to other devices.

According to the present embodiment, as set forth above, a detailed enlarged image obtained is shown to the user who judges if the size and resolution are just right. After the user finds the image a desired one, a series of enlargement steps can be suspended, and there is no need to set the enlargement ratio in advance and it is possible to enlarge an image simply to a size as desired by the user.

Embodiment 21

Finally, there will be explained the image processing device of Embodiment 21. The present embodiment is an invention related to efficiency of estimating an enlarged image of a color original image.

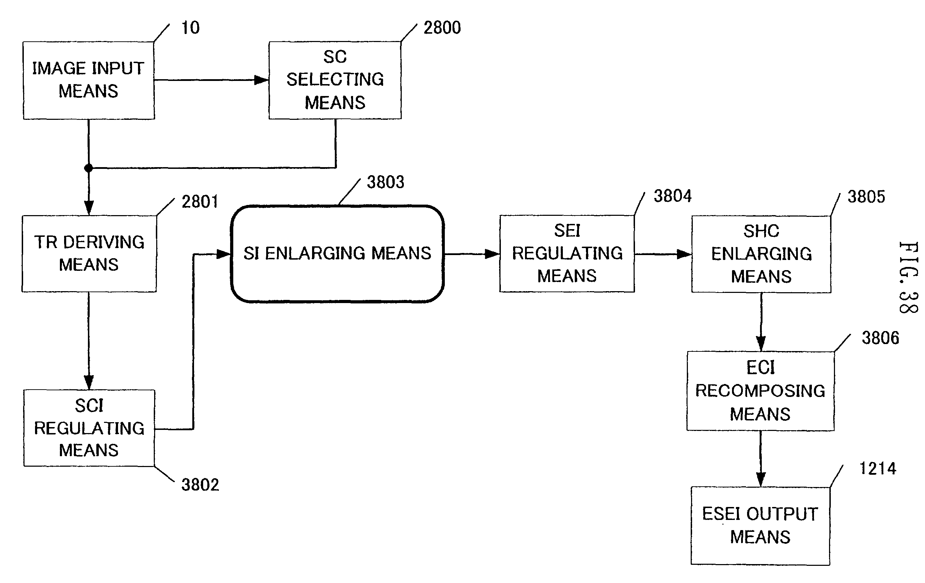

FIG. 38 is a block diagram showing the arrangement of an image processing device of this embodiment, and there will be described the operation of this image processing device.

First, from a color original image inputted by image input means 10, SC selecting means 2800 selects the green component as standard color component. And TR depriving means 2801 finds simple ratio ratio_r of the red component and ratio_b of the blue component to the green component. This process is the same as that in Embodiment 16 and will not be explained.

Then, as the image processing devices in Embodiments 17, 18 and 19 of the present invention, Standard Component Image (SCI) regulating means 3802 and Standard Image (SI) enlarging means 3803 enlarge the standard color component or the green component. And an enlarged image of the standard color thus obtained is subjected to picture element interpolation or thinning out by Standard Enlarged Image (EI) regulating means 3804 so as to obtain a desired image size Ln picture elements x Ln picture elements. Furthermore, Shortage Components (ShC) enlarging means 3805 multiplies the enlarged green component by the simple ratio ratio_r, ratio_b, thereby preparing data on the remaining red and blue components.

Enlarged Color Image (ECI) recomposing means 3806 combines these three enlarged components into one, thus producing an enlarged image of the color original image. EsEI output means 1214 outputs an enlarged image obtained by image fine-adjustment means 3704, that is, to display the image on CRT etc., to print it out or refers it to other devices.

Through that process, it is possible to simplify and speed up the processing, eliminating need of enlarging each of a plurality of components making up a color original image.

| | |
|---|---|
| 10 | image input means |
| 11 | Original Image (OI) orthogonal transforming means |
| 13 | High Frequency Component (HFC) encoding means |
| 14 | codes synthesizing means |
| 15 | storage medium |
| 16 | Low Frequency Component (LFC) decoding means |
| 17 | High Frequency Component (HFC) decoding means |
| 18 | Original Image (OI) output means |
| 100 | Low Frequency Component (LFC) extracting means |
| 101 | Reduced Image (RI) generating means |
| 102 | Reduced Image (RI) display means |
| 300 | Low Frequency Component (LFC) compressing means |
| 500 | Shortage Component (ShC) estimating means |
| 501 | Enlarged Image (EI) output means |
| 800 | Enlarged Frequency (EF) estimating means |
| 802 | multiple image encoding means |
| 803 | Multiple Codes (MC) synthesizing means |
| 804 | Basic Components(BC) decoding means |
| 805 | Object Frequency (ObF) decoding means |
| 806 | Object Images (ObI) output means |
| 807 | Basic Components (BC) extracting means |
| 808 | Basic Images (BI) generating means |
| 809 | Basic Images (BI) display means |
| 1000 | Basic Components (BC) compressing means |
| 1100 | inter-picture element interpolating means |
| 1101 | convolution means |
| 1102 | convergence judging means |
| 120A | Enlarged Frequency (EF) estimating means |
| 1213 | inverse orthogonal transform means |
| 1214 | Estimated Enlarged Images (EsEI) output means |
| 1200 | Approximate Coefficient (AC) deriving means |
| 1201 | non-linear estimating means |
| 1600 | edge generating means |
| 120B | Enlarged Edge (EEd) estimating means |
| 1601 | Enlarged Edge (EEd) approximating means |
| 1602 | Edge Frequency (EdF) generating means |
| 1603 | Low Frequency Component (LFC) substituting means |
| 1900 | Edge Image (EdI) orthogonal transforming means |
| 1901 | Edge Frequency (EdF) estimating means |
| 2300 | block dividing means |
| 2301 | Block Images (BI) orthogonal transforming means |
| 2302 | Enlarged Block Images (EBI) frequency estimating means |

| | |
|---|---|
| 2303 | Block (B) frequency extracting means |
| 2304 | block inverse orthogonal transform means |
| 2305 | Enlarged Image (EI) recomposing means |
| 2500 | Block (B) data transforming means |
| 2800 | Standard Component (SC) selecting means |
| 2801 | Transform Ratio (TR) deriving means |
| 2802 | Standard Image (SI) orthogonal transforming means |
| 2803 | Standard Enlarged Frequency (SEF) estimating means |
| 2804 | Standard Inverse (SI) orthogonal transforming means |
| 2805 | Shortage Component (ShC) enlarging means |
| 2806 | Enlarged Color Image (ECI) recomposing means |
| 12 | Input Image (II) regulating means |
| 290A | image enlarging means |
| 2913 | Enlarged Image (EI) regulating means |
| 2900 | Vertical Edge (VdE) generating means |
| 2901 | Horizontal Edge (HEd) generating means |
| 2902 | Oblique Edge (OEd) generating means |
| 2903 | leveling up means |
| 700 | input fine-adjustment means |
| 701 | leveling down means |
| 70A | Reference Component (RC) generating means |
| 702 | means for generating reference HL component |
| 703 | means for generating reference LH component |
| 704 | means for generating reference HH component |
| 70B | correction estimating means |
| 705 | HL correction estimating means |
| 706 | LH correction estimating means |
| 707 | HH correction estimating means |
| 70C | component estimating means |
| 708 | HL component estimating means |
| 709 | LH component estimating means |
| 710 | HH component estimating means |
| 3600 | edge generating means 3600 |
| 3601 | Reference Components (RC) generating means |
| 3700 | Enlarging Process (EP) initializing means |
| 3701 | Object Images (ObI) enlarging means |
| 3702 | Enlarged Images (EI) presenting means |
| 3703 | Multiple Processing (MP) ending judge means |
| 3704 | image fine-adjustment means |
| 3802 | Standard Component Image (SCI) regulating means |
| 3803 | Standard Image (SI) enlarging means |
| 3804 | Standard Enlarged Image (SEI) regulating means |
| 3805 | Shortage Components (ShC) enlarging means |
| 3806 | Enlarged Color Image (ECI) recomposing means |
| 3900 | compressing means |
| 3901 | quantization table |
| 3902 | entropy encoding table |
| 3903 | expanding means |
| 3904 | means for thinning out images |
| 3905 | means for displaying reduced image |
| 3906 | DCT transform means |
| 3907 | quantization means |
| 3908 | entropy encoding means |
| 3909 | IDCT transform means |
| 3910 | inverse quantization means |
| 3911 | entropy decoding means |
| 3912 | Original Image (OI) output means |
| 4000 | "0" component embedding means |

## EP 1 164 781 A1

4001      inverse orthogonal transform means
4002      Estimated Enlarged Image (EsEI) output means

**Claims**

1. An image processing device for processing image data inputted by image inputting means, said device comprising:

   Original Images orthogonal transforming means for performing orthogonal transform on said image data to generate the frequency components of an original image,
   Low Frequency Components extracting means for extracting the low frequency components from said frequency components of the original image,
   High Frequency Components encoding means for finding and encoding relation information between said low frequency and the remaining high frequency components of said frequency components of the original image, and
   Codes Synthesizing means for synthesizing said low frequency components and said relation information and generating simplified image data.

2. The image processing device of claim 1 which comprises:

   Low Frequency Components compression means for compressing the data size of said low frequency components and
       wherein said Codes Synthesizing means synthesizes the low frequency components compressed by said Low Frequency Components compression means and said relation information and generates simplified image data.

3. The image processing device of claim 1 further comprising storage medium for storing said simplified image data.

4. The image processing device of claim 1 further comprising:

   Reduced Images generating means for generating reduced images by performing inverse orthogonal transform on said low frequency components corresponding to a reduction size specified in advance, and
   Reduced Images displaying means for displaying said reduced images.

5. An image processing device which comprises:

   Low Frequency Components decoding means for extracting low frequency components from the simplified image data obtained by synthesizing the low frequency components extracted from the frequency components of an original image obtained by performing orthogonal transform on the original image and the relation information between said low frequency components and the remaining high frequency components, and
   High Frequency Components decoding means for taking out said relation information from said simplified image data and decoding the high frequency components on the basis of said low frequency components, and said relation information and,
   Original Images outputting means for combining said low frequency components and said high frequency components, performing inverse orthogonal transform, and restoring and outputting the original image.

6. The image processing device of claim 5 for taking out said simplified image data from the storage medium.

7. An image processing device for processing image data inputted by image inputting means, said device comprising:

   Original Images orthogonal transforming means for performing orthogonal transform on said image data to generate the frequency components of an original image,
   Shortage Components estimating means for estimating from said frequency components of the original image the shortage frequency components when the original image is enlarged in accordance with a desired enlargement ratio,
   Basic Components extracting means for extracting frequency components - as basic components - necessary for restoring a basic image with the size specified in advance from said frequency components of the original image and said estimated frequency components,

Multiple Image encoding means for finding and encoding the relation information between said basic components and said estimated frequency components, and

Multiple Codes Synthesizing means for synthesizing said basic components and said relation information and generating multiple simplified image data.

**8.** The image processing device of claim 7 which comprises:

Basic Components compression means for compressing the data size of said basic components, and

Codes Synthesizing means for synthesizing the basic components compressed by Basic Components compression means and said relation information and generating the simplified image data.

**9.** The image processing device of claim 7 which comprises a storage medium for storing said multiple simplified image data.

**10.** The image processing device of claim 7 which comprises:

Basic Images generating means for generating basic images by performing inverse orthogonal transform on said basic components, and

Basic Images displaying means for displaying said basic images.

**11.** An image processing device which comprises:

Basic Components decoding means for taking out basic components from multiple simplified image data generated on the basis of basic components extracted from the frequency components of a plurality of images of enlarged sizes to restore a basic image with the size specified in advance and the relation information between said basic components and the remaining high frequency components of the enlarged image,

Object Frequency decoding means for taking out the relation information between said basic components and high frequency components of an enlarged image of a desired size from said multiple simplified image data and decoding said high frequency components on the basis of said basic components and said relation information, and

Object Images outputting means for combining said basic components and said high frequency components, performing inverse orthogonal transform, and restoring and outputting said enlarged image of the desired size.

**12.** The image processing device of claim 11 wherein said multiple simplified image data is taken out from said memory medium.

**13.** The image processing device of claim 12 wherein the data starts to be taken out from said memory medium on the basis of an instruction signal from the user.

**14.** An image processing device for processing image data inputted by image inputting means, said device comprising:

Inter-picture element interpolating means for performing interpolation between picture elements on said image data in accordance with a desired enlargement ratio

Convolution means for convoluting the interpolated enlarged image obtained by said inter-picture element interpolating means,

Convergence judging means for judging if pre-set convergence conditions are satisfied on the basis of the difference between the mean values of convolution values of the enlarged image obtained at the k-th convolution and the enlarge image obtained at the (K - 1)-th convolution, and

Enlarged Images output means for outputting the enlarged image obtained at the k-th convolution in case Convergence judging means judges that the convergence conditions are satisfied.

**15.** An image processing method which comprises the steps of:

low frequency component extracting for extracting low frequency components from the frequency components of a specific image,

high frequency component encoding for finding relation information between said low frequency components and the remaining high frequency components, and

simplified image synthesizing for synthesizing said low frequency components and said relation information to generate simplified image data.

16. An image processing method which comprises the steps of:

low frequency component extracting for extracting low frequency components from the frequency components of a specific image,
high frequency component encoding for finding relation information between said low frequency components and the remaining high frequency components,
synthesizing for synthesizing said low frequency components and said relation information to generate simplified image data,
decoding for decoding said low frequency components and said relation information from said simplified image data, and
image outputting for combining said decoded low frequency components and said relation information, performing inverse orthogonal transform, then outputting said specific image.

17. An image processing method which comprises a step of:

basic component extracting for extracting low frequency components - as basic component - that can be regarded as common to the images of the respective sizes from the frequency components of an image of a specific size and enlarged images of said image of the specific size,
multiple image encoding for finding the relation information between said basic component and the remaining high frequency components of the respective enlarged images, and
multiple simplified image synthesizing for synthesizing said basic component and said relation information to generate multiple simplified image data.

18. An image processing method which comprises the steps of:

basic component extracting for extracting low frequency components - as basic component - that can be regarded as common to the images of the respective sizes from the frequency components of an image of a specific size and a plurality of enlarged images of said image of the specific size,
multiple encoding for finding the relation information between said basic component and the remaining high frequency components of the respective enlarged images,
object frequency decoding for decoding said basic components and said relation information from the multiple simplified image data obtained by synthesizing said basic components and said relation information, and
image outputting for enlarging said specific image to a desired size by combining said decoded basic components and said relation information and performing inverse orthogonal transform and then outputting said enlarged image.

19. A recorded medium on which a program is recorded, said program extracting low frequency components from the frequency components of a specific image, finding the relation information between said low frequency components and the remaining high frequency components, synthesizing said low frequency components and said relation information to generate simplified image data.

20. A recorded medium on which a program is recorded, said program extracting low frequency components from the frequency components of a specific image, finding the relation information between said low frequency components and the remaining high frequency components, generating simplified image data by synthesizing said low frequency components and said relation information and at the same time decoding said low frequency components and said relation information from said simplified image data, combining said decoded low frequency components and said relation information, and performing orthogonal transform, thereby outputting said specific image.

21. A recorded medium on which a program is recorded, said program extracting low frequency components - that can be regarded as common to the images of the respective sizes - as basic components from the frequency components of an image of a specific size and enlarged images of said image of the specific size, finding the relation information between said basic components and the remaining high frequency components, and synthesizing said basic components and said relation information, thereby generating multiple simplified image data.

22. A recorded medium on which a program is recorded, said program extracting low frequency components - that can be regarded as common to images of the respective sizes - as basic components from an image of a specific size and the frequency components of a plurality of enlarged images, finding the relation information between said basic components and the remaining high frequency components of the respective enlarged images, and decoding said basic components and said relation information from multiple simplified image data obtained by synthesizing said basic components and said relation information, and at the same said combining decoded basic components and said relation information and enlarging said specific image to a desired size by performing inverse orthogonal transform, and then outputting said specific image.

23. An image processing device for acquiring an enlarged image by enlarging a specific image data to a desired enlargement size, said device comprising:

Original Images orthogonal transforming means for generating the frequency components of an original image by performing orthogonal transform on said specific image data,
Enlarged Frequency estimating means for estimating the frequency components of said enlarged image by performing nonlinear interpolation on said original image frequency components, and
Inverse orthogonal transform means for acquiring an enlarged image data by performing inverse orthogonal transform corresponding to said enlargement size on said estimated frequency components of the enlarged image.

24. An image processing device for acquiring an enlarged image by enlarging a specific image data to a desired enlargement size, said device comprising:

Original Images orthogonal transforming means for generating the frequency components of an original image by performing orthogonal transform on said specific image data,
Edge Generating means for generating edge image data of said specific image data by performing a specific edge detection on said specific image data,
Enlarged Edge estimating means for estimating the frequency components of an enlarged edge image on the basis of said edge image data,
Low Frequency Component substituting means for generating substituted frequency components by substituting the low frequency area of the frequency components of said estimated enlarged edge image with said original image frequency components and
Inverse orthogonal transform means for acquiring said enlarged image by performing inverse orthogonal transform on said substituted frequency components.

25. The image processing device of claim 24 wherein said Enlarged Edge estimating means is provided with:

Enlarged Edge approximating means for estimating the edge image data of said enlarged image by performing linear approximation on said edge image data, and
Edge Frequency generating means for finding the frequency components of said edge image data of said enlarged image by orthogonal transform.

26. The image processing device of claim 24 wherein said Enlarged Edge estimating means is provided with:

Edge Images orthogonal transforming means for generating the frequency components of said edge image data by orthogonal transform and
Edge Frequency estimating means for estimating the frequency components of edge image data after enlargement on the basis of the frequency components of said generated edge image data.

27. The image processing device of claim 25 wherein said Edge Frequency generating means estimates the frequency components of the edge image data after enlargement by performing linear interpolation on the frequency components of the edge image data obtained by said Original Images orthogonal transforming means.

28. The image processing device of claim 25 wherein said Edge Frequency estimating means estimates the frequency components of the edge image data after enlargement by applying a nonlinear interpolation technique to the frequency components of the edge image data obtained by Original Images orthogonal transforming means.

29. An image processing device for acquiring an enlarged image by enlarging a specific image data to a desired enlargement size, said device comprising:

Block dividing means for dividing said specific image data into a plurality of overlapped blocks,

Block Images Orthogonal transform means for generating the frequency components of images within the blocks by performing orthogonal transform on the images within the blocks obtained by said block dividing means,

Enlarged Block Images frequency estimating means for estimating the frequency components of enlarged images of the images within the blocks on the basis of the frequency components of said images within the blocks,

Block frequency extracting means for extracting frequency components within the blocks from said estimated frequency components, said frequency components being necessary for said enlarged image,

Block Inverse orthogonal transform means for acquiring an enlarged block image by performing inverse orthogonal transform-corresponding to the size of said frequency components within the blocks-on said frequency components within the blocks, and

Enlarged Images recomposing means for acquiring said enlarged image by combing a plurality of said enlarged blocks.

30. An image processing device for acquiring an enlarged image by enlarging a specific image data to a desired enlargement size, said device comprising:

Block dividing means for dividing said specific image data into a plurality of not overlapped blocks,

Block data transforming means for transforming said image data within the blocks on the basis of a specific transform function so that specific border conditions are satisfied on the border of said blocks,

Block Images Orthogonal transform means for generating the frequency components of the images within the blocks by performing orthogonal transform on said transformed image data within the blocks,

Enlarged Block Images frequency estimating means for estimating the frequency components of enlarged images of the images within the blocks on the basis of the frequency components of said images within the blocks,

Block inverse orthogonal transform means for acquiring an enlarged block image by performing orthogonal transform - corresponding to the frequency component size of said enlarged images - on the frequency components of said estimated enlarged images, and

Enlarged Images recomposing means for acquiring said enlarged image by combining a plurality of said enlarged block images.

31. An image processing device for acquiring an enlarged image by enlarging a specific image data to a desired enlargement size, said device comprising:

Shortage Component enlarging means component for selecting a standard from among the color components making up said color image,

Transform Ratio deriving means for deriving the transform ratio which is used when data on the other color components is derived from said basic component data,

Standard Image orthogonal transforming means for generating the frequency component of the basic component by performing orthogonal transform on said basic component data,

Standard Enlarged Frequency estimating means for estimating the frequency components of an enlarged image from the frequency components of said standard component,

Standard Inverse orthogonal transforming means for acquiring the enlarged image data of the standard component by performing inverse orthogonal transform - corresponding to the frequency component size of said enlarged image - on the frequency component of the enlarged image of said standard component,

Shortage Component enlarging means for estimating the other color component data in said enlarged image on the basis of the enlarged image data of said standard component and said transform ratio,

Enlarged Color Image recomposing means for generating said enlarged image by synthesizing the enlarged image data of said standard component and said other color component data.

32. An image processing method for acquiring an enlarged image by enlarging a specific image data to a desired enlargement size, said method comprising the steps of:

original image orthogonal transforming for performing orthogonal transform on said specific image data to generate the frequency components of the original image,

enlarged frequency estimating for estimating the frequency components of said enlarged image by performing nonlinear interpolation on the frequency component of said original image, and

inverse orthogonal transforming for performing inverse orthogonal transform - corresponding to said enlarged size - on the frequency components of said estimated enlarged image to acquire enlarged image data.

33. An image processing method for acquiring an enlarged image by enlarging a specific image data to a desired enlargement size, said method comprising the steps of:

original image orthogonal transforming for performing orthogonal transform on said specific image data to generate the frequency components of an original image,
edge generating for generating the edge image data of said specific data by a specific method,
enlarged edge estimating for estimating the edge image data of said enlarged image by performing linear approximation on said edge image data,
edge image frequency generating for finding the frequency component of the edge image data of said enlarged image by orthogonal transforming step,
low frequency substituting for generating a substituted frequency component by substituting the low frequency area of the frequency component of said edge image data with said original image frequency component, and
inverse orthogonal transforming for inverse orthogonal transforming said substituted frequency component.

34. An image processing method for acquiring an enlarged image by enlarging a specific image data to a desired enlargement size, said method comprising the steps of:

original image orthogonal transforming for performing orthogonal transform on said specific image data to generate an original image frequency component,
edge generating for generating the edge image data of said specific image data by a specific method,
edge image orthogonal transforming for generating the frequency component of said edge image data by orthogonal transforming,
edge frequency estimating for estimating the frequency component area of the edge image after enlargement on the basis of the frequency components of said generated edge image, and
low frequency substituting for substituting the low frequency area of the frequency component of said edge image after enlargement with said original image frequency component.

35. The image processing method of claim 34 wherein said edge frequency estimating step estimates the frequency component of the edge image data after enlargement by performing linear approximation on the frequency component of the edge image data obtained in said original image orthogonal transforming.

36. The image processing method of claim 34 wherein said edge frequency estimating step estimates the frequency component of the edge image data after enlargement by applying a nonlinear interpolation technique on the frequency component of the edge image data obtained in said original image orthogonal transforming step.

37. An image processing method for acquiring an enlarged image by enlarging a specific image data to a desired enlargement size, said method comprising the steps of:

block dividing for dividing said specific image data into a plurality of overlapped blocks,
image orthogonal transforming for generating the frequency components of the images within the blocks by performing orthogonal transform on the images within said blocks obtained in said block dividing step,
enlarged block image frequency estimating for estimating the frequency components of the enlarged images of the images within the blocks on the basis of the frequency components of the images within the blocks,
in-block frequency extracting for extracting the frequency component within the block - necessary for said enlarged images - from said estimated frequency components,
block orthogonal transforming for acquiring enlarged block images by performing inverse orthogonal transform - corresponding to the sizes of the frequency components within said blocks - on said frequency components with the blocks, and
enlarged image composing for acquiring said enlarged images by combing a plurality of said enlarged block images.

38. An image processing method for acquiring an enlarged image by enlarging a specific image data to a desired enlargement size, said method comprising the steps of:

block diving for dividing said specific image data into a plurality of not overlapped blocks,

in-block data transforming for transforming the image data within said blocks on the basis of a specific transform function so that specific border conditions are satisfied on the border of said blocks,

block image orthogonal transforming for generating the frequency components of the images within the blocks by performing orthogonal transform on said transformed image data within the blocks,

enlarged block image frequency estimating for estimating the frequency components of the enlarged images within the blocks on the basis of the frequency components of the images within said blocks,

block inverse orthogonal transforming for acquiring enlarged images by performing inverse orthogonal transform - corresponding to the frequency component sizes of said enlarged images - on the frequency components of said estimated enlarged images, and

image composing for acquiring said enlarged images by combining a plurality of said enlarged block images.

39. An image processing method for acquiring an enlarged image by enlarging a specific image data to a desired enlargement size, said method comprising the steps of:

standard component selecting for selecting a standard color component within the color components making up said specific color image,

transform ratio deriving for deriving the transform ratio which is used when the other color component data are derived from said standard component data,

standard image orthogonal transforming for generating the frequency component of the standard component by performing orthogonal transform on the data of said basic component,

standard enlarged frequency estimating for estimating the frequency components of the enlarged images from the frequency component of said standard component,

standard inverse orthogonal transform for acquiring the enlarged image data of the standard component by performing inverse orthogonal transform - corresponding to the size of the frequency component of said enlarged image- on the frequency component of the enlarged image of said standard component,

shortage component enlarging for estimating the other color component data in said enlarged image on the basis of the enlarged image data of said standard component and said transforming ratio, and

enlarged color image re-composing for generating said enlarged image by synthesizing the enlarged image data of said standard component and said other color component data.

40. A recorded medium on which a program is recorded, said program - when obtaining an enlarged image by enlarging a specific image data to a desired enlargement size - generating the frequency component of an original image by performing orthogonal transform on said specific image data, estimating the frequency component of said enlarged image by performing nonlinear interpolation on said original image frequency component, and performing inverse orthogonal transform corresponding to said enlarged size on the frequency component of said estimated enlarged image, thereby acquiring said enlarged image.

41. A recorded medium on which a program is recorded, said program - when obtaining an enlarged image by enlarging a specific image data to a desired enlargement size - generating the frequency component of an original image by performing orthogonal transform on said specific image data and at the same time generating the edge image data of said specific image data by a specific method, estimating the enlarged image by performing linear approximation on said edge image data, finding the frequency component of the edge image data of said enlarged image by orthogonal transform, generating a substituted frequency component by substituting the low frequency area of said frequency component the enlarged edge image with said original image frequency component, and performing inverse orthogonal transform on said substituted frequency component, thereby acquiring said enlarged image.

42. A recorded medium on which a program is recorded, said program - when obtaining an enlarged image by enlarging a specific image data to a desired enlargement size - generating the frequency component of the original image by performing orthogonal transform on said specific image data and at the same time generating the edge image data of said specific image data by a specific method, generating the frequency component of said edge image data by orthogonal transform, estimating the frequency area of the edge image after enlargement on the basis of the frequency component of said edge image, and substituting the low frequency area of the frequency component of said edge image after enlargement with said original image frequency component.

43. A recorded medium on which a program is recorded, said program - when obtaining an enlarged image by enlarging a specific image data to a desired enlargement size - dividing the specific image data into a plurality of overlapped blocks, generating the frequency components of the images within the blocks by performing orthogonal transform on the images within the blocks thus obtained, estimating the frequency components of enlarged images within the blocks on the basis of the frequency components of the images within said blocks and at the same time extracting the frequency components within blocks necessary for said enlarged images from said estimated frequency components, acquiring enlarged block images by performing inverse orthogonal transform-corresponding to the sizes of the frequency components within said blocks - on said frequency components within the blocks, and combing a plurality of said enlarged block images, thereby acquiring said enlarged image.

**44.** A recorded medium on which a program is recorded, said program - when obtaining an enlarged image by enlarging a specific image data to a desired enlargement size - dividing the specific image data into a plurality of not overlapped blocks, transforming the image data within said blocks on the basis of a specific transform function so that specific border conditions are satisfied on the border of said block, generating the frequency components of images within the blocks by performing orthogonal transform on said transformed image data within the blocks, and at the same time estimating the frequency components of the enlarged images of the images within the blocks on the basis of the frequency components within said images within the blocks, acquiring enlarged block images by performing inverse orthogonal transform - corresponding to the frequency component size of said enlarged images - on said enlarged image frequency components, and combining a plurality of said enlarged block images, thereby obtaining said enlarged image.

**45.** A recorded medium on which a program is recorded, said program - when obtaining an enlarged image by enlarging a specific image data to a desired enlargement size - selecting a standard color component from among the color components making up said specific color image, deriving a transform ratio which is used when the other color component data are derived from said standard component data, generating the frequency component of the standard component by performing orthogonal transform on said standard component data, estimating the frequency component of the enlarged image from the frequency component of said standard component and at the same time acquiring the enlarged image data of the standard component by performing inverse orthogonal transform - corresponding to the frequency component size of said enlarged image - on the frequency components of said standard component, and estimating the other color component data in said enlarged image on the basis of the enlarged image data of said standard component and said transform ratio, thereby obtaining said enlarged image.

**46.** An image processing device for acquiring an enlarged image of Ln picture elements x Lm picture elements by enlarging an original image of n picture elements x m picture elements, said device comprising:

Inputted Images regulating means for interpolating or thinning out (hereinafter both expressed as regulate) said original image to Ln/2 picture elements x Lm/2 picture elements and
Image enlarging means for generating an enlarged image by applying an enlargement technique based on Wavelet transform on the image regulated by Inputted Images regulating means .

**47.** An image processing device for acquiring an enlarged image by enlarging an original image, said device comprising:

Enlarging Process initializing means for setting the original image as an enlargement object image,
Enlarging Object Images means for generating an enlarged image having four times as many picture elements by applying an enlargement technique based on Wavelet transform to said enlargement object image,
Multiple Processing ending judge means for setting said enlarged image - obtained from Enlarging Object Images means - as enlargement object image and returns the process to Enlarging Object Images means,
Enlarged Images presenting means for visually presenting an enlarged image obtained from Enlarging Object Images means,
Image fine-adjustment means for enlarging or reducing the enlarged image presented by said Enlarged Images presenting means,
Enlarged Images output means for outputting an image obtained from said image fine-adjustment means.

**48.** The image processing device of claim 46 or claim 47 wherein said Enlarging Object Images means comprising:

Edge generating means for generating edge images - in a plurality of specific directions - of an image regulated by said Inputted Images regulating means , and
Leveling up means for generating an image having four times as many picture elements by regarding said respective edge images and said regulated original image as sub-band components in Wavelet transform and by performing inverse Wavelet transform on said sub-band components.

**49.** The image processing device of claim 48 wherein a plurality of said directions are three directions - vertical, horizontal and oblique.

**50.** The image processing device of claim 46 or claim 47 wherein said Enlarging Object Images intializing means comprising:

Input fine-adjustment means for re-regulating the numbers of the picture elements of said regulated original image in the horizontal direction and the vertical direction to multiples of 2,

Leveling down means for generating a transformed image by performing Wavelet transform on said re-regulated original image,

Reference Components generating means for generating edge images - in a plurality of said specific directions - from a plurality of sub-band components situated in the of said transformed image,

Edge generating means for generating edge image - in plurality of specific direction - of image re-regulated be said Input fine-adjustment means,

Correction estimating means for finding the relation between said respective edge images and the sub-band components belonging to the low frequency space corresponding to said specific directions of said transformed images,

Component estimating means for estimating the respective sub-band components in Wavelet transform by correcting said respective edge image of re-regulated original image according to the results of said correction estimating means, and

Leveling up means for generating an enlarged image having four times as many picture elements by performing inverse Wavelet transform on said respective sub-band components and said re-regulated original image.

**51.** The image processing device of claim 50 wherein Reference Components generating means finds said edge image by Laplacian filter from the sub-band components situated in the low frequency area of said transformed image.

**52.** The image processing device of claim 46 or claim 47 wherein in case said Ln/2 picture elements and Lm/2 picture elements are integers, an inputted original image is regulated by said Inputted Images regulating means, and from the regulated image, said Enlarging Object Images means generates an enlarged image, and wherein in case at least one of Ln/2 picture elements and Lm/2 picture elements is not an integer, the inputted original image is regulated by said Inputted Images regulating means , and from the regulated image, said Enlarging Object Images means generates an enlarged image, and then the enlarged image obtained by Enlarging Object Images means is regulated to Ln picture elements x Lm picture elements by means for regulating enlarged image.

**53.** An image processing device for acquiring an enlarged image of Ln picture elements x Lm picture elements by enlarging a color image of n picture elements x m picture elements, said device comprising:

Standard Component selecting means for selecting a standard color component from among the components making up said color image,

Transform Ratio deriving means for deriving the transform ratio which is used when deriving the other color components from the standard color selected by said Standard Component selecting means,

Standard Component Image regulating means for regulating the standard color component of the inputted original image to Ln/2 picture elements x Lm/2 picture elements,

Standard Image enlarging means for generating a standard enlarged image by applying a method based on Wavelet transform to said regulated standard color component,

Standard Enlarged Image regulating means for regulating said standard enlarged image to a desired size Ln picture elements x Lm picture elements,

Shortage Component enlarging meanss for estimating the enlarged images of the other color components by applying said transform ratio to said regulated standard enlarged image, and

Enlarged Color Image recomposing means for generating said enlarged image by synthesizing said standard enlarged image and said enlarged images of the other color components.

**54.** The image processing device of claim 50 wherein said correction estimating means finds the difference image - as respective correction component image - between the edge images in said respective directions and the sub-band components belonging to the low frequency area corresponding to said specific directions of said transformed images, and wherein said component estimating means enlarges said respective correction component images to images with four times as many picture elements by liner interpolation, and adds the corresponding edge images to said correction component images.

**55.** An image processing method for acquiring an enlarged image of Ln picture elements x Lm picture elements by enlarging an original image of n picture elements x m picture elements, said method comprising the steps of:

inputted image regulating for regulating said original image to Ln/2 picture elements x Lm/2 picture elements, and

image enlargement for generating an enlarged image by applying an enlargement method based on Wavelet transform to the image regulated by Inputted Images regulating means .

**56.** An image processing method for acquiring an enlarged image by enlarging an original image, said method comprising the steps of:

enlargement initializing for initializing the enlargement process by setting the original image as enlargement object image,

object image enlarging for generating an enlarged image having four times as many picture elements by applying an enlargement method based on Wavelet transform to said enlargement object image,

multiple proceeding end judging for setting - as enlargement object image - the enlarged image obtained by said Enlarging Object Images means and returns the process to said Enlarging Object Images means

enlarged image presenting for visually presenting the enlarged image obtained by said Enlarging Object Images means,

image regulating for enlarging or reducing the enlarged image presented by said Enlarging Object Images means, and

enlarged image outputting for outputting the image obtained from said image fine-adjustment means.

**57.** A recorded medium on which a program is recorded, said program - when acquiring an enlarged image of Ln picture elements x Lm picture elements by enlarging a color image of n picture elements x m picture elements - regulating said original image to Ln/2 picture elements x Lm/2 picture elements, and applying an enlargement method based on Wavelet transform to the regulated image, thereby generating an enlarged image.

**58.** A recorded medium on which a program is recorded, said program - when acquiring an enlarged image by regulating an original image - setting the original image as enlargement object image, and generating an enlarged image having four times as many picture elements by applying an enlargement method based on Wavelet transform to said enlargement object image, setting the enlarged image as enlargement object image and returning the process to Enlarging Object Images means and at the same time visually presenting the enlarged image, thereby enlarging or reducing said enlarged image.

FIG. 1

IMAGE INPUT MEANS 10

OI ORTHOGONAL TRANSFORMING MEANS 11

LFC EXTRACTING MEANS 100

RI GENERATING MEANS 101

RI DISPLAY MEANS 102

HFC ENCODING MEANS 13

CODES SYNTHESIZING MEANS 14

STORAGE MEDIUM 15

LFC DECODING MEANS 16

HFC DECODING MEANS 17

OI OUTPUT MEANS 18

FIG. 2

(a)ORIGINAL IMAGE

ORTHOGONAL TRANSFORM

(b)FREQUENCY COMPONENT OF ORIGINAL IMAGE

EXTRACT

(c) FREQUENCY COMPONENT OF REDUCED IMAGE

INVERSE ORTHOGONAL TRANSFORM

(d)REDUCED IMAGE

(e)HIGH FREQUENCY COMPONENTS OF ORIGINAL IMAGE

DIVISION OF (F)(C)

FIG. 3

EP 1 164 781 A1

FIG. 4

(a)

| D1 | D2 |
|----|----|
| D3 | Dx |

(b)ENCODING

SELECT PREDICTION FORMULA FROM (B) → $Ex = Dx - dDx$ → ENCODE EXAMPLE WITH ENTROPY

(c)DECODING

DECODE EXAMPLE WITH ENTROPY → $Dx = dDx + Ex$

43

FIG. 5

- 10 IMAGE INPUT MEANS
- 11 OI ORTHOGONAL TRANSFORMING MEANS
- 100 LFC EXTRACTING MEANS
- 101 RI GENERATING MEANS
- 102 RI DISPLAY MEANS
- 13 HFC ENCODING MEANS
- 14 CODES SYNTHESIZING MEANS
- 15 STORAGE MEDIUM
- 16 LFC DECODING MEANS
- 17 HFC DECODING MEANS
- 500 SHC ESTIMATING MEANS
- 501 EI OUTPUT MEANS

44

FIG. 6

N

(a) INPUTTED
ORIGINAL IMAGE

ORTHOGONAL
TRANSFORM

N

(b)FREQUENCY COMPONENT OF
DECODED ORIGINAL IMAGE

s×N

(d)ENLARGED IMAGE

INVERSE
ORTHOGONAL
TRANSFORM

s×N

s×N

H1

H2  H3

(c)ESTIMATED FREQUENCY
COMPONENT OF ENLARGED IMAGE

FIG. 7

```
┌─────────────┐                    ┌─────────────┐  808        ┌─────────────┐  809
│ IMAGE INPUT │  10                │ BI GENERATING│            │  BI DISPLAY │
│   MEANS     │                    │   MEANS     │ ─────────→ │   MEANS     │
└─────────────┘                    └─────────────┘            └─────────────┘
      │                                  ↑
      ↓                                  │  807
┌─────────────┐                    ┌─────────────┐            ┌──────────────────┐  802   ┌──────────────┐  803
│OI ORTHOGONAL│                    │     BC      │            │  MULTIPLE IMAGE  │        │     MC       │
│TRANSFORMING │ ──────────────────→│ EXTRACTING  │ ─────────→ │ ENCODING MEANS   │ ─────→ │ SYNTHESIZING │
│   MEANS     │          11        │   MEANS     │            │                  │        │   MEANS      │
└─────────────┘                    └─────────────┘            └──────────────────┘        └──────────────┘
      │                                  │
      ↓                                  └──────────────────────────────┐
┌─────────────┐                                                         ↓
│     EF      │                                              ┌─────────────────┐
│ ESTIMATING  │                                              │                 │
│   MEANS     │                                              │ STORAGE  │ 15   │
└─────────────┘                                              │ MEDIUM   │      │
       800                                                   └─────────────────┘
                                                          ┌────────┘    │
                                                          ↓             ↓
                                              ┌─────────────┐  804  ┌─────────────┐  805   ┌─────────────┐  806
                                              │     BC      │       │    OBF      │        │ OBI OUTPUT  │
                                              │  DECODING   │ ────→ │  DECODING   │ ─────→ │   MEANS     │
                                              │   MEANS     │       │   MEANS     │        │             │
                                              └─────────────┘       └─────────────┘        └─────────────┘
```

FIG. 8

(a)ORIGINAL IMAGE

(b)ORIGINAL IMAGE X 4

(c)ORIGINAL IMAGE X 9

(d)BASIC COMPONENT

(e-1)

(e-2)

FIG. 9

```
IMAGE INPUT          OI ORTHOGONAL             EF
MEANS         →      TRANSFORMING      →    ESTIMATING
                        MEANS                 MEANS
  10                    11                     800
```

```
BI DISPLAY           BI GENERATING            BC
MEANS         ←        MEANS         ←     EXTRACTING
                                             MEANS
  809                  808                    807
```

```
                     MULTIPLE IMAGE           MC
                      ENCODING       →    SYNTHESIZING
                        MEANS                 MEANS
  1000                 802                    803

     BC
 COMPRESSION
   MEANS
```

STORAGE
MEDIUM
15

```
    BC                 OBF                 OBI OUTPUT
 DECODING      →     DECODING      →         MEANS
   MEANS              MEANS
   804                805                     806
```

EP 1 164 781 A1

FIG. 10

```
┌──────────────┐        ┌──────────────────┐
│              │   10   │  INTER-PICTURE    │  1100
│ IMAGE INPUT  │───────▶│    ELEMENT        │
│   MEANS      │        │ INTERPOLATING MEANS│
└──────────────┘        └──────────────────┘
                                 │
                                 ▼
                        ┌──────────────────┐
                   ┌───▶│ CONVOLUTION MEANS │  1101
                   │    └──────────────────┘
                   │             │
                   │             ▼
                   │    ┌──────────────────┐
                   │    │   CONVERGENCE     │  1102
                   │    │  JUDGING MEANS    │
                   │    └──────────────────┘
                   │             │
                   └─────────────┤
                                 ▼
                        ┌──────────────────┐
                        │ ESTIMATED ENLARGED│  1312
                        │ IMAGE OUTPUTTING  │
                        │     MEANS         │
                        └──────────────────┘
```

# FIG. 11

(a)ORIGINAL IMAGE

(b)EDGE IMAGE OF ORIGINAL IMAGE

(c)INTERPOLATED IMAGE

(d)ESTIMATED ENLARGED IMAGE

FIG. 12

IMAGE INPUT MEANS — 10

OI ORTHOGONAL TRANSFORMING MEANS — 11

EF ESTIMATING MEANS — 120A

AC DERIVING MEANS — 1200

NON-LINEAR ESTIMATING MEANS — 1201

INVERSE ORTHOGONAL TRANSFORM MEANS — 1213

ESEI OUTPUT MEANS — 1214

(a)

n

(a)ORIGINAL
IMAGE

ORTHOGONAL
TRANSFORM

n

n

(b)

RBFN
(RADIAL BASE
FUNCTION NETWORK)

(c)

m=s×n

m=s×n

FREQUENCY AREA

LOW   u   HIGH

LOW

V

HIGH

(c) ESTIMATED FREQUENCY
COMPONENT OF ENLARGED IMAGE

INVERSE
ORTHOGONAL
TRANSFORM

(d)

s×n

s×n

(d)ENLARGED
IMAGE

FIG. 13

EP 1 164 781 A1

52

FIG. 14

EP 1 164 781 A1

P_i(a_i, b_i )

FREQUENCY COMPONENT
OF ORIGINAL IMAGE

FREQUENCY COMPONENT OF
ENLARGED ORIGINAL IMAGE

P(u,v)

$\| VP - VP\_j \|$

P'_i(u_i, v_i)

EP 1 164 781 A1

FIG. 15

FIG.16

EP 1 164 781 A1

FIG. 17

n

(a)ORIGINAL
IMAGE

ORTHOGONAL
TRANSFORM

n

(b)FREQUENCY
COMPONENT OF
ORIGINAL IMAGE

EXTRACT EDGE
BY LAPLACIAN
FILTER

n

(c)EDGE IMAGE OF
ORIGINAL IMAGE

LINEAR
APPROXIMATION

(e)FREQUENCY COMPONENT
OF ENLARGED EDGE IMAGE

ORTHOGONAL
TRANSFORM

s×n

s×n

(d)ENLARGED IMAGE
OF EDGE

REPLACE THE LOW
FREQUENCY AREA OF
(F)(E) WITH (B)

INVERSE
ORTHOGONAL
TRANSFORM

s×n

s×n

(g)ESTIMATED
ENLARGED IMAGE

FIG. 18

| -1 | -1 | -1 |
|----|----|----|
| -1 | 8  | -1 |
| -1 | -1 | -1 |

(a)

| 0  | -1 | 0  |
|----|----|----|
| -1 | 4  | -1 |
| 0  | -1 | 0  |

(b)

FIG. 19

IMAGE INPUT MEANS — 10

EF ESTIMATING MEANS — 120A

EED ESTIMATING MEANS 120B

EDGE GENERATING MEANS — 1600

EDI ORTHOGONAL TRANSFORMING MEANS — 1900

EDF ESTIMATING MEANS — 1901

LFC SUBSTITUTING MEANS — 1603

OI ORTHOGONAL TRANSFORMING MEANS — 11

INVERSE ORTHOGONAL TRANSFORM MEANS — 1213

ESEI OUTPUT MEANS — 1214

(a)ORIGINAL IMAGE

ORTHOGONAL TRANSFORM

(b)FREQUENCY COMPONENT OF ORIGINAL IMAGE

(c)EDGE IMAGE OF ORIGINAL IMAGE

ORTHOGONAL TRANSFORM

(d)FREQUENCY COMPONENT OF EDGE IMAGE

RBFN (RADIAL BASE FUNCTION NETWORK)

(e)FREQUENCY COMPONENT OF ENLARGED EDGE IMAGE

REPLACE THE LOW FREQUENCY AREA OF (F)(E) WITH (B)

INVERSE ORTHOGONAL TRANSFORM

$m=s \times n$

$s \times n$

(g)ESTIMATED ENLARGED IMAGE

FIG. 20

EP 1 164 781 A1

FIG. 21

(a)

DCT COMPONENT F (U, V_0) IN U DIRECTION

DCT COMPONENT F (U, V_0)

H

SAMPLED DCT COMPONENT

G

0    n-3   n-2   n-1    U DIRECTION

(b)

0    n-3    n-2    n-1

DCT COMPONEN T F (U, V_0)

H

G

COMPONENT POSITION AFTER ENLARGEMENT (U DIRECTION)

0    n-1+t-4    n-1+t-2    n-1+t    U DIRECTION
         n-1+t-3    n-1+t-1

FIG. 22

FIG. 23

FIG. 24

BLOCK
A0'

BLOCK
A1'

N

n+u

n+u

n+u

n+u

n

N

N

(n+u)×s

(n+u)×s

A0 FREQUENCY
AREA

BLOCK
B0'

m

m

EP 1 164 781 A1

63

FIG. 25

FIG. 26

| A3 | ⋮ | | |
|----|----|----|----|
| A2 | ⋮ | | |
| A1 | ⋮ | Ai | |
| A0 | ⋮ | | |

(a)

IMAGE DATA D(x,y)

y = y_0

G

Y DIRECTION

H

X DIRECTION

$\Phi(x,y0) = D(x,y0) - \rho(x,y0)$

IMAGE DATA D(x,y_0)

$\rho(x,y\_0)$

H

G

0          n-1          X DIRECTION

(b)

0

0          n-1          X DIRECTION

(c)

$\Phi(x,y0)/\text{Max } \phi$

n-1

0

0          X DIRECTION

-1

(d)

FIG. 27

EP 1 164 781 A1

FIG. 28

IMAGE INPUT MEANS — 10

SC SELECTING MEANS — 2800

TR DERIVING MEANS — 2801

SI ORTHOGONAL TRANSFORMING MEANS — 2802

SEIF ESTIMATING MEANS

— 2203

SI ORTHOGONAL TRANSFORMING MEANS — 2804

SHC ENLARGING MEANS — 2805

ECI RECOMPOSING MEANS — 2806

ESEI OUTPUT MEANS — 1214

FIG. 29

IMAGE ENLARGING MEANS — 290A

IMAGE INPUT MEANS — 10

II REGULATING MEANS — 12

VDE GENERATING MEANS — 2900

HED GENERATING MEANS — 2901

OED GENERATING MEANS — 2902

EDGE GENERATING MEANS 290B

LEVELING UP MEANS — 2903

EI REGULATING MEANS — 2913

EI OUTPUT MEANS — 2914

68

EP 1 164 781 A1

FIG. 30

FIG. 31

| | HL2 | | |
|---|---|---|---|
| LL3 HL3 | | HL2 | |
| LH3 HH3 | | | |
| LH2 | | HH2 | |

AGAINST LL1

HORIZONTAL
DIRECTION x

| LL1 | HL1 |
|---|---|
| LH1 | HH1 |

VERTICAL
DIRECTION y

FIG. 32

(a)ORIGINAL IMAGE

m = dLn/2

m

(b)VERTICAL EDGE PORTION

(c)HORIZONTAL EDGE PORTION

(d)OBLIQUE EDGE PORTION

(e)WAVELET TRANSFORM IMAGE

LL0    HL0

LH0    HH0

2m

2m

71

FIG. 33

| -1 | 0 | 1 |
|----|---|---|
| -2 | 0 | 2 |
| -1 | 0 | 1 |

(a)EXAMPLE OF FILTER FOR
DETECTION OF EDGE IN
HORIZONTAL DIRECTION

| -1 | -2 | -1 |
|----|----|----|
| 0 | 0 | 0 |
| 1 | 2 | 1 |

(b)EXAMPLE OF FILTER FOR
DETECTION OF EDGE IN
VERTICAL DIRECTION

| -2 | -1 | 0 |
|----|----|---|
| -1 | 0 | 1 |
| 0 | 1 | 2 |

(c)EXAMPLE OF FILTER FOR
DETECTION OF EDGE IN
OBLIQUE DIRECTION

FIG. 34

FIG. 35

ddLn

ddLn

**(a)ORIGINAL IMAGE**

WAVELET TRANSFORM

ddLn

ddLn

LL2 | HL2
LH2 | HH2

**(b)WAVELET TRANSFORM IMAGE**

LL2 — VERTICAL DIRECTION EDGE → HLe

OBLIQUE DIRECTION EDGE

HORIZONTAL DIRECTION EDGE

LHe

HHe

LL2 — VERTICAL DIRECTION EDGE → dHL = HLe−HL2

OBLIQUE DIRECTION EDGE

HORIZONTAL DIRECTION EDGE

dHH = HHe−HH2

dLH = LHe−LH2

**(c)DIFFERENCE BETWEEN RESPECTIVE SUB-BAND COMPONENTS AND RESPECTIVE EDGE IMAGES**

HORIZONTAL EDGE IMAGE

ORIGINAL IMAGE

VERTICAL EDGE IMAGE

OBLIQUE EDGE IMAGE

2 × ddLn

2 × ddLn

**(d)ESTIMATION OF WAVELET TRANSFORM IMAGE OF ENLARGED IMAGE FOUR TIMES AS LARGE AS ORIGINAL IMAGE**

CORRECTION ESTIMATING MEANS 70B     COMPONENT ESTIMATING MEANS 70C

FIG. 36

EP 1 164 781 A1

FIG. 37

IMAGE INPUT MEANS — 10

EP INITIALIZING MEANS — 3700

OBI ENLARGING MEANS — 3701

EI PRESENTING MEANS — 3702

MP ENDING JUDGE MEANS — 3703

IMAGE FINE-ADJUSTMENT MEANS — 3704

ESEI OUTPUT MEANS — 1214

FIG. 38

```
        10                        2800
 ┌──────────────┐        ┌──────────────┐
 │ IMAGE INPUT  │───────▶│     SC       │
 │    MEANS     │        │  SELECTING   │
 │              │        │    MEANS     │
 └──────┬───────┘        └──────┬───────┘
        │                       │
        ●───────────────────────┘
        │
        ▼            3803
 ┌──────────────┐  ╭──────────────────────╮       3804              3805
 │  2801        │  │                      │  ┌──────────────┐  ┌──────────────┐
 │ TR DERIVING  │  │  SI ENLARGING MEANS  │─▶│     SEI      │─▶│     SHC      │
 │    MEANS     │  │                      │  │  REGULATING  │  │  ENLARGING   │
 │              │  ╰──────────────────────╯  │    MEANS     │  │    MEANS     │
 └──────┬───────┘         ▲                  └──────────────┘  └──────┬───────┘
        │                 │                                           │
        ▼                 │                                           ▼         3806
 ┌──────────────┐         │                                   ┌──────────────┐
 │     SCI      │         │                                   │     ECI      │
 │  REGULATING  │─────────┘                                   │ RECOMPOSING  │
 │    MEANS     │                                             │    MEANS     │
 └──────────────┘                                             └──────┬───────┘
        3802                                                         │
                                                                     ▼      1214
                                                             ┌──────────────┐
                                                             │ ESEI OUTPUT  │
                                                             │    MEANS     │
                                                             └──────────────┘
```

FIG. 39

| IMAGE INPUT MEANS | → | OI ORTHOGONAL TRANSFORMING MEANS | → | "0" COMPONENT EMBEDDING MEANS | → | INVERSE ORTHOGONAL TRANSFORM MEANS | → | ESEI OUTPUT MEANS |

10

11

4001

4002

4000

FIG. 40

FIG. 41

(a)ORIGINAL IMAGE

ORTHOGONAL TRANSFORM

(b)FREQUENCY COMPONENT OF ORIGINAL IMAGE

FREQUENCY AREA

LOW          HIGH

LOW

HIGH

(c)ESTIMATED FREQUENCY COMPONENT OF ENLARGED IMAGE

(d)ENLARGED IMAGE

INVERSE ORTHOGONAL TRANSFORM

n

n

s×n

s×n

s×n

s×n

0

0    0

FIG. 42

```
┌──────────────┐      ┌──────────────┐      ┌──────────────┐
│ IMAGE INPUT  │      │     EDGE     │      │     EDGE     │
│    MEANS     │─────▶│  EXTRACTING  │─────▶│ INTERPOLATION│
│              │      │    MEANS     │      │    MEANS     │
└──────────────┘      └──────────────┘      └──────────────┘
       │      10              4200                 1201
       │
       ▼
┌──────────────┐  1100
│ INTER-PICTURE│
│   ELEMENT    │
│ INTERPOLATING│────────────────────●
│    MEANS     │                    │
└──────────────┘                    ▼
                        ┌──────────────────┐  4202
                        │  INTERPOLATING   │
                        │    POSITION      │
                        │ ADJUSTING MEANS  │
                        └──────────────────┘
                                │
                                ▼
                        ┌──────────────┐  501
                        │  EI OUTPUT   │
                        │    MEANS     │
                        └──────────────┘
```

81

FIG. 43

<table>
<tr><td colspan="2" align="center"><strong>INTERNATIONAL SEARCH REPORT</strong></td><td colspan="2">International application No.<br><br>PCT/JP00/01586</td></tr>
</table>

| A. | CLASSIFICATION OF SUBJECT MATTER |
|---|---|

    Int.Cl⁷   H04N1/393, H04N1/41, G06T3/40

According to International Patent Classification (IPC) or to both national classification and IPC

| B. | FIELDS SEARCHED |
|---|---|

Minimum documentation searched (classification system followed by classification symbols)

    Int.Cl⁷   H04N1/387-1/393, H04N1/41-1/419, G06T3/40

Documentation searched other than minimum documentation to the extent that such documents are included in the fields searched

    Jitsuyo Shinan Koho         1922-1996    Toroku Jitsuyo Shinan Koho   1994-2000
    Kokai Jitsuyo Shinan Koho   1971-2000    Jitsuyo Shinan Toroku Koho   1996-2000

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP, 10-98611, A (NEC Corporation),<br>14 April, 1998 (14.04.98),<br>Full text; Figs. 1 to 8   (Family: none) | 23,29,30,32,37<br>,38,40,44,45 |
| X | JP, 7-129759, A (Canon Inc.),<br>19 May, 1995 (19.05.95),<br>Full text; Figs. 1 to 24<br>& US, 5911007, A | 23,29,30,32,37<br>,38,40,44,45 |
| X | JP, 8-315129, A (Sharp Corporation),<br>29 November, 1996 (29.11.96),<br>Full text; Figs. 1 to 8   (Family: none) | 23,29,30,32,37<br>,38,40,44,45 |
| X | JP, 4-229382, A (Ricoh Company, Ltd.),<br>18 August, 1992 (18.08.92),<br>Full text; Figs. 1 to 11   (Family: none) | 23,29,30,32,37<br>,38,40,44,45 |
| X | JP, 8-294001, A (SEIKO EPSON CORPORATION),<br>05 November, 1996 (05.11.96),<br>Full text; Figs. 1 to 19   (Family: none) | 23,32,40 |
| X | JP, 4-333989, A (Mitsubishi Electric Corporation), | 23,32,40 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
|     13 June, 2000 (13.06.00) |     27 June, 2000 (27.06.00) |

| Name and mailing address of the ISA/<br>    Japanese Patent Office | Authorized officer |
|---|---|
| Facsimile No. | Telephone No. |

Form PCT/ISA/210 (second sheet) (July 1992)

## INTERNATIONAL SEARCH REPORT

International application No.

PCT/JP00/01586

C (Continuation).   DOCUMENTS CONSIDERED TO BE RELEVANT

| Category* | Citation of document, with indication, where appropriate, of the relevant passages | Relevant to claim No. |
|---|---|---|
| | 20 November, 1992 (20.11.92),<br>Full text; Figs. 1 to 10   (Family: none) | |
| X | JP, 3-204268, A (Dainippon Printing Co., Ltd.),<br>05 September, 1991 (05.09.91),<br>Full text; Figs. 1 to 20   (Family: none) | 23,32,40 |
| X | JP, 7-152907, A (NEC Corporation),<br>16 June, 1995 (16.06.95),<br>Full text; Figs. 1 to 13   (Family: none) | 46,47,55-58 |
| X | JP, 10-31737, A (Fuji Photo Film Co., Ltd.),<br>03 February, 1998 (03.02.98),<br>Full text; Figs. 1 to 4   (Family: none) | 46,47,55-58 |
| P,X | JP, 11-284840, A (Ricoh Company, Ltd.),<br>15 October, 1999 (15.10.99),<br>Full text; Figs. 1 to 12   (Family: none) | 46,47,55-58 |
| A | JP, 7-203439, A (NEC Corporation),<br>04 August, 1995 (04.08.95),<br>Full text; Figs. 1 to 3   (Family: none) | 1-58 |
| A | JP, 6-98175, A (Sanyo Electric Co., Ltd.),<br>08 April, 1994 (08.04.94),<br>Full text; Figs. 1 to 3 | 1-58 |

Form PCT/ISA/210 (continuation of second sheet) (July 1992)